# EUROPEAN PATENT APPLICATION

(11) **EP 4 803 490 A1**
(43) Date of publication of application: **09.09.2026**
(21) Application number: 24885562.9
(22) Date of filing: 23.10.2024
(51) Int. Cl.: C02F 1/469, B01J 39/07, B01J 39/18, B01J 41/07, B01J 41/12, B01J 47/10, B01J 47/022, B01J 47/026, B01J 49/08, B01J 49/30, B01J 49/75, C02F 1/42, C02F 1/461

(54) **WATER SOFTENING DEVICE**

(30) Priority: 30.10.2023 JP 2023185281; 28.02.2024 JP 2024028094; 28.03.2024 JP 2024052801; 28.03.2024 JP 2024052802
(71) Applicant: Panasonic Intellectual Property Management Co., Ltd., Kadoma-shi, Osaka 571-0057 (JP)
(72) Inventor: MARUO, Yuko, Kadoma-shi, Osaka 571-0057 (JP); SHIOI, Masahiko, Kadoma-shi, Osaka 571-0057 (JP); OHASHI, Takamasa, Kadoma-shi, Osaka 571-0057 (JP); TSUCHIDA, Naoki, Kadoma-shi, Osaka 571-0057 (JP)
(74) Representative: Grünecker Patent- und Rechtsanwälte PartG mbB
(86) International application number: PCT/JP2024/037761
(87) International publication number: WO 2025/094789

(57) **Abstract**

Water softening device (100) includes: water softening chamber (201) that contains weakly acidic cation exchange resin (101) and generates soft water from raw water containing hardness components; neutralization chamber (202) that contains weakly basic anion exchange resin (102) and neutralizes the soft water; a diaphragm that serves as a partition between water softening chamber (201) and neutralization chamber (202) while allowing the soft water to flow through the diaphragm; first electrode (103) that acts as an anode during regeneration of weakly acidic cation exchange resin (101); and second electrode (104) that acts as a cathode during regeneration of weakly basic anion exchange resin (102). First electrode (103) is surrounded by weakly acidic cation exchange resin (101) in water softening chamber (201), and second electrode (104) is surrounded by weakly basic anion exchange resin (102) in neutralization chamber (202).

## Description

### TECHNICAL FIELD

The present disclosure relates to a water softening device using an ion exchange resin.

### BACKGROUND ART

At present, water softeners are widely used mainly in hard-water zones for the purpose of removing hardness components in tap water. For such a water softener, it is necessary to periodically replenish salt.

In addition, in order to solve a problem of workload associated to salt replenishment and a performance problem that soft water cannot be obtained when salt replenishment is not properly performed, a water softening technology that allows maintenance without using salt has been developed (see PTL 1).

In a water softening system disclosed in PTL 1, as a basic configuration, two types of resins including a weakly acidic cation exchange resin and a weakly basic anion exchange resin are mixed, and neutral soft water can be obtained using a bipolar membrane (a membrane obtained by bonding a cation exchange resin membrane and an anion exchange resin membrane, which is hereinafter referred to as a BP membrane) on an anode side of a pair of electrodes and a cation exchange resin membrane on a cathode side of the pair of electrodes.

In such a conventional technology, when a certain amount of hardness ions are adsorbed to the resin, the resin needs to be regenerated. For example, in a regeneration step in PTL 1, a voltage is applied to the BP membrane and a resin chamber present between the electrodes by using the electrodes. An interface between a cation exchange resin and an anion exchange resin is present in the BP membrane or the ion exchange resin chamber. When a voltage is applied to the interface, water molecules dissociate to produce H⁺ and OH⁻. The weakly acidic cation exchange resin can be regenerated by produced H⁺, and the weakly basic anion exchange resin can be regenerated by produced OH⁻.

### Citation List

### Patent Literature

PTL 1: Japanese Patent No. 6444939

### SUMMARY OF THE INVENTION

However, in the technology described in PTL 1, the hardness ions desorbed from the ion exchange resin are re-adsorbed to the ion exchange resin, as a result of which a reaction at the time of resin regeneration is easily inhibited. Therefore, it is necessary to perform regeneration while maintaining water flow in order to discharge the desorbed hardness ions. Such a water flow operation has a problem that a drainage amount at the time of resin regeneration increases.

The present disclosure has been made in view of such a problem of the related art. The present disclosure provides a water softening device capable of suppressing drainage during regeneration and efficiently regenerating a resin.

A water softening device according to the present disclosure includes: a water softening chamber that contains a weakly acidic cation exchange resin and generates soft water from raw water containing hardness components; a neutralization chamber that contains a weakly basic anion exchange resin and neutralizes the soft water; a diaphragm that serves as a partition between the water softening chamber and the neutralization chamber while allowing the soft water to flow through the diaphragm; a first electrode that acts as an anode during regeneration of the weakly acidic cation exchange resin; and a second electrode that acts as a cathode during regeneration of the weakly basic anion exchange resin. The first electrode is surrounded by the weakly acidic cation exchange resin in the water softening chamber, and the second electrode is surrounded by the weakly basic anion exchange resin in the neutralization chamber.

According to the present disclosure, it is possible to provide the water softening device capable of suppressing drainage during regeneration and efficiently regenerating a resin.

### BRIEF DESCRIPTION OF THE DRAWINGS

Fig. 1 is a perspective view of a water softening device according to a first exemplary embodiment of the present disclosure.
Fig. 2 is a cross-sectional view of the water softening device.
Fig. 3 is a diagram including equations representing a principle of the water softening device.
Fig. 4 is a diagram illustrating a hardness of soft water in a water softening process before and after regeneration in Example 1.
Fig. 5 is a diagram illustrating a temporal change in pH in a water softening chamber and a neutralization chamber during regeneration in Example 1.
Fig. 6 is a diagram illustrating a temporal change in the number of moles of each ion during regeneration in Example 1.
Fig. 7 is a schematic diagram of a water softening device in a second exemplary embodiment of the present disclosure.
Fig. 8 is a perspective view of the water softening device in the second exemplary embodiment.
Fig. 9 is a cross-sectional view of the water softening device in the second exemplary embodiment.
Fig. 10 is a diagram including equations representing a principle of the water softening device in the second exemplary embodiment.
Fig. 11 is a diagram illustrating a temporal change in hydrogen ion consumption ratio of a weakly acidic cation exchange resin during a regeneration process.
Fig. 12 is a schematic diagram of a water softening device in a fourth exemplary embodiment.
Fig. 13 is a schematic diagram of a water softening device in a fifth exemplary embodiment.
Fig. 14 is a schematic diagram of a water softening device in a sixth exemplary embodiment.
Fig. 15 is a schematic diagram of a water softening device in a seventh exemplary embodiment.
Fig. 16 is a schematic diagram of a water softening device in an eighth exemplary embodiment of the present disclosure.
Fig. 17 is a perspective view of the water softening device in the eighth exemplary embodiment.
Fig. 18 is a cross-sectional view of the water softening device in the eighth exemplary embodiment.
Fig. 19 is a diagram including equations representing a principle of the water softening device in the eighth exemplary embodiment.
Fig. 20 is a diagram illustrating a temporal change in hydrogen ion consumption ratio of a weakly acidic cation exchange resin during a regeneration process.
Fig. 21 is a perspective view of an example of the water softening device in the eighth exemplary embodiment.
Fig. 22 is a diagram illustrating an example of a relationship between a drainage amount and a hardness after 1 hour from the start of regeneration in the eighth exemplary embodiment.
Fig. 23 is a schematic diagram of a water softening device in a ninth exemplary embodiment of the present disclosure.
Fig. 24 is a perspective view of the water softening device in the ninth exemplary embodiment.
Fig. 25 is a cross-sectional view of the water softening device in the ninth exemplary embodiment.
Fig. 26 is a cross-sectional view illustrating a cross section of the water softening device in the ninth exemplary embodiment, taken along line A-A' in Fig. 25.
Fig. 27 is a diagram including equations representing a principle of the water softening device in the ninth exemplary embodiment.
Fig. 28 is a diagram illustrating a temporal change in hydrogen ion consumption ratio of a weakly acidic cation exchange resin during a regeneration process.

### DESCRIPTION OF EMBODIMENT

Hereinafter, exemplary embodiments of the present disclosure will be described with reference to the drawings. Note that the following exemplary embodiments are examples embodying the present disclosure, and do not limit the technical scope of the present disclosure. In addition, the drawings described in the respective exemplary embodiments are schematic representations, and the ratios of the sizes and the thicknesses of the components in each of the drawings do not necessarily reflect the actual dimensional ratio.

### (First exemplary embodiment)

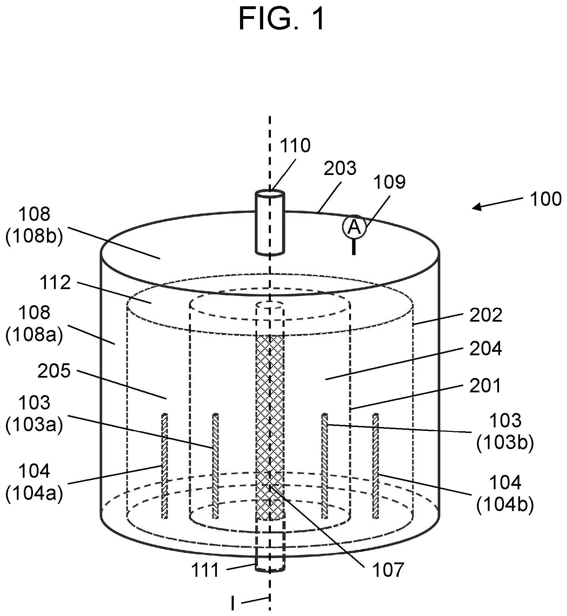

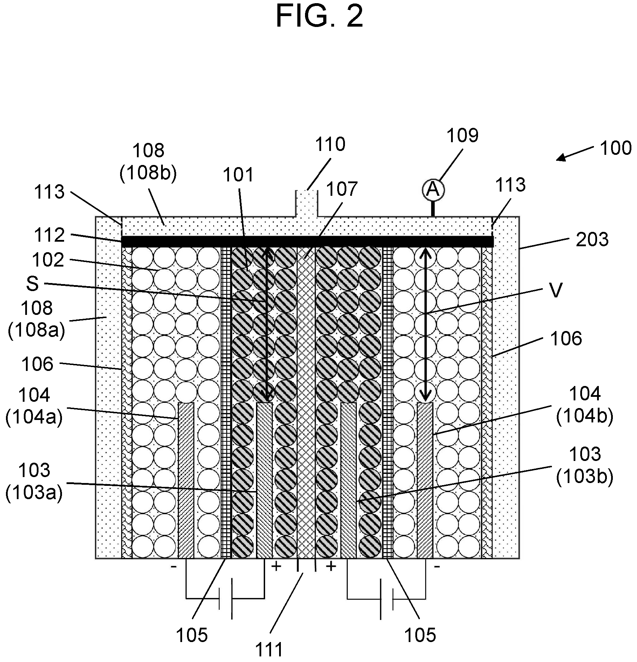

Water softening device 100 according to a first exemplary embodiment of the present disclosure will be described with reference to Figs. 1 and 2.

Fig. 1 is a perspective view illustrating a configuration of water softening device 100 according to the first exemplary embodiment of the present disclosure. Fig. 2 is a cross-sectional view illustrating the configuration of water softening device 100 according to the first exemplary embodiment of the present disclosure. Note that Figs. 1 and 2 conceptually illustrate each element of water softening device 100. In Fig. 1, weakly acidic cation exchange resin 101 and weakly basic anion exchange resin 102 are omitted.

Water softening device 100 is a device that generates neutral soft water from raw water containing hardness components supplied from the outside. The raw water is water (water to be treated) introduced into water softening device 100 from water introduction part 107 described below, and is, for example, well water or tap water. The raw water contains the hardness components (calcium or magnesium ions).

By performing a water softening process of softening the raw water using water softening device 100, the neutral soft water having a reduced hardness can be obtained from the raw water having a high hardness, and the soft water can be used even in a zone where the hardness of the raw water is high.

In addition, water softening device 100 performs a regeneration process of regenerating weakly acidic cation exchange resin 101 and weakly basic anion exchange resin 102 described below after performing the water softening process for a certain period of time. Details of the water softening process and the regeneration process will be described below.

Specifically, as illustrated in Fig. 1, water softening device 100 includes casing 203, water introduction part inlet 111, water introduction part 107, water softening chamber 201, neutralization chamber 202, water supply part 108, and water supply part outlet 110.

Casing 203 is a hollow cylindrical member, and water introduction part 107, water softening chamber 201, neutralization chamber 202, and water supply part 108 are provided in a hollow space of casing 203 in order from a side closer to central axis I connecting an upper surface and a lower surface of casing 203 toward an outer peripheral direction.

Water introduction part inlet 111 is provided at a central portion of the lower surface of casing 203, that is, on central axis I. Water supply part outlet 110 is provided at a central portion of the upper surface of casing 203, that is, on central axis I. Central axis I of casing 203 coincides with respective central axes of water introduction part 107, water softening chamber 201, neutralization chamber 202, and water supply part 108.

In casing 203, the raw water is softened and an ion exchange resin is regenerated.

Water introduction part inlet 111 is provided on a bottom surface of casing 203 and supplies the raw water to water introduction part 107. A central axis of water introduction part inlet 111 coincides with central axis I of casing 203.

Water introduction part 107 is a cylindrical member and is connected to water introduction part inlet 111 at a lower end. Water introduction part 107 introduces the raw water into water softening device 100 and supplies the raw water to water softening chamber 201. A tube such as a pipe having a space therein can be used as water introduction part 107.

Water introduction part 107 is configured to make the raw water introduced into water softening device 100 uniformly flow into water softening chamber 201 and neutralization chamber 202. Specifically, water introduction part 107 is provided at a central portion in casing 203, and an outer periphery of water introduction part 107 is in contact with water softening chamber 201. In other words, water introduction part 107 is positioned on central axis I.

Water introduction part 107 is provided extending from lower portions to upper portions of water softening chamber 201 and neutralization chamber 202, more strictly, from lower ends to upper ends. A length of a portion of water introduction part 107 where the raw water can be supplied to water softening chamber 201 and neutralization chamber 202 is equal to heights of water softening chamber 201 and neutralization chamber 202.

Water introduction part 107 has a plurality of holes on a side surface and delivers the raw water through the holes toward the outer peripheral direction from central axis I of casing 203, that is, to water softening chamber 201. Furthermore, the plurality of holes are preferably provided uniformly in a circumferential direction of the side surface of water introduction part 107. With such a configuration, the raw water introduced into the device can uniformly flow into water softening chamber 201 and neutralization chamber 202. Therefore, the raw water is uniformly supplied to particles of weakly acidic cation exchange resin 101 filled in water softening chamber 201 and particles of weakly basic anion exchange resin 102 filled in neutralization chamber 202. Therefore, weakly acidic cation exchange resin 101 and weakly basic anion exchange resin 102 can be efficiently used as a whole.

A diameter of each of the plurality of holes of water introduction part 107 on the side surface is smaller than a particle diameter of each of the particles of the weakly acidic cation exchange resin. A lower limit value of the particle diameter of the weakly acidic cation exchange resin is around 0.3 mm, and thus, the diameter of the hole provided on the surface of water introduction part 107 is smaller than the lower limit value. As a result, it is possible to prevent outflow of the ion exchange resin from water softening chamber 201 without hindering permeation of water.

Water softening chamber 201 is a space having a cylindrical shape, provided on an outer peripheral side of water introduction part 107 with respect to central axis I of casing 203 in casing 203, and containing weakly acidic cation exchange resin 101. The central axis of water softening chamber 201 coincides with central axis I of casing 203. Water softening chamber 201 is in contact with water introduction part 107 on an inner surface side of the cylindrical shape, and is in contact with inner peripheral diaphragm 105 on an outer surface side of the cylindrical shape. That is, water softening chamber 201 surrounds water introduction part 107 and is surrounded by inner peripheral diaphragm 105.

An upper surface of water softening chamber 201 is in contact with lid 112 to prevent outflow of the water. Such a configuration prevents the outflow of the water from the upper surface of water softening chamber 201 and prevents the water from bypassing weakly acidic cation exchange resin 101 and weakly basic anion exchange resin 102 in the water softening process. Details of lid 112 are described below.

Water softening chamber 201 is filled with weakly acidic cation exchange resin 101. Weakly acidic cation exchange resin 101 generates the soft water from the raw water containing the hardness components. Specifically, in water softening chamber 201, the hardness components contained in the raw water are adsorbed to weakly acidic cation exchange resin 101, and the soft water containing released protons instead of the hardness components is generated.

Weakly acidic cation exchange resin 101 is an ion exchange resin having a carboxyl group, and for example, one having a methacrylic-acid-based backbone or one having an acrylic-acid-based backbone can be used as weakly acidic cation exchange resin 101. In the present exemplary embodiment, a resin having an acrylic-acid-based backbone is used as weakly acidic cation exchange resin 101.

A volume of weakly acidic cation exchange resin 101 filled in water softening chamber 201 is smaller than a volume of weakly basic anion exchange resin 102 filled in neutralization chamber 202 described below. The reason is that water softening chamber 201 is positioned on an inner peripheral side of neutralization chamber 202, and a volume of water softening chamber 201 is smaller than a volume of neutralization chamber 202.

First electrode 103 is provided in water softening chamber 201.

First electrode 103 is not energized in the water softening process and acts as an anode in the regeneration process for weakly acidic cation exchange resin 101. First electrode 103 is surrounded by weakly acidic cation exchange resin 101 in water softening chamber 201. Here, the expression "being surrounded" indicates a state in which a surface of first electrode 103 is in contact with a surface of weakly acidic cation exchange resin 101 from an upper end to a lower end over an entire circumference. However, weakly acidic cation exchange resin 101 usually has a spherical shape, and it is necessary to secure a water flow path for the raw water. Therefore, a state in which weakly acidic cation exchange resin 101 is not in contact with the surface of first electrode 103 without any gap, but is disposed over the entire circumference of first electrode 103 while being partially in contact with the surface of first electrode 103 also corresponds to a state in which "first electrode 103 is surrounded by weakly acidic cation exchange resin 101".

The upper end of first electrode 103 is positioned below a water surface in water softening chamber 201 at the start of the regeneration process. Accordingly, first space 204 is formed above the upper end of first electrode 103 in water softening chamber 201.

Weakly acidic cation exchange resin 101 fills the inside of water softening chamber 201. That is, the periphery of first electrode 103 and the first space 204 are filled with weakly acidic cation exchange resin 101.

In order to smoothly regenerate weakly acidic cation exchange resin 101, the water surface at the start of the regeneration process is preferably near the upper surface of water softening chamber 201. In the present exemplary embodiment, the water surface at the start of the regeneration process coincides with the upper surface of water softening chamber 201.

First electrode 103 has distance T shorter than distance S, distance T being a distance from a bottom surface of water softening chamber 201 to the lower end of first electrode 103, the distance S being a distance from the water surface at the start of the regeneration process to the upper end of first electrode 103.

As a result, bubbles generated from first electrode 103 fluidize weakly acidic cation exchange resin 101 during regeneration treatment described below, so that regeneration efficiency can be enhanced. In the present exemplary embodiment, since the lower end of first electrode 103 is in contact with the bottom surface of water softening chamber 201, that is, T = 0, T is not illustrated in Fig. 2.

As a material of first electrode 103, a noble metal or a noble metal alloy can be used. The reason is that first electrode 103 containing a noble metal acts as a catalyst for water electrolysis and remains non-dissolving even under an acidic condition. Examples of the noble metal material include platinum, iridium, and ruthenium.

Examples of a form of the electrode include a noble-metal wire electrode, an electrode in which a noble-metal wire is wound around an outer periphery of a support, and a mesh-type noble-metal electrode. Examples of a form of the electrode further include a form in which a noble metal is applied to a surface of a rod that is made of a metal other than a noble metal, such as titanium (Ti), the rod being used as the support. However, in a case where a dissimilar metal interface exists, deterioration derived from the interface is likely to occur, and thus it is preferable to use a noble metal or a noble metal alloy alone.

Neutralization chamber 202 is a space having a cylindrical shape, provided on an outer peripheral side of water softening chamber 201 with respect to central axis I of casing 203 in casing 203, and containing weakly basic anion exchange resin 102. The central axis of neutralization chamber 202 coincides with central axis I of casing 203. Neutralization chamber 202 is in contact with an outer surface of inner peripheral diaphragm 105 on an inner surface side of the cylindrical shape, and is in contact with an inner surface of outer peripheral diaphragm 106 on an outer surface side of the cylindrical shape. That is, neutralization chamber 202 surrounds inner peripheral diaphragm 105 and is surrounded by outer peripheral diaphragm 106. Neutralization chamber 202 is filled with weakly basic anion exchange resin 102. Details of inner peripheral diaphragm 105 and outer peripheral diaphragm 106 are described below.

Similarly to water softening chamber 201, an upper surface of neutralization chamber 202 is in contact with lid 112 to prevent outflow of the water. Such a configuration prevents the outflow of the water from the upper surface of neutralization chamber 202 and prevents the water from bypassing weakly acidic cation exchange resin 101 and weakly basic anion exchange resin 102 in the water softening process.

As weakly basic anion exchange resin 102, a resin having tertiary amines and quaternary amines as functional groups can be used, and in the present exemplary embodiment, a resin having a higher proportion of tertiary amines than quaternary amines is used.

The volume of weakly basic anion exchange resin 102 filled in neutralization chamber 202 is larger than the volume of weakly acidic cation exchange resin 101 filled in water softening chamber 201. The reason is that neutralization chamber 202 is positioned on the outer peripheral side of water softening chamber 201, and the volume of neutralization chamber 202 is larger than the volume of water softening chamber 201.

In neutralization chamber 202, soft water having a neutral pH is generated by neutralizing the soft water generated in water softening chamber 201. Second electrode 104 is provided in neutralization chamber 202.

Second electrode 104 is not energized in the water softening process and acts as a cathode in the regeneration process for weakly basic anion exchange resin 102. Second electrode 104 is surrounded by weakly basic anion exchange resin 102 in neutralization chamber 202.

Here, the expression "being surrounded" indicates a state in which a surface of second electrode 104 is in contact with a surface of weakly basic anion exchange resin 102 from an upper end to a lower end over an entire circumference. However, similarly to weakly acidic cation exchange resin 101, weakly basic anion exchange resin 102 usually has a spherical shape, and it is necessary to secure a water flow path for the raw water (strictly, acidic soft water). Therefore, a state in which weakly basic anion exchange resin 102 is not in contact with the surface of second electrode 104 without any gap, but is disposed over the entire circumference of second electrode 104 while being partially in contact with the surface of second electrode 104 also corresponds to a state in which "second electrode 104 is surrounded by weakly basic anion exchange resin 102".

The upper end of second electrode 104 is positioned below a water surface in neutralization chamber 202 at the start of regeneration treatment (regeneration treatment of weakly basic anion exchange resin 102) described below. Accordingly, a second space 205 is formed above the upper end of second electrode 104 in neutralization chamber 202.

Weakly basic anion exchange resin 102 fills the inside of neutralization chamber 202. That is, the periphery of second electrode 104 and the second space 205 are filled with weakly basic anion exchange resin 102.

In order to smoothly regenerate weakly basic anion exchange resin 102, the water surface at the start of the regeneration treatment is preferably near the upper surface of neutralization chamber 202. In the present exemplary embodiment, the water surface at the start of the regeneration treatment coincides with the upper surface of neutralization chamber 202.

Second electrode 104 has distance W shorter than distance V, the distance V being distance from the water surface at the start of the regeneration treatment to the upper end of second electrode 104, the distance W being a distance from a bottom surface of neutralization chamber 202 to the lower end of second electrode 104.

As a result, bubbles generated from second electrode 104 fluidize weakly basic anion exchange resin 102 during the regeneration treatment described below, so that regeneration efficiency can be enhanced. In the present exemplary embodiment, since the lower end of second electrode 104 is in contact with the bottom surface of neutralization chamber 202, that is, W = 0, W is not illustrated in Fig. 2.

As a material of second electrode 104, a noble metal or a noble metal alloy can be used. The reason is that second electrode 104 containing a noble metal acts as a catalyst for water electrolysis and remains non-dissolving even under an acidic condition. Examples of the noble metal material include platinum, iridium, and ruthenium.

First electrode 103 is provided as a pair with second electrode 104, and the pair of first electrode 103 and second electrode 104 is provided on the same radius of casing 203.

As a result, a distance between first electrode 103 and second electrode 104 can be shortened as compared with a case where the pair of electrodes is not on the same radius, so that an increase in power consumption due to an increase in voltage can be suppressed.

In the present exemplary embodiment, two pairs of electrodes (first electrode 103a, second electrode 104a, first electrode 103b, and second electrode 104b) are provided on the same diameter in a cylindrical shape of casing 203 (on the same straight line passing through the center in plan view).

As a result, since the two pairs of electrodes are evenly disposed in casing 203, it is possible to suppress locations at which hydrogen ions or hydroxide ions are produced from the electrodes during the regeneration from being biased. Therefore, weakly acidic cation exchange resin 101 and weakly basic anion exchange resin 102 can be efficiently regenerated.

Inner peripheral diaphragm 105 serves as a partition between water softening chamber 201 and neutralization chamber 202. That is, inner peripheral diaphragm 105 serves as a partition between weakly acidic cation exchange resin 101 and weakly basic anion exchange resin 102.

Inner peripheral diaphragm 105 is a cylindrical membrane having water permeability. In inner peripheral diaphragm 105, an inner surface of inner peripheral diaphragm 105 covers an outer surface of water softening chamber 201 and is in contact with the outer surface of water softening chamber 201. The outer surface of inner peripheral diaphragm 105 covers an inner surface of neutralization chamber 202 and is in contact with the inner surface of neutralization chamber 202.

Therefore, inner peripheral diaphragm 105 serves as a partition between water softening chamber 201 and neutralization chamber 202 while allowing the acidic soft water generated in water softening chamber 201 to flow through inner peripheral diaphragm 105. The expression "covering" only refers to being positioned around a target and does not require complete enclosure of the target.

Inner peripheral diaphragm 105 has a hole whose diameter is smaller than particle diameters of weakly acidic cation exchange resin 101 and weakly basic anion exchange resin 102 in order not to hinder permeation of the water and to prevent outflow of weakly acidic cation exchange resin 101 and weakly basic anion exchange resin 102. Similarly to the lower limit value of the particle diameter of weakly acidic cation exchange resin 101 described above, a lower limit value of the particle diameter of weakly basic anion exchange resin 102 is also around 0.3 mm, and thus, the diameter of the hole of inner peripheral diaphragm 105 is smaller than the lower limit value.

As inner peripheral diaphragm 105, a resin mesh sheet can be used. As a material of inner peripheral diaphragm 105, a material having heat resistance and chemical resistance is desirable, and examples of the material include a fluorine-based resin, a polyethylene resin, a polypropylene resin, a polyvinyl chloride resin, and a polyvinylidene fluoride resin.

As inner peripheral diaphragm 105, a structure having through-holes, slits, or the like can also be used. In the water softening process, it is preferable that the through-holes or slits are uniformly disposed on the surface of inner peripheral diaphragm 105 in order to cause the water to uniformly flow out from water softening chamber 201 to neutralization chamber 202. An opening area of each of the through-holes or slits is preferably smaller than the particle diameters of weakly acidic cation exchange resin 101 and weakly basic anion exchange resin 102 and is an area that is enough not to hinder the flow of the water in the water softening process.

Outer peripheral diaphragm 106 serves as a partition between neutralization chamber 202 and water supply part 108 described below.

Outer peripheral diaphragm 106 is a cylindrical membrane having water permeability. In outer peripheral diaphragm 106, an inner surface of outer peripheral diaphragm 106 covers an outer surface of neutralization chamber 202 and is in contact with the outer surface of neutralization chamber 202. An outer surface of outer peripheral diaphragm 106 covers an inner surface of water supply part 108 and is in contact with the inner surface of water supply part 108.

Therefore, outer peripheral diaphragm 106 serves as a partition between neutralization chamber 202 and water supply part 108 while allowing the soft water generated in the neutralization chamber 202 to flow through outer peripheral diaphragm 106. The expression "covering" only refers to being positioned around a target and does not require complete enclosure of the target.

Outer peripheral diaphragm 106 has a hole whose diameter is smaller than the particle diameter of weakly basic anion exchange resin 102 in order not to hinder permeation of the water and to prevent the outflow of weakly basic anion exchange resin 102. The lower limit value of the particle diameter of weakly basic anion exchange resin 102 is around 0.3 mm, the diameter of the hole of outer peripheral diaphragm 106 is smaller than the lower limit value.

As outer peripheral diaphragm 106, a resin mesh sheet can be used. As a material of outer peripheral diaphragm 106, a material having heat resistance and chemical resistance is desirable, and examples of the material include a fluorine-based resin, a polyethylene resin, a polypropylene resin, a polyvinyl chloride resin, and a polyvinylidene fluoride resin.

As outer peripheral diaphragm 106, a structure having through-holes, slits, or the like can also be used. In the water softening process, it is preferable that the through-holes or slits are uniformly disposed on the surface of outer peripheral diaphragm 106 in order to cause the water to uniformly flow out from neutralization chamber 202 to water supply part 108. An opening area of the through-hole or slit is preferably smaller than the particle diameters of weakly acidic cation exchange resin 101 and weakly basic anion exchange resin 102 and is an area that is enough not to hinder the flow of the water in the water softening process.

The upper surfaces of water introduction part 107, water softening chamber 201, inner peripheral diaphragm 105, neutralization chamber 202, and outer peripheral diaphragm 106 are covered by lid 112.

Lid 112 has a water-impermeable structure, and for example, a plate-like resin can be used. Lid 112 is in contact with each of the upper surfaces of water introduction part 107, water softening chamber 201, inner peripheral diaphragm 105, neutralization chamber 202, and outer peripheral diaphragm 106, and covers each of the upper surfaces to serve as a partition between each of the upper surfaces and water supply part 108 described below.

As a result, it is possible to suppress outflow of the water from each of the upper surfaces to water supply part 108. That is, with lid 112, it is possible to form a water flow in which the raw water flowing in from water introduction part inlet 111 flows through water introduction part 107, water softening chamber 201, inner peripheral diaphragm 105, and neutralization chamber 202, and is delivered from a side surface of outer peripheral diaphragm 106 to side space 108a of water supply part 108.

Water supply part 108 supplies the soft water delivered from neutralization chamber 202 to water supply part outlet 110 provided above the upper portion of neutralization chamber 202. The central axis of water supply part 108 coincides with central axis I of casing 203.

Water supply part 108 is provided in casing 203 and includes side space 108a and upper space 108b.

Side space 108a is a space having a cylindrical shape, provided on an outer peripheral side of neutralization chamber 202 with respect to central axis I of casing 203, and surrounding neutralization chamber 202. Side space 108a is in contact with the outer surface of outer peripheral diaphragm 106 on an inner surface side of the cylindrical shape, and is in contact with an inner surface of casing 203 on an outer surface side of the cylindrical shape. In other words, side space 108a is a space provided between the inner surface of casing 203 and the outer surface of outer peripheral diaphragm 106.

In a direction parallel to central axis I, an entire length of side space 108a is larger than an entire length of neutralization chamber 202, and when the bottom surfaces of side space 108a and neutralization chamber 202 are arranged on the same plane, a top surface of side space 108a protrudes upward from a top surface of neutralization chamber 202.

Upper space 108b is a space having a columnar shape and provided above the top surfaces of water introduction part 107, water softening chamber 201, inner peripheral diaphragm 105, neutralization chamber 202, and outer peripheral diaphragm 106. Upper space 108b is in contact with an inner wall of a top surface of casing 203 at a top surface of the columnar shape, and is in contact with an outer wall of a top surface of lid 112 at a bottom surface of the columnar shape. In upper space 108b, an outer surface of the columnar shape is in contact with an inner surface of side space 108a.

Side space 108a and upper space 108b are virtually partitioned from each other by boundary line 113 which is an imaginary line. Boundary line 113 is a cylindrical imaginary line whose central axis coincides with central axis I, and is positioned at a vertically upper portion of outer peripheral diaphragm 106.

Water supply part outlet 110 is provided on the top surface of casing 203, and discharges the water in upper space 108b to the outside of water softening device 100. A central axis of water supply part outlet 110 coincides with central axis I of casing 203.

Air bleed valve 109 is a valve that is provided at an upper portion of water supply part 108 and discharges gases such as oxygen and hydrogen generated in water softening chamber 201 and neutralization chamber 202 during the regeneration treatment to the outside of water softening device 100.

The above is the configuration of water softening device 100.

Next, two processes (the water softening process and the regeneration process) of water softening device 100 will be described.

First, an operation of water softening device 100 in the water softening process and a principle of the water softening process will be described.

In water softening device 100, the raw water flows from the outside into a lower portion of water introduction part 107 through water introduction part inlet 111. The raw water that has flowed in is supplied from the lower portion to the upper portion of water introduction part 107, and flows out in a radial direction of casing 203 from the holes provided in the side wall of water introduction part 107. That is, the raw water is delivered from the holes of water introduction part 107 to water softening chamber 201.

The raw water delivered to water softening chamber 201 is softened by weakly acidic cation exchange resin 101 filled in water softening chamber 201. Specifically, the hardness components (calcium or magnesium ions) in the raw water are exchanged for hydrogen ions adsorbed to weakly acidic cation exchange resin 101 to form the acidic soft water containing the hydrogen ions.

The acidic soft water generated in water softening chamber 201 passes through inner peripheral diaphragm 105, which is a water-permeable membrane, flows into neutralization chamber 202, and is neutralized. Specifically, the hydrogen ions in the soft water are adsorbed to weakly basic anion exchange resin 102 to be removed from the soft water, as a result of which the neutral soft water is generated. In such a neutralization reaction, anions such as sulfate ions contained in the soft water are also adsorbed to weakly basic anion exchange resin 102.

The neutral soft water generated in neutralization chamber 202 passes through outer peripheral diaphragm 106, which is a water-permeable membrane, and flows into water supply part 108.

The soft water flowing into water supply part 108 forms an upward flow, rises in side space 108a, and flows into upper space 108b. The soft water flowing into upper space 108b flows in upper space 108b toward a central portion of upper space 108b, and is taken out through water supply part outlet 110 provided at a central portion of an upper surface of water softening device 100.

In the water softening process, the raw water is softened in this manner.

In order to efficiently soften water, it is important to bring particles of an ion exchange resin into sufficient contact with hard water or acidic soft water. Therefore, it is necessary to design the water softening device using the ion exchange resin in a form in which the water is allowed to flow uniformly in the water softening device. In a case where the water does not flow uniformly, the water flows in a biased manner along a path in which the water easily flows, as a result of which the water passes through water softening chamber 201 or neutralization chamber 202 in a state in which the contact with the ion exchange resin is insufficient. As a result, there is a possibility that the water taken out from water softening device 100 does not become the soft water or remains acidic.

On the other hand, in water softening device 100 in the present exemplary embodiment, the raw water is introduced into the device from below casing 203, passes through water supply part 108, and is taken out as the soft water from water supply part outlet 110 provided at an upper portion of the water softening device 100. A method of supplying the water from the lower portion to the upper portion in this manner is referred to as the upward flow. In the case of the upward flow, since the particles of the ion exchange resin can easily flow, a pressure loss when the water passes through water softening chamber 201 and neutralization chamber 202 is small, and the water easily flows.

In addition, since water softening device 100 has a cylindrical shape, a distance from water introduction part 107 positioned at the center of water softening device 100 to water supply part 108 positioned on an outer side of water softening device 100 is equal, and a water pressure applied to water supply part 108 is equal.

Furthermore, water softening device 100 has a structure in which the water flows out through water supply part outlet 110 provided at the central portion of the upper surface of water softening device 100.

Due to such three characteristics including the upward flow, the cylindrical shape, and the position of water supply part outlet 110 in water softening device 100, a variation in flow path length when the water passes through water softening device 100 is reduced, and the water can uniformly flow in the space of water softening device 100. Therefore, the ion exchange resin and the raw water or the acidic soft water can be sufficiently brought into contact with each other, as a result of which efficient water softening can be performed.

Weakly acidic cation exchange resin 101 filled in water softening chamber 201 is an ion exchange resin having a carboxyl group, and a resin having the methacrylic-acid-based backbone or the acrylic-acid-based backbone can be used as weakly acidic cation exchange resin 101. Among the resins, it is preferable to use a resin having the acrylic-acid-based backbone. In the case of the methacrylic-acid-based backbone, a pKa (acid dissociation constant), which is a physical property of the resin, is generally around 5. On the other hand, a pKa of the acrylic-acid-based backbone is about 3. In the water softening process, when H⁺ in the weakly acidic cation exchange resin is exchanged for a cation such as a hardness ion and released into the water, and a pH of the water in water softening chamber 201 becomes less than or equal to the pKa, COO⁻H⁺ responsible for ion exchange is not dissociated, as a result of which the ion exchange cannot be performed. Therefore, the acrylic-acid-based backbone having a low pKa can exchange more cations than the methacrylic-acid-based backbone.

In addition, it is preferable to use a resin having a higher proportion of tertiary amines than quaternary amines as the functional group for weakly basic anion exchange resin 102 filled in neutralization chamber 202. A pKb of the quaternary amines is around 11, which is higher than a pKb of the tertiary amine, around 8. An upper limit of the pH of the soft water obtained after the acidic soft water passes through weakly basic anion exchange resin 102 is a pKb of an amine group. The reason is that, in weakly basic anion exchange resin 102, the amine group as an ion exchange group does not function when a pH of a solution exceeds the pKb. An upper limit of a pH of the tap water is set to 8.5 according to a water quality standard. In a case where a proportion of the quaternary amines in weakly basic anion exchange resin 102 is high, the pH of the soft water is biased more toward alkalinity than in a case where the proportion of the quaternary amines is low. That is, when the proportion of the quaternary amines is high, the pH becomes higher than 8.5, and there is a possibility that the water quality standard is not satisfied. Therefore, it is preferable that the proportion of the tertiary amines is high in order to keep the pH of the soft water within the water quality standard.

In order to obtain the soft water satisfying the water quality standard, the volume of weakly basic anion exchange resin 102 to be used needs to be equal to or more than the volume of weakly acidic cation exchange resin 101. The reason for such a requirement will be described from the viewpoint of an ion exchange reaction rate of the two resins.

In order to obtain the soft water satisfying the water quality standard during the water softening process, it is necessary to reduce the hardness of the raw water to be less than or equal to 50 mg/L while the raw water passes through water softening chamber 201 and to return a pH of the raw water from around 3 to neutral while the raw water passes through neutralization chamber 202.

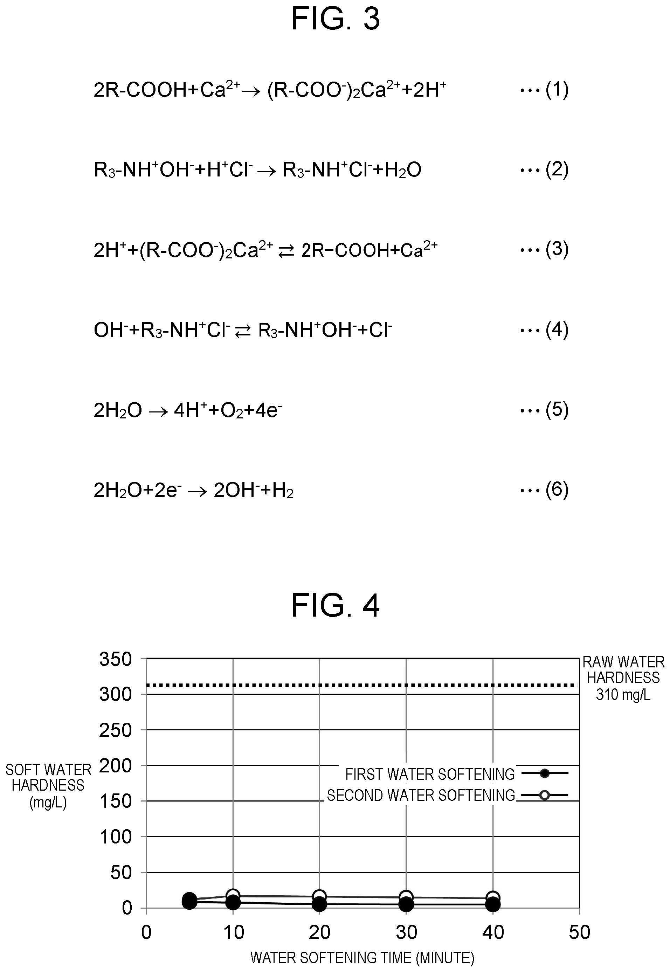

An amount of cations removed in water softening chamber 201 and amounts of anions and H⁺ removed in neutralization chamber 202 are determined by the ion exchange reaction rate and a time for the water to pass through the ion exchange resin. As can be seen from reactions during the water softening process indicated in Equations (1) and (2) of Fig. 3, the ion exchange reaction rate is determined by an ion exchange group concentration (a), an ion concentration (b) in the hard water (a concentration of Ca²⁺, Cl⁻, or the like), and a rate constant (c) of the ion exchange reaction. The time for the water to pass through the resin is determined by a resin volume (d) and a flow rate (e) of the water.

Among the five parameters, the ion concentration (b) in the hard water and the flow rate (e) of the water cannot be controlled. Since the ion exchange group concentration (a) and the rate constant (c) of the ion exchange reaction are determined by a type and the particle diameter of the resin, the water quality standard required during the water softening process is achieved by adjusting the resin volume (d).

A volume ratio of each resin is determined from the viewpoint of the ion exchange group concentration (a) and the rate constant (c) of the ion exchange reaction. The ion exchange group concentration (a) can be compared in terms of an ion exchange capacity (eq/L) of the ion exchange resin, that is, the number of moles of the ion exchange groups per resin volume.

Since an ion exchange capacity of weakly acidic cation exchange resin 101 is about 4 eq/L and an ion exchange capacity of weakly basic anion exchange resin 102 is at most 2 eq/L, weakly acidic cation exchange resin 101 has a higher ion exchange group concentration (a). As for the rate constant (c) of the reaction, weakly basic anion exchange resin 102 has a very uniform particle diameter and a small average particle diameter, and thus weakly basic anion exchange resin 102 has a larger rate constant. Therefore, the weakly basic anion exchange resin has a larger rate constant (c) of the reaction, but weakly basic anion exchange resin 102 has the ion exchange group concentration (a) that is about half of weakly acidic cation exchange resin 101.

In terms of the reaction rate considering (a) and (c), weakly basic anion exchange resin 102 is slightly lower than weakly acidic cation exchange resin 101. Therefore, in terms of the resin volume (d), the volume of weakly basic anion exchange resin 102 needs to be larger than or equal to the volume of weakly acidic cation exchange resin 101.

In such a water softening process, when an adsorption amount of the hardness ions to weakly acidic cation exchange resin 101 or an adsorption amount of the anions to weakly basic anion exchange resin 102 increases, resin performance for water softening decreases. Therefore, the regeneration process needs to be performed.

Hitherto, when a water softening device in which a weakly acidic cation exchange resin and a weakly basic anion exchange resin are mixed is regenerated using a BP membrane, there has been a problem that desorbed hardness ions are re-adsorbed to the ion exchange resin, and a resin regeneration reaction is thus easily inhibited. Therefore, in order to suppress the re-adsorption of the desorbed hardness ions, it is necessary to discharge water containing the desorbed hardness ions to the outside of the device, and it is necessary to perform regeneration while maintaining water flow. Such a water flow operation has a problem that a drainage amount during the regeneration process increases. The cause of the above problem will be described below.

In the regeneration process for the weakly acidic cation exchange resin and the weakly basic anion exchange resin, reactions represented by Equation (3) and Equation (4) in Fig. 3 occur.

Since the regeneration reactions of both resins are reversible reactions, not only a positive reaction in which Ca²⁺ or Cl⁻ is desorbed but also a reverse reaction in which each ion is adsorbed occurs. The amine group of weakly basic anion exchange resin 102 has a significantly higher affinity for OH⁻ than other anions such as Cl⁻. Therefore, a rate of the reverse reaction in which Cl⁻ is adsorbed is low, and an influence of the reverse reaction is small. On the other hand, the carboxyl group of weakly acidic cation exchange resin 101 has a relatively high affinity for Ca²⁺. Therefore, a rate of the reverse reaction in which Ca²⁺ is adsorbed is higher than that of the weakly basic anion exchange resin, and a re-adsorption reaction of a certain amount of Ca²⁺ occurs.

As can be seen from Equation (3), a rate of the positive reaction of the weakly acidic cation exchange resin is determined by concentrations of H⁺ and Ca²⁺. When the concentration of H⁺ is high and the concentration of Ca²⁺ is low, a rate of a rightward regeneration reaction is high. However, when the concentration of H⁺ is low and the concentration of Ca²⁺ is high, the rate of the rightward regeneration reaction decreases and a rate of a leftward re-adsorption reaction of Ca²⁺ increases, and thus, the resin regeneration is less likely to proceed.

In the regeneration step disclosed in PTL 1, H⁺ and OH⁻ are simultaneously produced at an interface between the BP membrane and the ion exchange resin. The original purpose of the production of H⁺ and OH⁻ is to regenerate the resin, but the produced H⁺ and OH⁻ are also consumed by side reactions other than the resin regeneration reaction. The side reactions include a neutralization reaction in which H⁺ and OH⁻ recombine, and an H⁺ adsorption reaction by the weakly basic anion exchange resin. Since a plurality of reactions consuming H⁺ and OH⁻ occur, a pH in a resin tank during the regeneration step is near neutral in PTL 1.

When the pH during the regeneration step becomes near neutral, as described in the mechanism of the regeneration reaction, the regeneration of the weakly acidic cation exchange resin is less likely to proceed when the concentration of Ca²⁺ is high. Therefore, in the regeneration step of PTL 1, in order to decrease the concentration of Ca²⁺, a drainage operation of discharging Ca²⁺ desorbed from the weakly acidic cation exchange resin to the outside of the system is required.

The drainage amount in the drainage operation can be estimated as follows. In the case of a domestic water softener, the volume of the ion exchange resin is generally about 20 L. In view of a void portion of the tank filled with the resin and the resin volume, the amount of water in the tank becomes approximately equal to the volume of the resin. Since the concentration of the calcium ions and a concentration of magnesium ions increase immediately when the water in the tank is retained, it is desirable to replace the entire amount of water in the tank at least once every several tens of minutes.

For example, in the case of replacing the water in the tank once every 10 minutes, it is necessary to keep the flow of the water at 2 L/min. Hydrogen ions and hydroxide ions that can be produced by the BP membrane method are each on the order of several mmol/min. On the other hand, in a standard use condition, calcium ions and magnesium ions to be desorbed from the resin are about several moles (in a case where 1000 L of raw water having a hardness of 250 mg/L is softened per day, the hardness adsorbed to the resin is 2.5 mol), and therefore several hours are required for the regeneration. Even in a case where a regeneration time is 3 hours, the drainage amount is 2 L/min × 3 hr × 60 min/hr = 360 L, which is a large quantity.

Therefore, there is a demand for a water softening device that reduces a drainage amount or does not require drainage.

Hereinafter, an operation of water softening device 100 in the regeneration process and a principle of the regeneration process will be described with reference to Fig. 3.

In the regeneration process, first, the raw water flows into water introduction part 107 from a supply source of the raw water via water introduction part inlet 111, and is filled in water softening chamber 201 and neutralization chamber 202. Next, each electrode is energized such that first electrode 103 surrounded by weakly acidic cation exchange resin 101 has a higher potential than second electrode 104 surrounded by weakly basic anion exchange resin 102.

As a result, a reaction for producing the hydrogen ions (see Equation (5) in Fig. 3) occurs at first electrode 103 as the anode, and a reaction for producing the hydroxide ions (see Equation (6) in Fig. 3) occurs at second electrode 104 as the cathode. In other words, the hydrogen ions are produced in water softening chamber 201, and the hydroxide ions are produced in neutralization chamber 202.

Weakly acidic cation exchange resin 101 to which the hardness components have been adsorbed by the water softening process is exposed to the hydrogen ions to cause an exchange reaction between the hardness components and the hydrogen ions. As a result, weakly acidic cation exchange resin 101 is regenerated.

Weakly basic anion exchange resin 102 to which the anions have been adsorbed by the water softening process is exposed to the hydroxide ions to cause an exchange reaction between the adsorbed anions and the hydroxide ions. As a result, weakly basic anion exchange resin 102 is regenerated.

In the regeneration process, weakly acidic cation exchange resin 101 and weakly basic anion exchange resin 102 are regenerated in this manner.

In the present exemplary embodiment, since first electrode 103 and second electrode 104 are provided in a state of being surrounded by the ion exchange resins at two partitioned locations, water softening chamber 201 and neutralization chamber 202, respectively, the hydrogen ions and the hydroxide ions are separately produced, and both the produced ions are quickly used for regeneration of the ion exchange resins. When the produced hydrogen ions and hydroxide ions come into contact with each other, the neutralization reaction occurs and both ions are consumed. However, in the configuration of the present exemplary embodiment, since the neutralization reaction due to the contact between the hydrogen ions and the hydroxide ions is unlikely to occur, the concentration of the hydrogen ions in Equation (3) in Fig. 3 can be increased, and the regeneration reaction of weakly acidic cation exchange resin 101 can proceed even in a state in which the calcium ions coexist. Therefore, it is possible to reduce a frequency of drainage for the purpose of decreasing the concentration of the calcium ions in water softening device 100 in the regeneration process, or to eliminate the need for drainage, thereby decreasing the drainage amount.

In addition, since the produced hydrogen ions and hydroxide ions are immediately consumed in the resin regeneration reaction, a pH in the vicinity of first electrode 103 is not significantly lowered. Therefore, it is possible to increase an electrode life in a case where a platinum electrode is used for first electrode 103 and second electrode 104. The reason is that an oxide film naturally formed on the surface of the electrode can be suppressed from being dissolved by the hydrogen ions. When the oxide film exists, a platinum dissolution reaction (for example, a reaction in which platinum reacts with Cl⁻ ions to produce platinum chloride ions) can be prevented, and thus, the electrode life can be increased.

In the present exemplary embodiment, first electrode 103 is in contact with the bottom surface of water softening chamber 201, and second electrode 104 is in contact with the bottom surface of neutralization chamber 202. That is, since the electrode is disposed near the resin having a high concentration of adsorbed ions, the produced hydrogen ions and hydroxide ions are quickly used in the resin regeneration reaction. Therefore, consumption due to the neutralization reaction of the hydrogen ions and the hydroxide ions hardly occurs, and the regeneration process can be efficiently performed.

Specifically, in the regeneration process, Equation (3) and Equation (4) in Fig. 3, which represent the resin regeneration reactions, and Equation (5) and Equation (6), which represent H⁺ and OH⁻ production reactions, occur simultaneously. It is desirable that H⁺ and OH⁻ produced by electrolysis of the water are consumed immediately in the resin regeneration reaction. However, H⁺ and OH⁻ are also consumed by the neutralization reaction in which H⁺ and OH⁻ react with each other. Since a diffusion rate of H⁺ and OH⁻ is higher than that of other ion species, the neutralization reaction easily occurs unless H⁺ and OH⁻ are consumed in the resin regeneration reaction. When a loss of H⁺ and OH⁻ occurs due to the neutralization reaction, it is necessary to produce H⁺ and OH⁻ more than the stoichiometrically necessary number of moles determined by Equation (3) and Equation (4), as a result of which power consumption increases. Therefore, it is necessary to make a rate of the resin regeneration reaction higher than rates of the H⁺ and OH⁻ production reactions.

The increase in the rate of the resin regeneration reaction can be achieved by increasing concentrations of (R-COO⁻)₂Ca²⁺ and R₃-NH⁺Cl⁻. In order to increase the concentrations of (R-COO⁻)₂Ca²⁺ and R₃-NH⁺Cl⁻ in the regeneration process in which the resin regeneration reaction and the H⁺ and OH⁻ production reactions occur simultaneously, it is effective to dispose the electrode near the resin to which more cations or anions are adsorbed in the water softening process.

In water softening chamber 201, the closer to the bottom surface in a height direction, the higher the concentrations of (R-COO⁻)₂Ca²⁺ and (R-COO⁻)₂Mg²⁺ become. In neutralization chamber 202, the concentrations of R₃-NH⁺Cl⁻ and (R₃-NH⁺)₂SO₄²⁻ increase toward the bottom surface in the height direction. Therefore, first electrode 103 is in contact with the bottom surface of water softening chamber 201, and second electrode 104 is in contact with the bottom surface of neutralization chamber 202, so that the regeneration process can be efficiently performed.

### (Example)

Hereinafter, details of the present disclosure will be described using an example with reference to Figs. 4 to 6.

A water softening test and a regeneration test were performed using water softening device 100 illustrated in Fig. 1. In the water softening test, raw water flowed through a water introduction tube, and a hardness of the water taken out from water softening device 100 was measured. As the raw water, hard water having a hardness of 310 mg/L was used.

The regeneration test was performed by the following method. A platinum electrode in weakly acidic cation exchange resin 101 was connected to a positive electrode of a DC power supply, and a platinum electrode in weakly basic anion exchange resin 102 was connected to a negative electrode. A current of 5 A was applied from the DC power supply for 6 hours. The water in water softening device 100 was not replaced during regeneration, and the regeneration was performed without drainage. A small amount of water was taken out from water softening chamber 201 and neutralization chamber 202 during the regeneration, and a pH and an ion concentration were measured.

After the first water softening test, the regeneration test was performed, and then the water softening test was performed again.

Fig. 4 is a diagram illustrating a change in hardness from 5 minutes to 40 minutes after the start of water flow in the first and second water softening tests. It can be seen that the hardness decreased from 310 mg/L to 50 mg/L or less by the water flow through water softening device 100. Also in the second water softening process performed after the regeneration process, the hardness decreased to a soft water level. When the raw water flowed through water softening device 100 for 40 minutes, a high hardness of 310 mg/L could be reduced to about 20 mg/L. It can be seen from above that the flow of the water in water softening device 100 is uniform, in other words, the entire resin particles in water softening device 100 can be used.

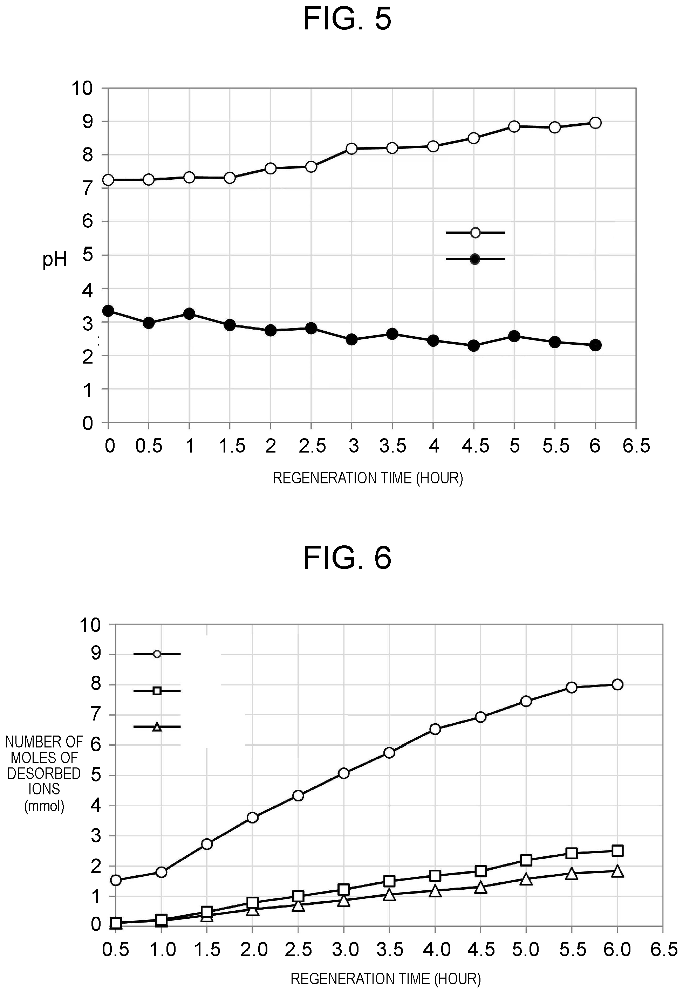

Fig. 5 is a diagram illustrating changes in pH of water softening chamber 201 and neutralization chamber 202 during the regeneration process.

It can be seen that neutralization chamber 202 is in a neutral to weakly alkaline state with a pH of 7 to 9, and water softening chamber 201 is in an acidic state with a pH of 2.3 to 3.3. Even though water permeation through the used diaphragm is easy, water softening chamber 201 is maintained in the acidic state, and neutralization chamber 202 is maintained in the alkaline state. That is, it is clear that weakly acidic cation exchange resin 101 can be separately exposed to H⁺, and weakly basic anion exchange resin 102 can be separately exposed to OH⁻.

Furthermore, even though the pH of water softening chamber 201 is biased toward acidity, water softening chamber 201 is in a weakly acidic state with a pH of about 2.5, and even though the pH of neutralization chamber 202 is biased toward alkalinity, neutralization chamber 202 is in a weakly alkaline state with a pH of about 9. In a case where a rate at which the resin consumes H⁺ and OH⁻ is lower than a rate at which the electrode produces H⁺ and OH⁻, the pH rapidly increases in neutralization chamber 202 to a strongly alkaline level of a pH of 12 or higher, and the pH decreases in water softening chamber 201 to a strongly acidic level of a pH of 2 or less. The reason is that H⁺ or OH⁻ equivalent to 5 A is always produced from the electrode. Therefore, as illustrated in Fig. 5, it can be said that H⁺ and OH⁻ produced from the electrode are immediately consumed by the resin regeneration reaction from a result that the pH is not sharply biased toward acidity or alkalinity. It can be seen that the resin regeneration reaction can be controlled to be rate-limiting by disposing the electrode in the vicinity of the resin incorporating a large amount of Ca²⁺ or Cl⁻.

Fig. 6 is a diagram illustrating a change in the number of moles of each of Cl⁻ ions, Mg²⁺ ions, and Ca²⁺ ions during the regeneration process. The Cl⁻ ions are released from weakly basic anion exchange resin 102, and the Mg²⁺ ions and the Ca²⁺ ions are released from weakly acidic cation exchange resin 101. As the regeneration time increased, the number of moles of all the ions increased. In addition, the number of moles of the ions was substantially unchanged between a time point corresponding to 5.5 hours and a time point corresponding to 6 hours.

As illustrated in Fig. 6, it can be seen from an increase in the number of moles of the ions accompanying the increase in regeneration time that the cations are desorbed from weakly acidic cation exchange resin 101, the anions are desorbed from weakly basic anion exchange resin 102, and the resin regeneration is in progress. In addition, from the result indicating that the ion release occurred due to the regeneration, it was demonstrated that the drainage amount during the regeneration can be reduced with the configuration of the present exemplary embodiment even when the drainage is not performed during the regeneration process. In addition, it can be seen that the resin can be regenerated to a level at which water softening can be performed by water softening device 100 of the example, from two facts that an amount of ions at the final stage of regeneration hardly changed and that the hardness of the soft water after the regeneration in Fig. 4 remained at substantially the same level as that before the regeneration.

The present disclosure has been described above based on the exemplary embodiments. It is understood by those skilled in the art that the exemplary embodiments are merely examples, and that various modifications can be made to combinations of the components or the processing processes, and that such modifications are also within the scope of the present disclosure.

### (Modification)

In the first exemplary embodiment, since water softening device 100 has a cylindrical shape, the two diaphragms (inner peripheral diaphragm 105 and outer peripheral diaphragm 106) are distinguished as being respectively positioned on the inner peripheral side and the outer peripheral side. However, depending on the shape of water softening device 100, the two diaphragms are not necessarily positioned on the inner peripheral side and the outer peripheral side, respectively. The names of the inner peripheral diaphragm and the outer peripheral diaphragm are merely names for distinguishing two types of diaphragms, and do not indicate the positions of inner peripheral diaphragm 105 and outer peripheral diaphragm 106.

In water softening device 100 according to the first exemplary embodiment, casing 203, water introduction part 107, water softening chamber 201, inner peripheral diaphragm 105, neutralization chamber 202, and outer peripheral diaphragm 106 each have a cylindrical shape, but the shapes thereof are not limited thereto. For example, casing 203, water introduction part 107, water softening chamber 201, inner peripheral diaphragm 105, neutralization chamber 202, and outer peripheral diaphragm 106 may each have a prismatic shape.

In water softening device 100 according to the first exemplary embodiment, a tube such as a pipe having a minute hole on a surface is used as water introduction part 107, but water introduction part 107 is not limited thereto. For example, a central portion of water softening chamber 201 may be formed as a void, and the void portion may be formed as water introduction part 107. Even in this case, a similar effect can be obtained.

In water softening device 100 according to the first exemplary embodiment, a container whose central portion is hollowed in a cylindrical shape is used as water softening chamber 201, but water softening chamber 201 is not limited thereto. For example, a space defined by the outer periphery of water introduction part 107 and inner peripheral diaphragm 105 can be used as water softening chamber 201. Even in this case, a similar effect can be obtained.

In water softening device 100 according to the first exemplary embodiment, a container whose central portion is hollowed in a cylindrical shape is used as neutralization chamber 202, but neutralization chamber 202 is not limited thereto. For example, a space defined by inner peripheral diaphragm 105 and outer peripheral diaphragm 106 can be used as neutralization chamber 202. Even in this case, a similar effect can be obtained.

In water softening device 100 according to the first exemplary embodiment, lid 112 is a plate-like resin provided over the respective upper surfaces of water introduction part 107, water softening chamber 201, inner peripheral diaphragm 105, neutralization chamber 202, and outer peripheral diaphragm 106, but lid 112 is not limited thereto. Lid 112 may have any structure as long as the water does not flow out from the respective upper surfaces of water introduction part 107, water softening chamber 201, inner peripheral diaphragm 105, neutralization chamber 202, and outer peripheral diaphragm 106 to water supply part 108. For example, lid 112 may have a structure that separately covers each of the upper surfaces of water introduction part 107, water softening chamber 201, inner peripheral diaphragm 105, neutralization chamber 202, and outer peripheral diaphragm 106. Even in this case, it is possible to suppress outflow of the water from each of the upper surfaces to water supply part 108.

In water softening device 100 according to the first exemplary embodiment, the volume of weakly basic anion exchange resin 102 is larger than or equal to the volume of weakly acidic cation exchange resin 101, but it is preferable to change the volume ratio between weakly basic anion exchange resin 102 and weakly acidic cation exchange resin 101 in accordance with water quality of the raw water and a target treatment amount of the raw water. In a case where the hardness of the raw water is low, or in a case where the treatment amount of the raw water is small, the pH of the soft water can be maintained near neutral even when the volumes of weakly basic anion exchange resin 102 and weakly acidic cation exchange resin 101 are the same as each other. On the other hand, in a case where the hardness of the raw water is high or the treatment amount of the raw water is large, the pH may decrease to 6 or less, and thus it is preferable to make the volume of weakly basic anion exchange resin 102 larger than that of weakly acidic cation exchange resin 101.

In water softening device 100 according to the first exemplary embodiment, an arrangement of first electrode 103 and second electrode 104 is not limited as long as the distance from the water surface to the upper end of the electrode at the start of the regeneration treatment is longer than the distance from the bottom surface of each chamber to the lower end of the electrode. In addition, first electrode 103 and second electrode 104 can be disposed without any particular limitation as long as the loss of the produced H⁺ and OH⁻ due to the neutralization reaction can be suppressed, and H⁺ and OH⁻ can be consumed in the regeneration reaction of the ion exchange resin.

However, it is preferable from the viewpoint of cost reduction that first electrode 103 is disposed at any position between the bottom surface of the chamber filled with weakly acidic cation exchange resin 101 and a position halfway up toward the upper surface of the chamber filled with weakly acidic cation exchange resin 101 in the height direction. Further, it is preferable from the viewpoint of cost reduction that second electrode 104 is disposed at any position between the bottom surface of the chamber filled with weakly basic anion exchange resin 102 and a position halfway up toward the upper surface of the chamber filled with weakly basic anion exchange resin 102 in the height direction.

In water softening device 100 according to the first exemplary embodiment, a case where water softening device 100 is used alone has been described, but it is also possible to use water softening device 100 as a system including two or more water softening devices 100 connected in parallel by connecting a plurality of water softening devices 100 in parallel. By connecting water softening devices 100 in parallel, a flow rate per tank can be reduced. When the flow rate decreases, a time for the raw water to pass through water softening device 100 increases, and an amount of hardness removed in the water softening process increases.

In addition, water softening device 100 can be used as a system including two or more water softening devices 100 connected in series by connecting a plurality of water softening devices 100 in series. As water softening devices 100 are connected in series, the theoretical number of ion exchange resin layers increases. As a result, an ion exchange capacity of the substantially usable ion exchange resin increases. Specifically, when the ion exchange capacity is compared between the ion exchange resin of two water softening devices 100 connected in series and the ion exchange resin of one water softening device 100 under the condition the total amount of the ion exchange resin is the same, the ion exchange capacity of the ion exchange resin of two water softening devices 100 connected in series is about five times the ion exchange capacity of the ion exchange resin of one water softening device 100.

Furthermore, water softening devices 100 may be connected in series and in parallel to be used as a system including four or more water softening devices 100. In a configuration using such a connection method, the amount of hardness removed in the water softening process is the highest as compared with the configuration in which water softening devices 100 are connected only in parallel and the configuration in which water softening devices 100 are connected only in series as described above.

### (Second exemplary embodiment)

In the technology described in PTL 1, the hardness ions desorbed from the ion exchange resin are re-adsorbed to the ion exchange resin, as a result of which a reaction at the time of resin regeneration is easily inhibited. Therefore, it is necessary to perform regeneration while maintaining water flow in order to discharge the desorbed hardness ions. Such a water flow operation has a problem that a drainage amount at the time of resin regeneration increases.

The present disclosure has been made in view of such a problem of the related art. The present disclosure provides a water softening device capable of suppressing drainage during regeneration and efficiently regenerating a resin.

A water softening device according to the present disclosure includes: a water softening chamber that contains a weakly acidic cation exchange resin and generates soft water from raw water containing hardness components; a neutralization chamber that contains a weakly basic anion exchange resin and neutralizes the soft water; a diaphragm that serves as a partition between the water softening chamber and the neutralization chamber while allowing the soft water to flow through the diaphragm; a first electrode that acts as an anode during regeneration of the weakly acidic cation exchange resin; a second electrode that acts as a cathode during regeneration of the weakly basic anion exchange resin; and a controller that controls the regeneration of the weakly acidic cation exchange resin and the weakly basic anion exchange resin. The first electrode is surrounded by the weakly acidic cation exchange resin in the water softening chamber, and the second electrode is surrounded by the weakly basic anion exchange resin in the neutralization chamber. The controller performs: a water softening process of allowing water to be treated to flow from a lower portion of the water softening chamber and allowing the water to be treated to sequentially flow through the water softening chamber and the neutralization chamber to obtain the soft water; a regeneration process of energizing the first electrode and the second electrode, producing hydrogen ions from the first electrode by water electrolysis, producing hydroxide ions from the second electrode, regenerating the weakly acidic cation exchange resin by the produced hydrogen ions, and regenerating the weakly basic anion exchange resin by the produced hydroxide ions; a cleaning process of discharging, from the water softening chamber, cations released from the weakly acidic cation exchange resin by the regeneration process, and discharging, from the neutralization chamber, anions released from the weakly basic anion exchange resin; and an electrode cleaning process of connecting the first electrode to a negative electrode, connecting the second electrode to a positive electrode, and dissolving a solid adhering to a surface of the second electrode in the regeneration process, during the regeneration process or after an end of the regeneration process.

According to the present disclosure, it is possible to provide the water softening device capable of suppressing drainage during regeneration and efficiently regenerating a resin.

Hereinafter, exemplary embodiments of the present disclosure will be described with reference to the drawings. Note that the following exemplary embodiments are examples embodying the present disclosure, and do not limit the technical scope of the present disclosure. In addition, the drawings described in the respective exemplary embodiments are schematic representations, and the ratios of the sizes and the thicknesses of the components in each of the drawings do not necessarily reflect the actual dimensional ratio.

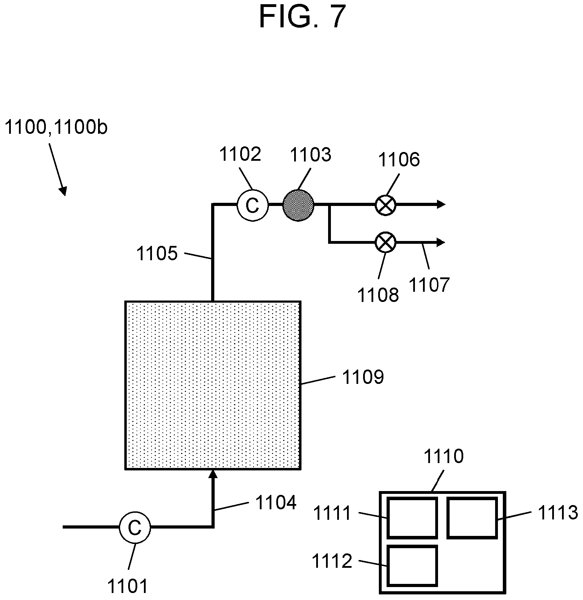

Water softening device 1100 according to a second exemplary embodiment of the present disclosure will be described with reference to Figs. 7, 8, and 9.

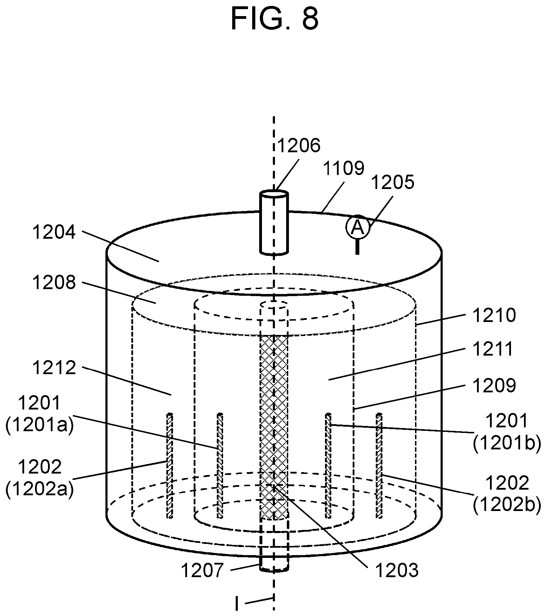

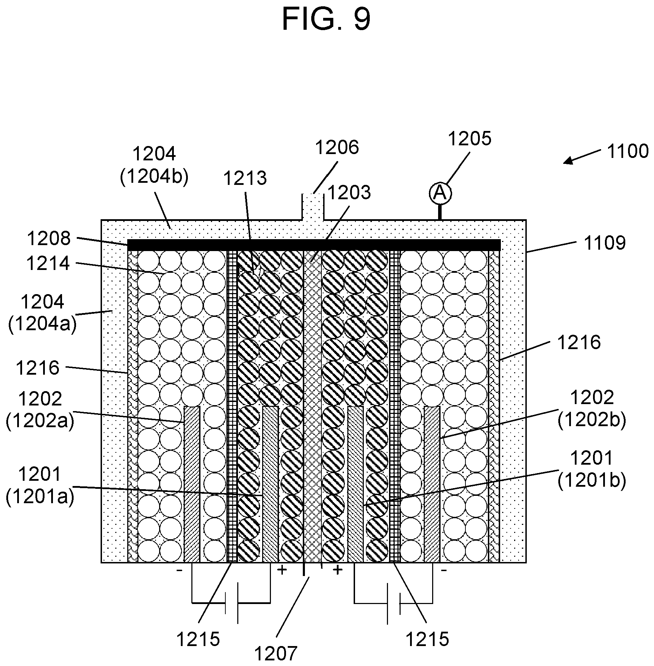

Fig. 7 is a schematic diagram illustrating a configuration of water softening device 1100 according to the second exemplary embodiment of the present disclosure. Fig. 8 is a perspective view illustrating a configuration of water softening device 1100 according to the second exemplary embodiment of the present disclosure. Fig. 9 is a cross-sectional view illustrating the configuration of water softening device 1100 according to the second exemplary embodiment of the present disclosure. Note that Figs. 7 to 9 conceptually illustrate each element of water softening device 1100. In Fig. 8, weakly acidic cation exchange resin 1213 and weakly basic anion exchange resin 1214 are omitted.

Water softening device 1100 is a device that generates neutral soft water from raw water containing hardness components supplied from the outside. The raw water is water (water to be treated) introduced into water softening device 1100 from raw water supply tube 1104 described below, and is, for example, well water or tap water. The raw water contains the hardness components (calcium or magnesium ions).

By performing the water softening process of softening the raw water using water softening device 1100, the neutral soft water having a reduced hardness can be obtained from the raw water having a high hardness, and the soft water can be used even in a zone where the hardness of the raw water is high.

In addition, water softening device 1100 performs the regeneration process of regenerating weakly acidic cation exchange resin 1213 and weakly basic anion exchange resin 1214 described below after performing the water softening process for a certain period of time. Details of the water softening process and the regeneration process will be described below.

As illustrated in Fig. 7, water softening device 1100 includes raw water supply tube 1104, casing 1109, soft water supply tube 1105, drain pipe 1107, and controller 1110.

Raw water supply tube 1104 is a tube connecting a water supply source of the raw water, such as a waterworks, and water introduction part inlet 1207, and includes raw water conductivity measurement unit 1101 on a flow path thereof.

Raw water conductivity measurement unit 1101 calculates a total ion concentration of the raw water flowing into raw water supply tube 1104. Information regarding the calculated total ion concentration of the raw water is transmitted to controller 1110 described below.

Casing 1109 is a hollow cylindrical member, and in casing 1109, the raw water is softened, and an ion exchange resin is regenerated.

As illustrated in Figs. 8 and 9, water introduction part 1203, water softening chamber 1209, neutralization chamber 1210, and water supply part 1204 are provided in a hollow space of casing 1109 in order from a side closer to central axis I connecting an upper surface and a lower surface of casing 1109 toward an outer peripheral direction.

Water introduction part inlet 1207 is provided at a central portion of the lower surface of casing 1109, that is, on central axis I. Water supply part outlet 1206 is provided at a central portion of the upper surface of casing 1109, that is, on central axis I. Central axis I of casing 1109 coincides with respective central axes of water introduction part 1203, water softening chamber 1209, neutralization chamber 1210, and water supply part 1204.

Water introduction part inlet 1207 is provided on a bottom surface of casing 1109 and supplies the raw water to water introduction part 1203. A central axis of water introduction part inlet 1207 coincides with central axis I of casing 1109.

Water introduction part 1203 is a cylindrical member and is connected to water introduction part inlet 1207 at a lower end. Water introduction part 1203 introduces the raw water into water softening device 1100 and supplies the raw water to water softening chamber 1209. A tube such as a pipe having a space therein can be used as water introduction part 1203.

Water introduction part 1203 is configured to make the raw water introduced into water softening device 1100 uniformly flow into water softening chamber 1209 and neutralization chamber 1210. Specifically, water introduction part 1203 is provided at a central portion in casing 1109, and an outer periphery of water introduction part 1203 is in contact with water softening chamber 1209. In other words, water introduction part 1203 is positioned on central axis I.

Water introduction part 1203 is provided extending from lower portions to upper portions of water softening chamber 1209 and neutralization chamber 1210, more strictly, from lower ends to upper ends. A length of a portion of water introduction part 1203 where the raw water can be supplied to water softening chamber 1209 and neutralization chamber 1210 is equal to heights of water softening chamber 1209 and neutralization chamber 1210.

Water introduction part 1203 has a plurality of holes on a side surface and delivers the raw water through the holes toward the outer peripheral direction from central axis I of casing 1109, that is, to water softening chamber 1209. Furthermore, the plurality of holes are preferably provided uniformly in a circumferential direction of the side surface of water introduction part 1203. With such a configuration, the raw water introduced into the device can uniformly flow into water softening chamber 1209 and neutralization chamber 1210. Therefore, the raw water is uniformly supplied to particles of weakly acidic cation exchange resin 1213 filled in water softening chamber 1209 and particles of weakly basic anion exchange resin 1214 filled in neutralization chamber 1210. Therefore, weakly acidic cation exchange resin 1213 and weakly basic anion exchange resin 1214 can be efficiently used as a whole.

A diameter of each of the plurality of holes of water introduction part 1203 on the side surface is smaller than a particle diameter of each of the particles of weakly acidic cation exchange resin 1213. A lower limit value of the particle diameter of weakly acidic cation exchange resin 1213 is around 0.3 mm, and thus, the diameter of the hole provided on the surface of water introduction part 1203 is smaller than the lower limit value. As a result, it is possible to prevent outflow of the ion exchange resin from water softening chamber 1209 without hindering permeation of water.

Water softening chamber 1209 is a space (first space 1211) having a cylindrical shape, provided on an outer peripheral side of water introduction part 1203 with respect to central axis I of casing 1109 in casing 1109, and containing weakly acidic cation exchange resin 1213. The central axis of water softening chamber 1209 coincides with central axis I of casing 1109. Water softening chamber 1209 is in contact with water introduction part 1203 on an inner surface side of the cylindrical shape, is in contact with inner peripheral diaphragm 1215 which is a cylindrical membrane having water permeability on an outer surface side of the cylindrical shape, and is in contact with lid 1208 at an upper surface. A plurality of first electrodes 1201 (for example, first electrode 1201a and first electrode 1201b) are provided in water softening chamber 1209.

First electrode 1201 is not energized in the water softening process and acts as an anode in the regeneration process for weakly acidic cation exchange resin 1213. First electrode 1201 is surrounded by weakly acidic cation exchange resin 1213 in water softening chamber 1209. Here, the expression "being surrounded" indicates a state in which a surface of first electrode 1201 is in contact with a surface of weakly acidic cation exchange resin 1213 from an upper end to a lower end over an entire circumference. However, weakly acidic cation exchange resin 1213 usually has a spherical shape, and it is necessary to secure a water flow path for the raw water. Therefore, a state in which weakly acidic cation exchange resin 1213 is not in contact with the surface of first electrode 1201 without any gap, but is disposed over the entire circumference of first electrode 1201 while being partially in contact with the surface of first electrode 1201 also corresponds to a state in which "first electrode 1201 is surrounded by weakly acidic cation exchange resin 1213".

Neutralization chamber 1210 is a space (second space 1212) having a cylindrical shape, provided on an outer peripheral side of water softening chamber 1209 with respect to central axis I of casing 1109 in casing 1109, and containing weakly basic anion exchange resin 1214. The central axis of neutralization chamber 1210 coincides with central axis I of casing 1109. Neutralization chamber 1210 is in contact with an outer surface of inner peripheral diaphragm 1215 on an inner surface side of the cylindrical shape, is in contact with an inner surface of outer peripheral diaphragm 1216 which is a cylindrical membrane having water permeability on an outer surface side of the cylindrical shape, and is in contact with lid 1208 at an upper surface. A plurality of second electrodes 1202 (for example, second electrode 1202a and second electrode 1202b) are provided in neutralization chamber 1210.

Second electrode 1202 is not energized in the water softening process and acts as a cathode in the regeneration process for weakly basic anion exchange resin 1214. Second electrode 1202 is surrounded by weakly basic anion exchange resin 1214 in neutralization chamber 1210.

Here, the expression "being surrounded" indicates a state in which a surface of second electrode 1202 is in contact with a surface of weakly basic anion exchange resin 1214 from an upper end to a lower end over an entire circumference. However, similarly to weakly acidic cation exchange resin 1213, weakly basic anion exchange resin 1214 usually has a spherical shape, and it is necessary to secure a water flow path for the raw water (strictly, acidic soft water). Therefore, a state in which weakly basic anion exchange resin 1214 is not in contact with the surface of second electrode 1202 without any gap, but is disposed over the entire circumference while being partially in contact with the surface of second electrode 1202 also corresponds to a state in which "second electrode 1202 is surrounded by weakly basic anion exchange resin 1214".

Water softening device 1100 includes an electrode cleaning circuit (a circuit including a power supply) that connects first electrode 1201 to the negative electrode and connects second electrode 1202 to the positive electrode.

Water supply part 1204 supplies the soft water delivered from neutralization chamber 1210 to water supply part outlet 1206 provided above the upper portion of neutralization chamber 1210. The central axis of water supply part 1204 coincides with central axis I of casing 1109.

Air bleed valve 1205 for releasing air in casing 1109 is provided on water supply part 1204.

Water supply part outlet 1206 is provided on a top surface of casing 1109, and discharges the water of water supply part 1204 to the outside of water softening device 1100. A central axis of water supply part outlet 1206 coincides with central axis I of casing 1109.

Returning to Fig. 7, soft water supply tube 1105 is a tube connecting water supply part outlet 1206 and a supply destination of the soft water, and includes soft water conductivity measurement unit 1102 and water amount measurement unit 1103 on a flow path thereof. In addition, drain pipe 1107 branches from soft water supply tube 1105 in the middle of the flow path. Soft water supply tube opening and closing valve 1106 is provided at a portion of soft water supply tube 1105, the portion being positioned downstream of a branch point for drain pipe 1107.

Soft water conductivity measurement unit 1102 calculates a total ion concentration of the soft water delivered through water supply part outlet 1206. Information regarding the calculated total ion concentration of the soft water is transmitted to controller 1110 described below.

As raw water conductivity measurement unit 1101 and soft water conductivity measurement unit 1102, any equipment capable of measuring a resistance of water can be used without any problem.

Drain pipe 1107 is a pipe branching from soft water supply tube 1105 at a position upstream of soft water supply tube opening and closing valve 1106, and is a pipe for drainage during the regeneration process. Drain pipe 1107 includes drain tube opening and closing valve 1108 on a flow path.

Water amount measurement unit 1103 is a member that measures an amount of water flowing through water softening device 1100, and can use equipment such as a water meter capable of measuring an integrated amount of water. Information regarding the measured amount of water is transmitted to controller 1110 described below.

Controller 1110 controls execution of each of the water softening process, the regeneration process, a drainage process, the cleaning process, and the electrode cleaning process described below.

Controller 1110 can be implemented by elements including a central processing unit (CPU) of a computer and a mechanical device in terms of hardware, and is implemented by a computer program or the like in terms of software. Accordingly, the functional blocks can be implemented in various forms by a combination of hardware and software.

Controller 1110 includes adsorption amount estimation unit 1111, storage 1112, and timer 1113.

Adsorption amount estimation unit 1111 calculates a total amount of ions adsorbed to water softening device 1100 by using the total ion concentration of the raw water calculated by raw water conductivity measurement unit 1101, the total ion concentration of the soft water calculated by soft water conductivity measurement unit 1102, and a total amount of flowing water measured by water amount measurement unit 1103.

Storage 1112 stores each piece of information transmitted to controller 1110 and each piece of information calculated by controller 1110.

Timer 1113 measures an elapsed time from the start of the regeneration process, more specifically, an elapsed time from the start of energization of first electrode 1201 and second electrode 1202.

The above is the configuration of water softening device 1100.

Next, the processes (the water softening process, the regeneration process, the cleaning process, and the electrode cleaning process) performed by water softening device 1100 will be described.

First, an operation of water softening device 1100 in the water softening process and a principle of the water softening process will be described.

In water softening device 1100, the raw water flows from the outside into a lower portion of water introduction part 1203 through water introduction part inlet 1207. The raw water that has flowed in is supplied from the lower portion to the upper portion of water introduction part 1203, and flows out in a radial direction of casing 1109 from the holes provided in the side wall of water introduction part 1203. That is, the raw water is delivered from the holes of water introduction part 1203 to water softening chamber 1209.

The raw water delivered to water softening chamber 1209 is softened by weakly acidic cation exchange resin 1213 filled in water softening chamber 1209. Specifically, the hardness components (calcium or magnesium ions) in the raw water are exchanged for hydrogen ions adsorbed to weakly acidic cation exchange resin 1213 to form the acidic soft water containing the hydrogen ions.

The acidic soft water generated in water softening chamber 1209 passes through inner peripheral diaphragm 1215, which is a water-permeable membrane, flows into neutralization chamber 1210, and is neutralized. Specifically, the hydrogen ions in the soft water are adsorbed to weakly basic anion exchange resin 1214 to be removed from the soft water, as a result of which the neutral soft water is generated. In such a neutralization reaction, anions such as sulfate ions contained in the soft water are also adsorbed to weakly basic anion exchange resin 1214.

The neutral soft water generated in neutralization chamber 1210 passes through outer peripheral diaphragm 1216, which is a water-permeable membrane, and flows into water supply part 1204.

The soft water flowing into water supply part 1204 becomes an upward flow, rises in side space 1204a of water supply part 1204, and flows into upper space 1204b of water supply part 1204. The soft water flowing into upper space 1204b flows in upper space 1204b toward a central portion of upper space 1204b, and is taken out through water supply part outlet 1206 provided at a central portion of an upper surface of water softening device 1100.

In the water softening process, the raw water is softened in this manner.

In the water softening process, when an adsorption amount of the hardness ions to weakly acidic cation exchange resin 1213 or an adsorption amount of the anions to weakly basic anion exchange resin 1214 increases, resin performance for water softening decreases. Therefore, the regeneration process needs to be performed.

In the regeneration process, first, the raw water flows into water introduction part 1203 from the supply source of the raw water via water introduction part inlet 1207, and is supplied to water softening chamber 1209 and neutralization chamber 1210. Next, each electrode is energized such that first electrode 1201 surrounded by weakly acidic cation exchange resin 1213 has a higher potential than second electrode 1202 surrounded by weakly basic anion exchange resin 1214.

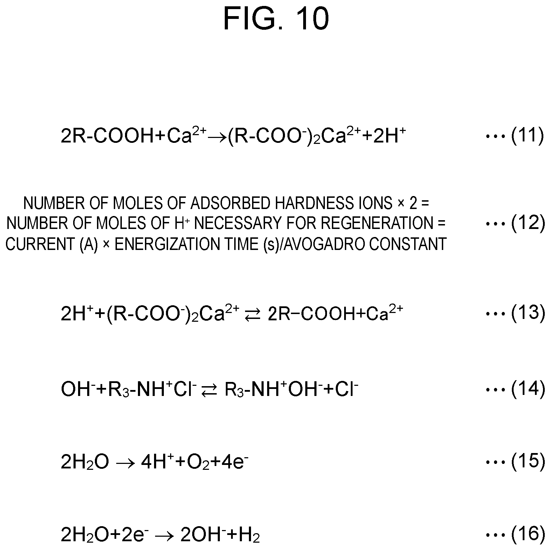

As a result, a reaction for producing the hydrogen ions (see Equation (15) in Fig. 10) occurs at first electrode 1201 as the anode, and a reaction for producing the hydroxide ions (see Equation (16) in Fig. 10) occurs at second electrode 1202 as the cathode. In other words, the hydrogen ions are produced in water softening chamber 1209, and the hydroxide ions are produced in neutralization chamber 1210.

Weakly acidic cation exchange resin 1213 to which the hardness components have been adsorbed by the water softening process is exposed to the hydrogen ions to cause an exchange reaction between the hardness components and the hydrogen ions. As a result, weakly acidic cation exchange resin 1213 is regenerated.

Weakly basic anion exchange resin 1214 to which the anions have been adsorbed by the water softening process is exposed to the hydroxide ions to cause an exchange reaction between the adsorbed anions and the hydroxide ions. As a result, weakly basic anion exchange resin 1214 is regenerated.

In the regeneration process, weakly acidic cation exchange resin 1213 and weakly basic anion exchange resin 1214 are regenerated in this manner.

In the regeneration process, water softening device 1100 sets a regeneration time based on a conductivity of the raw water or the soft water before and after the water flows through casing 1109 or the amount of water flowing through casing 1109.

Specifically, at the start of the water softening process, raw water conductivity measurement unit 1101 is activated to measure the conductivity of the raw water flowing through raw water supply tube 1104. In addition, soft water conductivity measurement unit 1102 is activated to measure the conductivity of the soft water flowing through soft water supply tube 1105. Furthermore, water amount measurement unit 1103 measures the amount of water flowing through casing 1109. The measured conductivity of the raw water, the measured conductivity of the soft water, and the measured amount of water are transmitted to controller 1110 and stored in storage 1112.

Ions to be removed in water softening chamber 1209 are mainly hardness ions of Mg²⁺ and Ca²⁺, and ions to be removed in neutralization chamber 1210 are mainly anions of HCO₃⁻, Cl⁻, and SO₄²⁻. From a principle of electrical neutrality, the number of moles of cations adsorbed in water softening chamber 1209 is equal to the number of moles of anions adsorbed in neutralization chamber 1210. Therefore, a difference between the conductivity measured by raw water conductivity measurement unit 1101 and the conductivity measured by soft water conductivity measurement unit 1102 is derived from a total amount of Mg salts and Ca salts removed by water softening device 1100. As described above, since the conductivity difference is a value of the removed ion concentration, it is possible to cope with water quality variations of the raw water and the soft water and to accurately calculate the adsorption amount.

Adsorption amount estimation unit 1111 estimates an amount of ions adsorbed in water softening device 1100. Specifically, the difference between the conductivity of the raw water and the conductivity of the soft water is calculated, the conductivities being stored in storage 1112. The difference is a concentration of ions adsorbed in water softening device 1100. Adsorption amount estimation unit 1111 multiplies the ion concentration obtained as the difference by the total amount of flowing water measured by water amount measurement unit 1103. By doing so, the amount of ions adsorbed in water softening device 1100 during the regeneration process is estimated.

Here, a current value and an energization time necessary for removing the estimated adsorbed ions from water softening device 1100 and regenerating water softening device 1100 will be described.

In the regeneration process, one mole of H⁺ is produced from one mole of electrons, and one mole of OH⁻ is produced from one mole of electrons. In order to release one mole of hardness ions from the resin, two moles of H⁺ are required. Therefore, a relationship among the number of moles of ions adsorbed in water softening chamber 1209, and H⁺, the current value, and the time necessary for resin regeneration is expressed by Equation (12) in Fig. 10.

Controller 1110 determines the current value and the energization time necessary for regeneration of weakly acidic cation exchange resin 1213 and weakly basic anion exchange resin 1214 based on the number of moles of adsorbed ions estimated by adsorption amount estimation unit 1111 and Equation (12).

In water softening device 1100, it is preferable to change the current value to be applied as the regeneration process proceeds. The reason of the above is described.

As the regeneration process proceeds, the ions adsorbed in the water softening process are released into the water from weakly acidic cation exchange resin 1213 and weakly basic anion exchange resin 1214, as a result of which the ion concentration in the water increases. That is, when the elapsed time from the start of the regeneration process becomes longer, the conductivity of the water in water softening device 1100 becomes higher than that at the start of energization, and a voltage decreases. On the other hand, since the ion concentration of the water in water softening device 1100 is low at the start of the energization, the voltage is high. Therefore, in a case where the current value is made constant from the start of the energization, the voltage at the start of the energization is high, and the voltage gradually decreases with the lapse of the energization time.

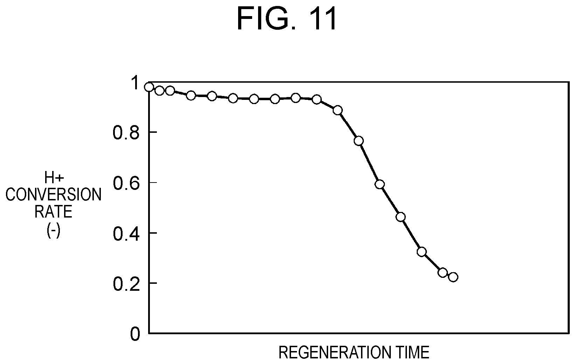

At the end of the regeneration process, as concentrations of (R-COO⁻)₂Ca²⁺ and R₃-NH⁺Cl⁻ in Equations (13) and (14) in Fig. 10 decrease, a regeneration rate decreases. As a result, a consumption ratio of the fed hydrogen ions decreases, and a conversion rate decreases as illustrated in Fig. 11. In a case where the hydrogen ions or hydroxide ions having a concentration higher than or equal to a concentration that can be consumed by the resin are fed to weakly acidic cation exchange resin 1213 or weakly basic anion exchange resin 1214 when the consumption ratio is low, the hydrogen ions and the hydroxide ions react with each other without reacting with the ions in the resin, resulting in loss.

That is, in consideration of voltage characteristics at an initial stage of the regeneration process described above, it is preferable to gradually increase the current instead of immediately increasing the current value to the current value determined by adsorption amount estimation unit 1111 at the time of current application. As a result, the voltage can be suppressed to be low, and thus, the power consumption is reduced.

In addition, at the end of the regeneration process, it is preferable to gradually decrease the current in consideration of reaction characteristics of the resin. As a result, excessive ions can be suppressed from reacting with each other, waste of the current is reduced, and the power consumption can be reduced.

Timer 1113 is used to achieve such a temporal change in applied current.

Storage 1112 stores, as reference times indicating timings for changing the current, a first reference value at which the current is to be maximized, and a second reference value at which a decrease from the maximum value is to be started. The first reference value is set to about 30 minutes to 1 hour from the start of the energization. The second reference value is set to a time later than the first reference value and 30 minutes to 1 hour before the end of the energization.

Since the current and the time necessary for the regeneration process are determined based on the adsorbed hardness as indicated in Equation (12), when a time from the start of the energization to the first reference value and a time from the end of the energization to the second reference value are lengthened, it is necessary to increase a maximum current value or the regeneration time.

Timer 1113 measures the elapsed time from the start of the current application to first electrode 1201 and second electrode 1202. When the elapsed time measured by timer 1113 reaches the first reference value, controller 1110 stops increasing the applied current value and maintains the present current value. Thereafter, when the elapsed time measured by timer 1113 reaches the second reference value, controller 1110 decreases the applied current value. The increase in current value from the start of the energization to the first reference value or the decrease in current value from the second reference value to the end of the energization may be changed linearly or stepwise.

In the regeneration process, the determined current value is applied to first electrode 1201 and second electrode 1202 for the determined energization time, and the regeneration of weakly acidic cation exchange resin 1213 and weakly basic anion exchange resin 1214 is performed.

After the end of the regeneration process, the ions released from weakly acidic cation exchange resin 1213 and weakly basic anion exchange resin 1214 are present at a high concentration in water softening chamber 1209 and neutralization chamber 1210. Therefore, it is necessary to perform a cleaning operation in water softening device 1100. In a case where cleaning is insufficient, the remaining ions are mixed in the water during the water softening process, and thus, there is a possibility that water softening becomes insufficient. Therefore, the cleaning process is performed after the end of the regeneration process.

In the cleaning process, in water softening device 1100, soft water supply tube opening and closing valve 1106 is closed and drain tube opening and closing valve 1108 is opened. As a result, the water in water softening chamber 1209 and neutralization chamber 1210 is drained to the outside of water softening device 1100 via drain pipe 1107. When the raw water flows in through raw water supply tube 1104, the regeneration process can be resumed.

When the end of the cleaning process is determined by time, a cleaning time, which is a time from the start to the end of the cleaning process, is set to be longer than a residence time, which is a time from inflow of the raw water into water softening chamber 1209 to outflow of the raw water from neutralization chamber 1210. As a result, the water containing a large amount of desorbed hardness ions existing in water softening chamber 1209 can be discharged, and the water in water softening chamber 1209 can be replaced with the raw water.

In the regeneration process, solid calcium carbonate or the like adheres to an electrode surface of second electrode 1202. When a precipitation amount of calcium carbonate on the electrode surface increases, problems such as a problem that the voltage increases at the time of the energization and a problem that calcium carbonate is hardly peeled off from the electrode surface occur. Therefore, it is necessary to periodically perform the electrode cleaning process of removing calcium carbonate on a surface of the cathode.

In the electrode cleaning process, first electrode 1201 is connected to the negative electrode, and second electrode 1202 is connected to the positive electrode. That is, electrode cleaning is performed by operating with a polarity of the electrode reversed from that in the regeneration process. By the operation, H⁺ is produced from second electrode 1202, and calcium carbonate on the surface of second electrode 1202 reacts with H⁺ to be dissolved. The electrode cleaning process is performed during the regeneration process or after the end of the regeneration process.

As described above, in water softening device 1100, the softening of the raw water by the water softening process and the maintenance of water softening device 1100 by the regeneration process, the cleaning process, and the electrode cleaning process are repeatedly performed.

### (Third exemplary embodiment)

Water softening device 1100b according to a third exemplary embodiment of the present disclosure is different from that of the second exemplary embodiment in that electrolytes other than hydrogen ions and hydroxide ions are fed to a water softening chamber and a neutralization chamber in a regeneration process. Other configurations are the same as those of water softening device 1100 according to the second exemplary embodiment. Hereinafter, description of the matters having been already described in the second exemplary embodiment will be omitted as appropriate, and differences from the second exemplary embodiment will be mainly described.

In a case where an electrolyte concentration of water in water softening device 1100b is low during the regeneration process, particularly at the start of energization, a voltage when first electrode 1201 and second electrode 1202 are energized increases, which causes a problem that a predetermined current cannot be applied or a problem that power consumption increases.

Therefore, in the present exemplary embodiment, the electrolyte is supplied to reduce a resistance of the water during electrolysis in the regeneration process. Specifically, the electrolyte in raw water is used by supplying the raw water. Water softening device 1100b is mainly used in a hard-water zone. Since the raw water in the hard-water zone contains many ions including hardness ions at a high concentration, ions in the raw water before water softening can be used as the electrolyte at the start of the regeneration process by supplying the raw water.

An electrolyte supply method in the regeneration process using the raw water will be described.

Before the start of energization of first electrode 1201 and second electrode 1202 in the regeneration process, water softening device 1100b is filled with the raw water. Specifically, after soft water supply tube opening and closing valve 1106 is closed, drain tube opening and closing valve 1108 is opened, so that the raw water is supplied to water softening device 1100b by a tap water pressure. That is, water softening device 1100b includes raw water supply tube 1104 as an electrolyte supply unit.

After the lapse of a certain time from the start of the supply, drain tube opening and closing valve 1108 is closed to end the drainage. Thereafter, the energization of first electrode 1201 and second electrode 1202 is started. When an elapsed time from the introduction of the raw water into water softening device 1100b to the start of energization becomes long, ions in the raw water are adsorbed to weakly acidic cation exchange resin 1213 or weakly basic anion exchange resin 1214. Therefore, it is preferable to start the energization as early as possible after drain tube opening and closing valve 1108 is closed. A time during which drain tube opening and closing valve 1108 is opened is suitably longer than or equal to a time for replacing the water in water softening device 1100b, and may be several minutes in a case where tap water is used for home use.

### (Fourth exemplary embodiment)

Water softening device 1100c according to a fourth exemplary embodiment of the present disclosure is different from that of the third exemplary embodiment in that water softening device 1100c includes chemical slow-release part 1302 serving as an electrolyte feeder that feeds an electrolyte other than hydrogen ions and hydroxide ions as a chemical to raw water flowing through water softening chamber 1209 and neutralization chamber 1210 in a regeneration process. Other configurations are the same as those of water softening device 1100b according to the third exemplary embodiment. Hereinafter, description of the matters having been already described in the third exemplary embodiment will be omitted as appropriate, and differences from the third exemplary embodiment will be mainly described.

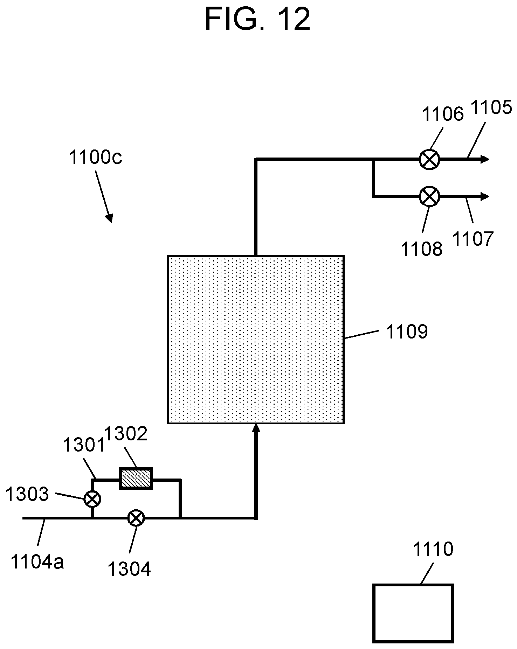

Water softening device 1100c according to the present exemplary embodiment will be described with reference to Fig. 12.

Fig. 12 is a conceptual diagram illustrating a configuration of water softening device 1100c according to the present exemplary embodiment. Note that Fig. 12 conceptually illustrates each element of water softening device 1100c.

Raw water supply tube 1104a is a tube connecting a water supply source of raw water, such as a waterworks, and water introduction part inlet 1207, and chemical addition pipe 1301 branches at a branch point provided in the middle of a flow path (raw water supply tube 1104a), and chemical addition pipe 1301 is connected again at a junction positioned downstream of the branch point.

Soft water supply tube 1105 includes soft water supply tube opening and closing valve 1106 provided at a portion positioned downstream of a branch point for drain pipe 1107.

Raw water supply tube 1104a includes raw water supply tube opening and closing valve 1304 positioned downstream of the branch point for chemical addition pipe 1301 and upstream of the junction.

Chemical addition pipe 1301 is a pipe that bypasses from the branch point to the junction of raw water supply tube 1104a, and includes chemical addition pipe opening and closing valve 1303 and chemical slow-release part 1302 on a flow path.

Chemical slow-release unit 1302 is provided downstream of chemical addition pipe opening and closing valve 1303, and adds a chemical to the raw water flowing into chemical addition pipe 1301. Accordingly, the electrolyte is supplied to the raw water. As the chemical to be added, any reagent that is harmless to a human body can be used, and specifically, a food-grade reagent is preferable. Examples of the chemical include sodium sulfate, sodium chloride, calcium chloride, and sodium polyphosphate. A polarity is not particularly limited, but neutral salts having a neutral pH are preferable for use as domestic water, and among the neutral salts, sulfates or phosphates having a small influence on a life of an anode are more preferable.

Raw water supply tube opening and closing valve 1304 is a valve which is provided on raw water supply tube 1104a and of which the degree of opening is adjustable, and an electrolyte concentration in the raw water can be adjusted by opening and closing raw water supply tube opening and closing valve 1304 or adjusting the degree of opening of raw water supply tube opening and closing valve 1304.

In a case where it is desired to increase the electrolyte concentration in the raw water, raw water supply tube opening and closing valve 1304 is closed when chemical addition pipe opening and closing valve 1303 is opened. As a result, all the raw water flowing into casing 1109 passes through chemical slow-release part 1302, and thus, water containing a higher concentration of electrolyte than the original raw water is obtained.

On the other hand, in a case where it is desired to decrease the electrolyte concentration in the raw water, raw water supply tube opening and closing valve 1304 is also opened when chemical addition pipe opening and closing valve 1303 is opened. As a result, only a part of the raw water flowing into casing 1109 passes through chemical slow-release part 1302, and the remaining raw water does not pass through chemical slow-release part 1302, as a result of which water having an electrolyte concentration that is higher than that of the raw water and is lower than that when raw water supply tube opening and closing valve 1304 is closed is obtained.

A flow path during a water softening process and a flow path configuration during the regeneration process in the fourth exemplary embodiment will be described.

In the water softening process, raw water supply tube opening and closing valve 1304 and soft water supply tube opening and closing valve 1106 are opened, chemical addition pipe opening and closing valve 1303 and drain tube opening and closing valve 1108 are closed, and the raw water is introduced into water softening device 1100c. As a result, the raw water is softened as in the second exemplary embodiment.

In the regeneration process, before the raw water is supplied, soft water supply tube opening and closing valve 1106 is closed, and drain tube opening and closing valve 1108 and chemical addition pipe opening and closing valve 1303 are opened. In order to prevent mixing of the chemical into soft water supply tube 1105, it is preferable to close soft water supply tube opening and closing valve 1106 before opening drain tube opening and closing valve 1108 and chemical addition pipe opening and closing valve 1303. As the raw water is supplied in this state, since chemical addition pipe opening and closing valve 1303 is opened, the chemical is released from chemical slow-release part 1302 to the raw water, and the chemical is dissolved in the raw water to become electrolyte-containing water containing a high concentration of electrolyte.

In a state in which the electrolyte-containing water fills water softening device 1100c, electrolysis is performed by first electrode 1201 and second electrode 1202, and regeneration of the ion exchange resin proceeds. After the lapse of a certain time from the start of the electrolysis, drain tube opening and closing valve 1108 and chemical addition pipe opening and closing valve 1303 are closed. In order to reduce a tap water pressure applied to water softening device 1100c, it is preferable to close drain tube opening and closing valve 1108 after first closing chemical addition pipe opening and closing valve 1303. In addition, a time during which the electrolyte-containing water flows through water softening device 1100c, that is, a time during which drain tube opening and closing valve 1108 is opened is appropriately longer than or equal to a time for replacing the water in water softening device 1100c, and may be several minutes in a case where tap water is used for home use.

### (Fifth exemplary embodiment)

Water softening device 1100d according to a fifth exemplary embodiment of the present disclosure is different from the third exemplary embodiment in that wastewater discharged after a previous regeneration process is used as an electrolyte at the start of energization in a regeneration process. Other configurations are the same as those of water softening device 1100b according to the third exemplary embodiment. Hereinafter, description of the matters having been already described in the third exemplary embodiment will be omitted as appropriate, and differences from the third exemplary embodiment will be mainly described.

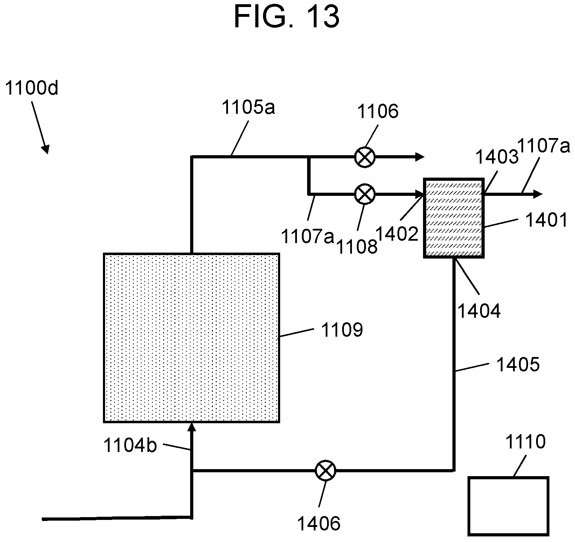

Water softening device 1100d according to the present exemplary embodiment will be described with reference to Fig. 13.

Fig. 13 is a conceptual diagram illustrating a configuration of water softening device 1100d according to the present exemplary embodiment. Note that Fig. 13 conceptually illustrates each element of water softening device 1100d.

Raw water supply tube 1104b is a pipe connecting a water supply source of raw water, such as a waterworks, and water introduction part inlet 1207, and is connected to regenerated water return pipe 1405 described below at a junction provided in the middle of a flow path.

Soft water supply tube 1105a is a tube connecting water supply part outlet 1206 and a supply destination of soft water, and drain pipe 1107a branches in the middle of the flow path. Soft water supply tube 1105a includes soft water supply tube opening and closing valve 1106 provided at a portion positioned downstream of a branch point for drain pipe 1107a.

Drain pipe 1107a is a pipe branching from soft water supply tube 1105a at a position upstream of soft water supply tube opening and closing valve 1106, and is a pipe for drainage during the regeneration process. Drain pipe 1107a includes drain tube opening and closing valve 1108 on a flow path, is connected to soft water supply tube 1105a at one end, and is connected to storage chamber 1401 at the other end.

Storage chamber 1401 is a tank that stores cleaning water drained from water softening chamber 1209 and neutralization chamber 1210 during a cleaning process described below, and includes inflow port 1402, first water supply port 1403, and second water supply port 1404.

Inflow port 1402 is an opening for introducing water into storage chamber 1401, and is connected to drain pipe 1107a. Inflow port 1402 is preferably provided at an upper portion of a housing in storage chamber 1401.

First water supply port 1403 is an opening for discharging the water in storage chamber 1401 to the outside of water softening device 1100d, and is connected to drain pipe 1107a through which wastewater flows. First water supply port 1403 is preferably provided at the upper portion of the housing in storage chamber 1401.

Second water supply port 1404 is an opening for delivering the water in storage chamber 1401 to regenerated water return pipe 1405, the opening being connected to regenerated water return pipe 1405 described below.

Regenerated water return pipe 1405 is a pipe having one end connected to second water supply port 1404 and the other end connected to raw water supply tube 1104b, and is a pipe for supplying the wastewater in storage chamber 1401 to raw water supply tube 1104b. Regenerated water return pipe 1405 includes regenerated water return pipe opening and closing valve 1406 in the middle of a flow path.

That is, water softening device 1100d includes storage chamber 1401 as an electrolyte supply unit.

A flow path during a water softening process and a flow path configuration during the regeneration process in the fifth exemplary embodiment will be described.

In the water softening process, soft water supply tube opening and closing valve 1106 is opened, drain tube opening and closing valve 1108 and regenerated water return pipe opening and closing valve 1406 are closed, and the raw water is introduced into water softening device 1100d. As a result, the raw water is softened as in the second exemplary embodiment.

In the regeneration process, before the raw water is supplied, soft water supply tube opening and closing valve 1106 is closed, and drain tube opening and closing valve 1108 and regenerated water return pipe opening and closing valve 1406 are opened. By such an opening and closing operation, a part of the raw water introduced through raw water supply tube 1104 flows out of water softening device 1100d through first water supply port 1403 of storage chamber 1401, and the remaining raw water passes through storage chamber 1401, passes through regenerated water return pipe 1405 from second water supply port 1404, and is supplied into casing 1109 again. According to such a configuration, the water in storage chamber 1401 can be supplied into casing 1109 by using a tap water pressure, and it is thus not necessary to provide a pump.

Since the wastewater discharged after the regeneration process contains a large amount of ions released in the process, an electrolyte concentration in the raw water can be increased by utilizing the wastewater and supplying the wastewater to the raw water. Since the ions released from the resin in the regeneration process are ions originally contained in the raw water, the ions can be used without any problem from the viewpoint of safety.

A timing at which the wastewater containing the electrolyte is to be stored in storage chamber 1401 is the cleaning process performed after the regeneration process.

The cleaning process is a process of discharging, from water softening chamber 1209, cations released from weakly acidic cation exchange resin 1213 by the regeneration process, and discharging, from neutralization chamber 1210, anions released from weakly basic anion exchange resin 1214.

At an initial stage of the cleaning process, the water containing ions released from the resin at a high concentration is discharged from casing 1109, but as the cleaning progresses, the ion concentration in the wastewater decreases, and the ion concentration becomes close to that of the raw water. Therefore, from the viewpoint of increasing the electrolyte concentration when first electrode 1201 and second electrode 1202 are energized, it is preferable to keep the water in the initial stage of the cleaning process in storage chamber 1401 as much as possible. By providing inflow port 1402 and first water supply port 1403 above the housing of storage chamber 1401, a structure in which the water in storage chamber 1401 is easily retained is obtained, and the water at the initial stage of cleaning is easily retained at a lower portion of storage chamber 1401.

### (Sixth exemplary embodiment)

Water softening device 1100e according to a sixth exemplary embodiment of the present disclosure is different from that of the second exemplary embodiment in that water softening device 1100e includes a plurality of water softening modules. Other configurations are the same as those of water softening device 1100 according to the second exemplary embodiment. Hereinafter, description of the matters having been already described in the second exemplary embodiment will be omitted as appropriate, and differences from the second exemplary embodiment will be mainly described.

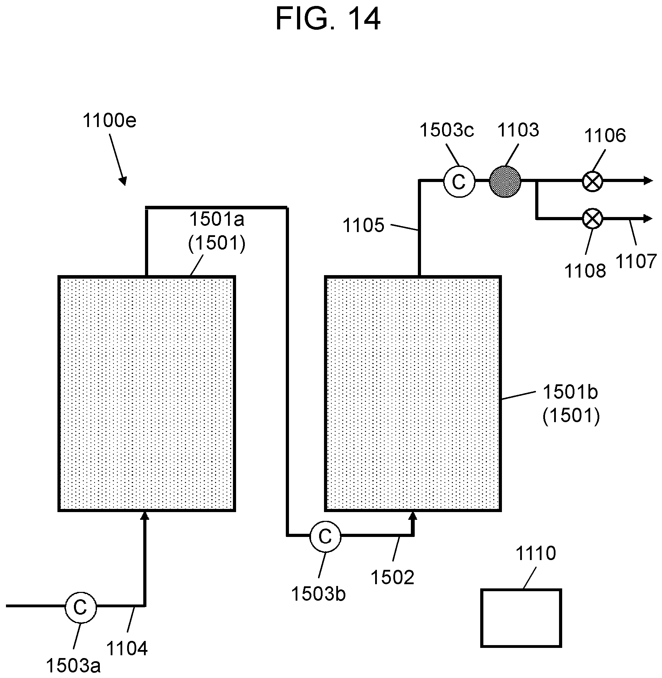

Water softening device 1100e according to the present exemplary embodiment will be described with reference to Fig. 14.

Fig. 14 is a conceptual diagram illustrating a configuration of water softening device 1100e according to the present exemplary embodiment. Note that Fig. 14 conceptually illustrates each element of water softening device 1100e.

Water softening device 1100e includes the plurality of water softening modules. In the present exemplary embodiment, water softening device 1100e includes two water softening modules 1501 (water softening module 1501a and water softening module 1501b).

Water softening module 1501 includes casing 1109 and the configuration in casing 1109 in the second exemplary embodiment, and specifically includes at least a water softening chamber, a neutralization chamber, and a diaphragm.

Water softening module 1501a provided at an upstream position and water softening module 1501b provided at a downstream position are connected by connection tube 1502 which is a pipe. Specifically, water introduction part inlet 1207 of water softening module 1501a is connected to raw water supply tube 1104, and water supply part outlet 1206 is connected to connection tube 1502. In addition, water introduction part inlet 1207 of water softening module 1501b is connected to connection tube 1502, and water supply part outlet 1206 is connected to soft water supply tube 1105.

Conductivity meter 1503a is provided in raw water supply tube 1104, conductivity meter 1503b is provided in connection tube 1502, and conductivity meter 1503c is provided in soft water supply tube 1105.

Conductivity meter 1503a measures a conductivity of water flowing through raw water supply tube 1104, that is, water flowing into water softening module 1501a.

Conductivity meter 1503b measures a conductivity of water flowing through connection tube 1502, that is, water flowing out of water softening module 1501a.

Conductivity meter 1503c measures a conductivity of water flowing through soft water supply tube 1105, that is, water flowing out of water softening module 1501b.

In a case where the water softening modules are coupled in multiple stages, ion adsorption amounts of the respective water softening modules often do not coincide with each other. For example, in a case where two water softening modules are coupled to each other, raw water flows into the water softening module at the preceding stage, and water whose hardness has decreased by water softening treatment performed at the preceding stage flows into the water softening module at the subsequent stage.

As indicated by Equation (11) illustrated in Fig. 10, when the hardness of the water decreases, a reaction rate of hardness adsorption decreases, as a result of which an amount of hardness adsorbed to water softening chamber 1209 decreases. The adsorption amount to neutralization chamber 1210 similarly decreases. Therefore, when the ion adsorption amounts of the respective water softening modules are compared, the adsorption amount to the water softening module at the preceding stage is larger than the adsorption amount to the water softening module at the subsequent stage. Therefore, it is desirable to set a current value or an energization time in consideration of the degree of consumption of the resin of each water softening module, which leads to a reduction in power consumption. Therefore, in water softening device 1100e, an optimum current value and current application time are calculated for each water softening module during a regeneration process.

In the regeneration process, the conductivity of the water flowing through each flow path is measured by a corresponding one of conductivity meter 1503a, conductivity meter 1503b, and conductivity meter 1503c, and a difference in conductivity between before and after flowing through each water softening module is calculated. Water amount measurement unit 1103 measures an integrated amount of water flowing through the water softening module. The current value and the energization time necessary for regeneration of the water softening chamber and the neutralization chamber of each water softening module are calculated based on the obtained difference in conductivity and the integrated amount of flowing water.

### (Seventh exemplary embodiment)

Water softening device 1100f according to a seventh exemplary embodiment of the present disclosure is different from that of the second exemplary embodiment in that a drainage process of performing drainage in the device is performed in order to reduce an ion concentration of water in water softening device 1100f during a regeneration process. Other configurations are the same as those of water softening device 1100 according to the second exemplary embodiment. Hereinafter, description of the matters having been already described in the second exemplary embodiment will be omitted as appropriate, and differences from the second exemplary embodiment will be mainly described.

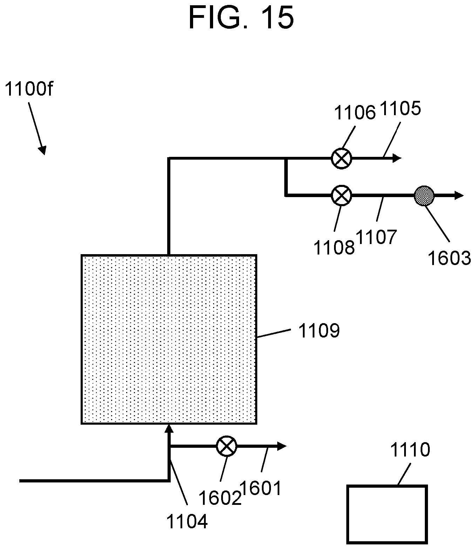

Water softening device 1100f according to the present exemplary embodiment will be described with reference to Fig. 15. Fig. 15 is a conceptual diagram illustrating a configuration of water softening device 1100f according to the present exemplary embodiment. Note that Fig. 15 conceptually illustrates each element of water softening device 1100f.

Water softening device 1100f includes an upstream drain tube 1601.

Upstream drain tube 1601 is a pipe branching from raw water supply tube 1104, and is a pipe for draining water in water softening device 1100f in the drainage process. Upstream drain tube 1601 includes drain valve 1602.

Drain valve 1602 is a valve provided on upstream drain tube 1601, and the water in water softening device 1100f is drained through upstream drain tube 1601 to the outside of water softening device 1100f when drain valve 1602 is opened.

Drained water amount measurement unit 1603 is provided on drain pipe 1107. Drained water amount measurement unit 1603 measures an amount of water flowing into drain pipe 1107.

Water softening device 1100f performs the drainage process of draining the water in water softening device 1100f in order to reduce an ion concentration of the water in water softening device 1100f during the regeneration process. The reason of the above is described.

In the regeneration process, as an energization time of first electrode 1201 and second electrode 1202 increases, a concentration of cations such as Ca²⁺ and Mg²⁺ ions and a concentration of anions such as Cl⁻ and SO₄²⁻ in regenerated water increase. When the concentrations of the ions increase, the concentrations of Ca²⁺ and Cl⁻ in Equations (13) and (14) in Fig. 10 increase, and a rate of a reaction that is reverse to a reaction for regenerating an ion exchange resin increases. As a result, ions desorbed from each ion exchange resin inhibit the regeneration reaction of weakly acidic cation exchange resin 1213 and weakly basic anion exchange resin 1214. In the configuration of the present disclosure, the regeneration reaction proceeds even when the drainage is not performed. However, efficiency of the regeneration reaction can be improved when the drainage for reducing the concentration is performed.

A drainage timing in the drainage process is determined by timer 1113. Specifically, in a case where an elapsed time from the start of the regeneration process measured by timer 1113 exceeds a certain time, controller 1110 opens drain valve 1602 and drains the water having an increased ion concentration and existing in water softening device 1100f to the outside through upstream drain tube 1601. As a result, the ion concentration of the water in water softening device 1100f decreases, and regeneration efficiency in the regeneration process is improved.

In a case where the drainage timing is determined based on the elapsed time from the start of the regeneration process, it is preferable to increase a frequency of drainage from the start of regeneration to the middle stage of regeneration and to decrease the frequency in the latter half of regeneration.

As illustrated in Fig. 11, since the reaction efficiency is high up to the middle stage of the regeneration process, a temporal change in desorbed ion concentration is large. On the other hand, since the reaction efficiency is low in the latter half of the regeneration process, the temporal change in desorbed ion concentration is small. Therefore, the frequency of drainage in the latter half of the regeneration process may be lower than that in the middle stage of the regeneration process. In other words, with the progress of the regeneration process, it is preferable to increase a time interval of performing the drainage process. In consideration of both reduction of a drainage amount and reduction of reaction inhibition due to the desorbed ions, a drainage interval is preferably about 30 minutes. For example, the drainage process is performed once every 20 minutes until the middle stage of the regeneration process, and the drainage process is performed once every 40 minutes in the latter half of the regeneration process.

Once the drainage is completed, controller 1110 closes drain valve 1602, and then opens drain tube opening and closing valve 1108. As a result, raw water flows in from the outside of water softening device 1100f, the raw water is filled in water softening device 1100f, and the regeneration process can be performed again. A timing to end the inflow of the raw water is determined by drained water amount measurement unit 1603. Specifically, the inflow ends at a time point at which an inflow water amount from the start of the drainage process measured by drained water amount measurement unit 1603 has become larger than a total volume of water softening chamber 1209 and neutralization chamber 1210.

From above, the present disclosure has been described based on the exemplary embodiments. It is understood by those skilled in the art that these exemplary embodiments are merely examples, and that various modifications can be made to combinations of the components or the processing processes, and that such modifications are also within the scope of the present disclosure.

### (Modification)

In the second exemplary embodiment, water amount measurement unit 1103 is provided on soft water supply tube 1105, but a position of water amount measurement unit 1103 is not limited thereto. For example, even in a case where water amount measurement unit 1103 is provided in the middle of raw water supply tube 1104, an amount of water flowing through water softening device 1100 can be measured.

In the second exemplary embodiment, for specifying an amount of ions adsorbed to water softening device 1100 by an adsorption amount estimation unit, a method of calculating a concentration of ions adsorbed to water softening device 1100 based on a difference in conductivity measured by raw water conductivity measurement unit 1101 and soft water conductivity measurement unit 1102, and multiplying the decreased ion concentration by a total amount of flowing water measured by water amount measurement unit 1103 is used, but the method is not limited thereto.

For example, a method of calculating the ion concentration of the raw water based on the conductivity measured by raw water conductivity measurement unit 1101, and multiplying the calculated ion concentration of the raw water by the total amount of flowing water measured by water amount measurement unit 1103 may be used. With such a calculation method, it is possible to specify an amount of adsorbed ions according to a water quality variation of the raw water without providing soft water conductivity measurement unit 1102.

Alternatively, a method of multiplying the total amount of flowing water measured by water amount measurement unit 1103 by the ion concentration measured in advance may be used. With such a calculation method, it is possible to specify the amount of adsorbed ions adsorbed to water softening device 1100 without providing raw water conductivity measurement unit 1101 and soft water conductivity measurement unit 1102.

In the second exemplary embodiment, a current value to be applied is controlled based on an elapsed time from the start of energization measured by timer 1113, but the control of the current value is not limited thereto. For example, the current value to be applied may be controlled using a voltage measurement unit that measures a voltage and a temporal change amount of the voltage when first electrode 1201 and second electrode 1202 are energized. When the current value is changed using the voltage measurement unit, the temporal change amount of the voltage is measured and the current is changed. At the start of the energization, a current lower than a target current value determined by adsorption amount estimation unit 1111 is applied, and the current is increased at a time point at which the temporal change amount of the voltage has decreased. Then, a step of further increasing the current at a time point at which the temporal change amount of the voltage has decreased is repeated. The current is preferably increased in about 10 steps. The reason is that, although dependent on an amount by which the current increases, the voltage becomes constant about five minutes after the current value increase although depending on the current value increase amount.

In the second exemplary embodiment, an end timing of the cleaning process is determined by time, but the determination of the end timing is not limited thereto. For example, the end timing of the cleaning process can be determined by drained water amount measurement unit 1603 installed in drain pipe 1107. It is sufficient if the drainage process ends in a case where a water amount from the start of the drainage process measured by drained water amount measurement unit 1603 is larger than or equal to the volumes of water softening chamber 1209 and neutralization chamber 1210.

In addition, the end timing of the cleaning process may be determined by a wastewater conductivity measurement unit installed in drain pipe 1107. The wastewater conductivity measurement unit measures a conductivity of wastewater flowing out of water softening device 1100 during the cleaning process. Since the cleaning process is performed using the raw water, in a case where the desorbed ions in water softening device 1100 can be discharged to the outside of water softening device 1100, a hardness of the water to be drained becomes lower than or equal to a hardness of the raw water. It is sufficient if the cleaning process ends when the conductivity of the wastewater becomes lower than or equal to the conductivity of the raw water by measuring the conductivity of the wastewater using the wastewater conductivity measurement unit, and comparing the conductivity of the wastewater with the conductivity measured by raw water conductivity measurement unit 1101.

In the seventh exemplary embodiment, a timing of performing the drainage is determined based on the elapsed time from the start of the regeneration process measured by timer 1113. However, the determination of the timing is not limited to this. For example, the timing of performing the drainage may be determined using a regenerated water conductivity measurement unit that measures a conductivity of water in water softening device 1100f and a temporal change amount of the conductivity. In this case, when the conductivity measured by the regenerated water conductivity measurement unit exceeds a certain value, controller 1110 controls opening and closing of drain tube opening and closing valve 1108 or drain valve 1602 to perform drainage from water softening device 1100f.

In a case where the timing of the drainage is determined by the conductivity measurement unit, when the conductivity exceeds a certain value, the drain pipe opening and closing valve on drain pipe 1107 is opened, and is closed after a predetermined time elapses. Examples of a location where the conductivity is measured include the water introduction part in which hardness ions are likely to be retained. The reason is that the hardness ions desorbed from weakly acidic cation exchange resin 1213 by regeneration are diffused into the water introduction part and are likely to be retained in the water introduction part, and regeneration of weakly acidic cation exchange resin 1213 is more likely to be inhibited by the desorbed ions than that of weakly basic anion exchange resin 1214.

The conductivity of a certain value as a reference for performing the drainage is not particularly limited, but is desirably about 3 mS/cm. When the conductivity of the water in the water introduction part reaches 3 mS/cm in the regeneration process, the hardness increases to approximately 1000 mg/L. Although the regeneration of weakly acidic cation exchange resin 1213 proceeds even when the hardness is higher than 1000 mg/L, the efficiency decreases due to an influence of the reverse reaction. Therefore, in a case where the drainage is performed when the conductivity reaches about 3 mS/cm, an effect of preventing the reverse reaction can be further obtained.

The water softening device according to the present disclosure is useful as a water softening device or the like because the drainage amount can be reduced by decreasing the frequency of the drainage or making the drainage itself unnecessary, and shortening of a regeneration time and an increase of an electrode life can be achieved as secondary effects.

### (Eighth exemplary embodiment)

The technology described in PTL 1 has a problem that the hardness ions desorbed from the ion exchange resin are re-adsorbed to the ion exchange resin, as a result of which a reaction at the time of resin regeneration is easily inhibited.

The present disclosure has been made in view of such a problem of the related art. The present disclosure provides a water softening device capable of efficiently regenerating a resin.

A water softening device according to the present disclosure includes: a water softening chamber that contains a weakly acidic cation exchange resin and generates soft water from raw water containing hardness components; a neutralization chamber that is positioned on an outer periphery of the water softening chamber, contains a weakly basic anion exchange resin, and neutralizes the soft water; a diaphragm that serves as a partition between the water softening chamber and the neutralization chamber while allowing the soft water to flow through the diaphragm; a water introduction part that is positioned on an inner periphery of the water softening chamber and supplies the raw water to the water softening chamber; a water supply part that supplies neutralized soft water generated in the neutralization chamber to the outside; and a controller that controls regeneration of the weakly acidic cation exchange resin. The controller performs: a water softening process of obtaining the neutralized soft water by allowing the raw water to flow in from the water introduction part and allowing the raw water to sequentially flow through the water softening chamber and the neutralization chamber; a regeneration process of performing water electrolysis after the water softening process is performed for a predetermined period of time and regenerating the weakly acidic cation exchange resin by using produced hydrogen ions; and a drainage process of discharging, from the water softening chamber, cations released from the weakly acidic cation exchange resin by the regeneration process and discharging, from the neutralization chamber, anions released from the weakly basic anion exchange resin. In the drainage process, water containing the cations is discharged from the water introduction part. According to the present disclosure, it is possible to provide the water softening device capable of efficiently regenerating a resin.

Hereinafter, exemplary embodiments of the present disclosure will be described with reference to the drawings. Note that the following exemplary embodiments are examples embodying the present disclosure, and do not limit the technical scope of the present disclosure. In addition, the drawings described in the respective exemplary embodiments are schematic representations, and the ratios of the sizes and the thicknesses of the components in each of the drawings do not necessarily reflect the actual dimensional ratio.

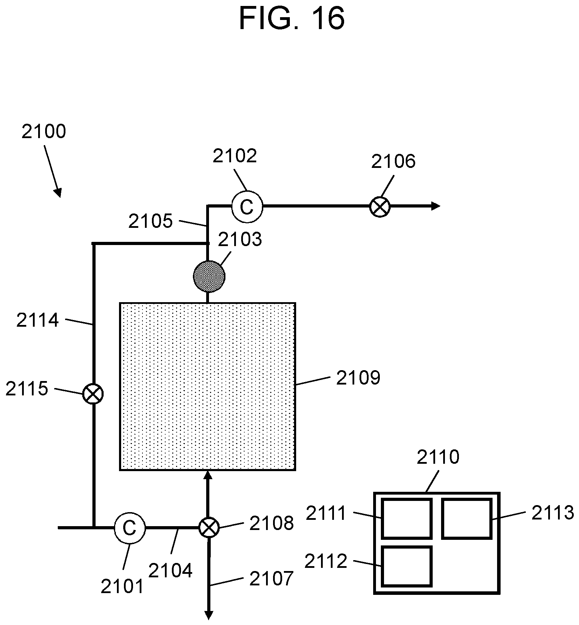

Water softening device 2100 according to an eighth exemplary embodiment of the present disclosure will be described with reference to Figs. 16, 17, and 18.

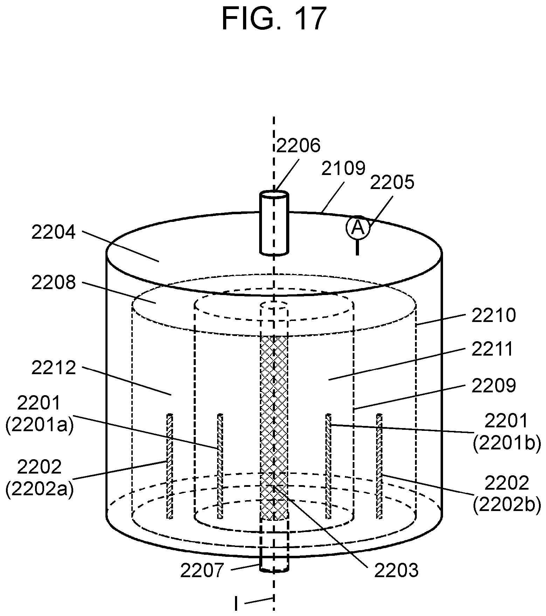

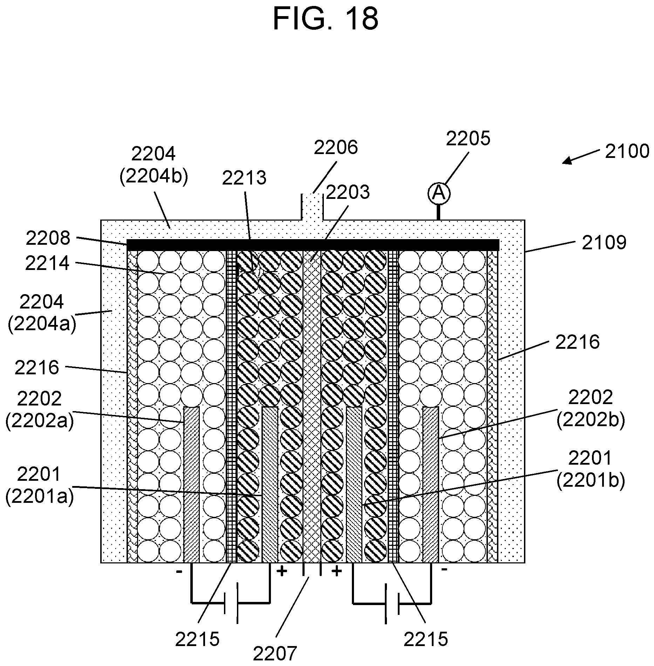

Fig. 16 is a schematic diagram illustrating a configuration of water softening device 2100 according to the eighth exemplary embodiment of the present disclosure. Fig. 17 is a perspective view illustrating a configuration of water softening device 2100 according to the eighth exemplary embodiment of the present disclosure. Fig. 18 is a cross-sectional view illustrating the configuration of water softening device 2100 according to the eighth exemplary embodiment of the present disclosure. Note that Figs. 16 to 18 conceptually illustrate each element of water softening device 2100. In Fig. 17, weakly acidic cation exchange resin 2213 and weakly basic anion exchange resin 2214 are omitted.

Water softening device 2100 is a device that generates neutral soft water from raw water containing hardness components supplied from the outside. The raw water is water (water to be treated) introduced into water softening device 2100 from raw water supply tube 2104 described below, and is, for example, well water or tap water. The raw water contains the hardness components (for example, calcium or magnesium ions).

By performing the water softening process of softening the raw water using water softening device 2100, the neutral soft water having a reduced hardness can be obtained from the raw water having a high hardness, and the soft water can be used even in a zone where the hardness of the raw water is high.

In addition, water softening device 2100 performs the regeneration process of regenerating weakly acidic cation exchange resin 2213 and weakly basic anion exchange resin 2214 described below after performing the water softening process for a certain period of time. Details of the water softening process and the regeneration process will be described below.

As illustrated in Fig. 16, water softening device 2100 includes raw water supply tube 2104, drain pipe 2107, soft water supply tube 2105, bypass pipe 2114, casing 2109, and controller 2110.

Raw water supply tube 2104 is a tube connecting a water supply source of the raw water, such as a waterworks, and water introduction part inlet 2207 described below, and includes raw water conductivity measurement unit 2101 on a flow path thereof. Raw water supply tube 2104 is connected to drain pipe 2107 at a position downstream of raw water conductivity measurement unit 2101 and upstream of a connection point with water introduction part inlet 2207. Drain tube opening and closing valve 2108 is provided at the connection portion between raw water supply tube 2104 and drain pipe 2107.

Raw water conductivity measurement unit 2101 calculates a total ion concentration of the raw water flowing into raw water supply tube 2104. Information regarding the calculated total ion concentration of the raw water is transmitted to controller 2110 described below.

Drain pipe 2107 is a pipe branching from raw water supply tube 2104 at drain tube opening and closing valve 2108, and is a pipe for drainage during the drainage process described below.

Drain tube opening and closing valve 2108 is a valve provided at the connection portion between raw water supply tube 2104 and drain pipe 2107. By opening and closing drain tube opening and closing valve 2108, it is possible to switch between supplying the raw water from the water supply source to water introduction part inlet 2207 through raw water supply tube 2104 and draining water in casing 2109 described below to the outside of water softening device 2100 through raw water supply tube 2104 and drain pipe 2107.

Soft water supply tube 2105 is a tube connecting water supply part outlet 2206 described below and a supply destination of the soft water, and includes soft water conductivity measurement unit 2102, water amount measurement unit 2103, and soft water supply tube opening and closing valve 2106 on a flow path thereof.

Soft water conductivity measurement unit 2102 calculates a total ion concentration of the soft water delivered through water supply part outlet 2206 (see Fig. 17). Information regarding the calculated total ion concentration of the soft water is transmitted to controller 2110 described below.

As raw water conductivity measurement unit 2101 and soft water conductivity measurement unit 2102, any equipment capable of measuring a resistance of water can be used without any problem.

Water amount measurement unit 2103 is a member that measures an amount of water flowing through water softening device 2100, and can use equipment such as a water meter capable of measuring an integrated amount of water. Information regarding the measured amount of water is transmitted to controller 2110 described below.

Soft water supply tube opening and closing valve 2106 is a valve provided in soft water supply tube 2105. Whether or not to supply the soft water to the outside can be switched by opening and closing soft water supply tube opening and closing valve 2106.

Bypass pipe 2114 is a pipe branching from raw water supply tube 2104 at a position upstream of a connection portion between raw water supply tube 2104 and drain pipe 2107 and connected to soft water supply tube 2105 at a position upstream of soft water supply tube opening and closing valve 2106. During the drainage process and the cleaning process described below, the raw water is supplied from the supply source of the raw water to water supply part outlet 2206 through bypass pipe 2114. Bypass pipe 2114 includes bypass pipe opening and closing valve 2115 on a flow path.

Bypass pipe opening and closing valve 2115 is a valve provided on bypass pipe 2114. It is possible to supply the raw water from the water supply source to water supply part outlet 2206 through bypass pipe 2114 and soft water supply tube 2105 by opening and closing bypass pipe opening and closing valve 2115.

Casing 2109 is a hollow cylindrical member, and in casing 2109, the raw water is softened, and an ion exchange resin is regenerated.

As illustrated in Figs. 17 and 18, water introduction part 2203, water softening chamber 2209, neutralization chamber 2210, and water supply part 2204 are provided in a hollow space of casing 2109 in order from a side closer to central axis I connecting an upper surface and a lower surface of casing 2109 toward an outer peripheral direction. Water introduction part inlet 2207 is provided at a central portion of the lower surface of casing 2109, that is, on central axis I. Water supply part outlet 2206 is provided at a central portion of the upper surface of casing 2109, that is, on central axis I. Central axis I of casing 2109 coincides with respective central axes of water introduction part 2203, water softening chamber 2209, neutralization chamber 2210, and water supply part 2204.

Water introduction part inlet 2207 is provided on a bottom surface of casing 2109 and supplies the raw water to water introduction part 2203. A central axis of water introduction part inlet 2207 coincides with central axis I of casing 2109. Water introduction part inlet 2207 is communicably connected to raw water supply tube 2104.

Water introduction part 2203 is a cylindrical member and is connected to water introduction part inlet 2207 at a lower end. Water introduction part 2203 introduces the raw water into water softening device 2100 and supplies the raw water to water softening chamber 2209. A tube such as a pipe having a space therein, or a membrane having water permeability can be used as water introduction part 2203.

Water introduction part 2203 is configured to make the raw water introduced into water softening device 2100 uniformly flow into water softening chamber 2209 and neutralization chamber 2210. Specifically, water introduction part 2203 is provided at a central portion in casing 2109, and an outer periphery of water introduction part 2203 is in contact with water softening chamber 2209. In other words, water introduction part 2203 is positioned on central axis I.

Water introduction part 2203 is provided extending from lower portions to upper portions of water softening chamber 2209 and neutralization chamber 2210, more strictly, from lower ends to upper ends. A length of a portion of water introduction part 2203 where the raw water can be supplied to water softening chamber 2209 and neutralization chamber 2210 is equal to heights of water softening chamber 2209 and neutralization chamber 2210.

Water introduction part 2203 has a plurality of holes on a side surface and delivers the raw water through the holes toward the outer peripheral direction from central axis I of casing 2109, that is, to water softening chamber 2209. Furthermore, the plurality of holes are preferably provided uniformly in a circumferential direction of the side surface of water introduction part 2203. With such a configuration, the raw water introduced into the device can uniformly flow into water softening chamber 2209 and neutralization chamber 2210. Therefore, the raw water is uniformly supplied to particles of weakly acidic cation exchange resin 2213 filled in water softening chamber 2209 and particles of weakly basic anion exchange resin 2214 filled in neutralization chamber 2210. Therefore, weakly acidic cation exchange resin 2213 and weakly basic anion exchange resin 2214 can be efficiently used as a whole.

A diameter of each of the plurality of holes of water introduction part 2203 on the side surface is smaller than a particle diameter of each of the particles of weakly acidic cation exchange resin 2213. A lower limit value of the particle diameter of weakly acidic cation exchange resin 2213 is around 0.3 mm, and thus, the diameter of the hole provided on the surface of water introduction part 2203 is smaller than the lower limit value. As a result, it is possible to prevent outflow of the ion exchange resin from water softening chamber 2209 without hindering permeation of water.

Water softening chamber 2209 is a space (first space 2211) having a cylindrical shape, provided on an outer peripheral side of water introduction part 2203 with respect to central axis I of casing 2109 in casing 2109, and containing weakly acidic cation exchange resin 2213. The central axis of water softening chamber 2209 coincides with central axis I of casing 2109. Water softening chamber 2209 is in contact with water introduction part 2203 on an inner surface side of the cylindrical shape, is in contact with inner peripheral diaphragm 2215 which is a cylindrical membrane having water permeability on an outer surface side of the cylindrical shape, and is in contact with lid 2208 at an upper surface. Weakly acidic cation exchange resin 2213 is filled in water softening chamber 2209, and first electrode 2201 is provided in water softening chamber 2209.

Weakly acidic cation exchange resin 2213 is an ion exchange resin having a carboxyl group, and for example, one having a methacrylic-acid-based backbone or one having an acrylic-acid-based backbone can be used as weakly acidic cation exchange resin 2213. In the present exemplary embodiment, a resin having an acrylic-acid-based backbone is used as weakly acidic cation exchange resin 2213.

First electrode 2201 is not energized in the water softening process and acts as an anode in the regeneration process for weakly acidic cation exchange resin 2213. First electrode 2201 is surrounded by weakly acidic cation exchange resin 2213 in water softening chamber 2209. Here, the expression "being surrounded" indicates a state in which a surface of first electrode 2201 is in contact with a surface of weakly acidic cation exchange resin 2213 from an upper end to a lower end over an entire circumference. However, weakly acidic cation exchange resin 2213 usually has a spherical shape, and it is necessary to secure a water flow path for the raw water. Therefore, a state in which weakly acidic cation exchange resin 2213 is not in contact with the surface of first electrode 2201 without any gap, but is disposed over the entire circumference of first electrode 2201 while being partially in contact with the surface of first electrode 2201 also corresponds to a state in which "first electrode 2201 is surrounded by weakly acidic cation exchange resin 2213".

The upper end of first electrode 2201 is positioned below a water surface in water softening chamber 2209 at the start of the regeneration process. A plurality of first electrodes 2201 (for example, first electrode 2201a and first electrode 2201b) are provided in water softening chamber 2209 with equal distances between adjacent first electrodes 2201.

As a material of first electrode 2201, a noble metal or a noble metal alloy can be used. The reason is that first electrode 2201 containing a noble metal acts as a catalyst for water electrolysis and remains non-dissolving even under an acidic condition. Examples of the noble metal material include platinum, iridium, and ruthenium.

Examples of a form of the electrode include a noble-metal wire electrode, an electrode in which a noble-metal wire is wound around an outer periphery of a support, and a mesh-type noble-metal electrode. Examples of a form of the electrode further include a form in which a noble metal is applied to a surface of a rod that is made of a metal other than a noble metal, such as titanium (Ti), the rod being used as the support. However, in a case where a dissimilar metal interface exists, deterioration derived from the interface is likely to occur, and thus it is preferable to use a noble metal or a noble metal alloy alone.

Inner peripheral diaphragm 2215 is a membrane having water permeability, and is a diaphragm that serves as a partition between water softening chamber 2209 and neutralization chamber 2210 while allowing the soft water to flow through the diaphragm. In inner peripheral diaphragm 2215, an inner surface of inner peripheral diaphragm 2215 covers an outer surface of water softening chamber 2209 and is in contact with the outer surface of water softening chamber 2209. The outer surface of inner peripheral diaphragm 2215 covers an inner surface of neutralization chamber 2210 and is in contact with the inner surface of neutralization chamber 2210.

Therefore, inner peripheral diaphragm 2215 serves as a partition between water softening chamber 2209 and neutralization chamber 2210 while allowing the acidic soft water generated in water softening chamber 2209 to flow through inner peripheral diaphragm 2215. The expression "covering" only refers to being positioned around a target and does not require complete enclosure of the target.

Neutralization chamber 2210 is a space (second space 2212) having a cylindrical shape, provided on an outer peripheral side of water softening chamber 2209 with respect to central axis I of casing 2109 in casing 2109, and containing weakly basic anion exchange resin 2214. The central axis of neutralization chamber 2210 coincides with central axis I of casing 2109. Neutralization chamber 2210 is in contact with an outer surface of inner peripheral diaphragm 2215 on an inner surface side of the cylindrical shape, is in contact with an inner surface of outer peripheral diaphragm 2216 which is a cylindrical membrane having water permeability on an outer surface side of the cylindrical shape, and is in contact with lid 2208 at an upper surface. Weakly basic anion exchange resin 2214 is filled in neutralization chamber 2210, and a plurality of second electrodes 2202 (for example, second electrode 2202a and second electrode 2202b) are provided in neutralization chamber 2210.

Weakly basic anion exchange resin 2214 is an ion exchange resin having tertiary amines and quaternary amines as functional groups, and in the present exemplary embodiment, a resin having a higher proportion of tertiary amines than quaternary amines is used.

Second electrode 2202 is not energized in the water softening process and acts as a cathode in the regeneration process for weakly basic anion exchange resin 2214. Second electrode 2202 is surrounded by weakly basic anion exchange resin 2214 in neutralization chamber 2210.

Here, the expression "being surrounded" indicates a state in which a surface of second electrode 2202 is in contact with a surface of weakly basic anion exchange resin 2214 from an upper end to a lower end over an entire circumference. However, similarly to weakly acidic cation exchange resin 2213, weakly basic anion exchange resin 2214 usually has a spherical shape, and it is necessary to secure a water flow path for the raw water (strictly, acidic soft water). Therefore, a state in which weakly basic anion exchange resin 2214 is not in contact with the surface of second electrode 2202 without any gap, but is disposed over the entire circumference while being partially in contact with the surface of second electrode 2202 also corresponds to a state in which "second electrode 2202 is surrounded by weakly basic anion exchange resin 2214".

The upper end of second electrode 2202 is positioned below a water surface in neutralization chamber 2210 at the start of the regeneration process. A plurality of second electrodes 2202 are provided and are provided in neutralization chamber 2210 with equal distances between adjacent second electrodes 2202.

As a material of second electrode 2202, a noble metal or a noble metal alloy can be used. The reason is that second electrode 2202 containing a noble metal acts as a catalyst for water electrolysis and remains non-dissolving even under an acidic condition. Examples of the noble metal material include platinum, iridium, and ruthenium.

Examples of a form of the electrode include a noble-metal wire electrode, an electrode in which a noble-metal wire is wound around an outer periphery of a support, and a mesh-type noble-metal electrode. Further, examples of a form of the electrode further include a form in which a noble metal is applied to a surface of a rod that is made of a metal other than a noble metal, such as titanium (Ti), the rod being used as the support. However, in a case where a dissimilar metal interface exists, deterioration derived from the interface is likely to occur, and thus it is preferable to use a noble metal or a noble metal alloy alone.

First electrode 2201 is provided as a pair with second electrode 2202, and the pair of first electrode 2201 and second electrode 2202 is provided on the same radius of casing 2109.

As a result, a distance between first electrode 2201 and second electrode 2202 can be shortened as compared with a case where the pair of electrodes is not on the same radius, so that an increase in power consumption due to an increase in voltage can be suppressed.

Water softening device 2100 includes an electrode cleaning circuit (a circuit including a power supply) that connects first electrode 2201 to the negative electrode and connects second electrode 2202 to the positive electrode.

Outer peripheral diaphragm 2216 is a membrane having water permeability, and is a diaphragm that serves as a partition between neutralization chamber 2210 and water supply part 2204 while allowing the soft water to flow through the diaphragm. In outer peripheral diaphragm 2216, an inner surface of outer peripheral diaphragm 2216 covers an outer surface of neutralization chamber 2210 and is in contact with the outer surface of neutralization chamber 2210. An outer surface of outer peripheral diaphragm 2216 covers an inner surface of water supply part 2204 and is in contact with the inner surface of water supply part 2204.

Therefore, outer peripheral diaphragm 2216 serves as a partition between neutralization chamber 2210 and water supply part 2204 while allowing the soft water generated in neutralization chamber 2210 to flow through outer peripheral diaphragm 2216. The expression "covering" only refers to being positioned around a target and does not require complete enclosure of the target.

The upper surfaces of water introduction part 2203, water softening chamber 2209, inner peripheral diaphragm 2215, neutralization chamber 2210, and outer peripheral diaphragm 2216 are covered by lid 2208.

Lid 2208 has a water-impermeable structure, and for example, a plate-like resin can be used. Lid 2208 is in contact with each of the upper surfaces of water introduction part 2203, water softening chamber 2209, inner peripheral diaphragm 2215, neutralization chamber 2210, and outer peripheral diaphragm 2216, and covers each of the upper surfaces to serve as a partition between each of the upper surfaces and water supply part 2204 described below.

As a result, it is possible to suppress outflow of the water from each of the upper surfaces to water supply part 2204. That is, with lid 2208, it is possible to form a water flow in which the raw water flowing in from water introduction part inlet 2207 flows through water introduction part 2203, water softening chamber 2209, inner peripheral diaphragm 2215, and neutralization chamber 2210, and is delivered from a side surface of outer peripheral diaphragm 2216 to side space 2204a of water supply part 2204.

Water supply part 2204 supplies the soft water delivered from neutralization chamber 2210 to water supply part outlet 2206 provided above the upper portion of neutralization chamber 2210. The central axis of water supply part 2204 coincides with central axis I of casing 2109.

Air bleed valve 2205 for releasing air in casing 2109 is provided on water supply part 2204. Water supply part 2204 includes side space 2204a and upper space 2204b.

Side space 2204a is a space having a cylindrical shape, provided on an outer peripheral side of neutralization chamber 2210 with respect to central axis I of casing 2109, and surrounding neutralization chamber 2210. Side space 2204a is in contact with the outer surface of outer peripheral diaphragm 2216 on an inner surface side of the cylindrical shape, and is in contact with an inner surface of casing 2109 on an outer surface side of the cylindrical shape. In other words, side space 2204a is a space provided between the inner surface of casing 2109 and the outer surface of outer peripheral diaphragm 2216.

In a direction parallel to central axis I, an entire length of side space 2204a is longer than an entire length of neutralization chamber 2210, and when the bottom surfaces of side space 2204a and neutralization chamber 2210 are arranged on the same plane, a top surface of side space 2204a protrudes upward from a top surface of neutralization chamber 2210.

Upper space 2204b is a space having a columnar shape and provided above the top surfaces of water introduction part 2203, water softening chamber 2209, inner peripheral diaphragm 2215, neutralization chamber 2210, and outer peripheral diaphragm 2216. Upper space 2204b is in contact with an inner wall of a top surface of casing 2109 at a top surface of the columnar shape, and is in contact with an outer wall of a top surface of lid 2208 at a bottom surface of the columnar shape. In upper space 2204b, an outer surface of the columnar shape is in contact with an inner surface of side space 2204a.

Water supply part outlet 2206 is provided on the top surface of casing 2109, and discharges the water of water supply part 2204 to the outside of water softening device 2100. A central axis of water supply part outlet 2206 coincides with central axis I of casing 2109. Water supply part outlet 2206 is communicably connected to soft water supply tube 2105.

Returning to Fig. 16, controller 2110 controls execution of each of the water softening process, the regeneration process, the drainage process, the cleaning process, and an electrode cleaning process described below.

Controller 2110 can be implemented by elements including a central processing unit (CPU) of a computer and a mechanical device in terms of hardware, and is implemented by a computer program or the like in terms of software. Accordingly, the functional blocks can be implemented in various forms by a combination of hardware and software.

Controller 2110 includes adsorption amount estimation unit 2111, storage 2112, and timer 2113.

Adsorption amount estimation unit 2111 calculates a total amount of ions adsorbed to water softening device 2100 by using the total ion concentration of the raw water calculated by raw water conductivity measurement unit 2101, the total ion concentration of the soft water calculated by soft water conductivity measurement unit 2102, and a total amount of flowing water measured by water amount measurement unit 2103.

Storage 2112 stores each piece of information transmitted to controller 2110 and each piece of information calculated by controller 2110.

Timer 2113 measures an elapsed time from the start of the regeneration process, more specifically, an elapsed time from the start of energization of first electrode 2201 and second electrode 2202.

The above is the configuration of water softening device 2100.

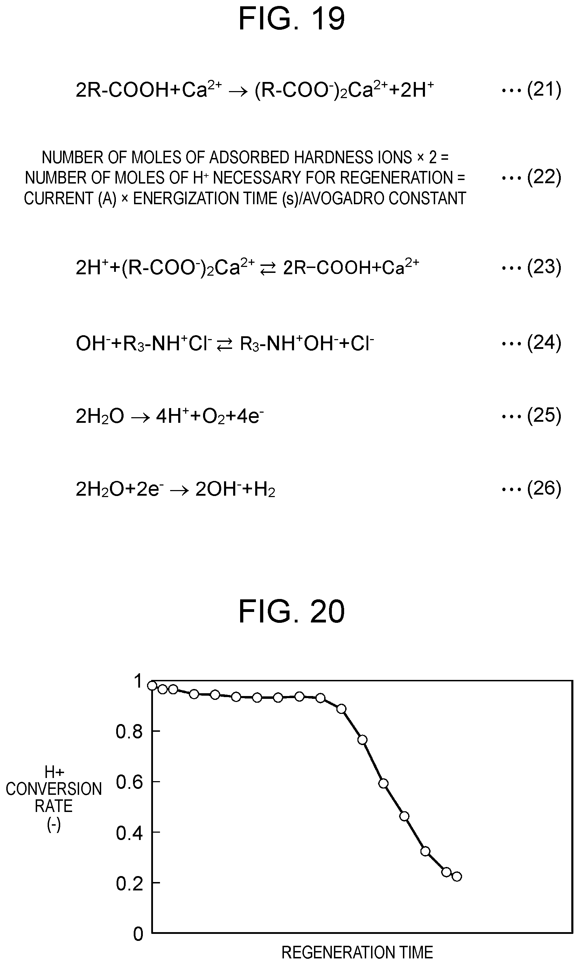

Next, the processes (the water softening process, the regeneration process, the drainage process, the cleaning process, and the electrode cleaning process) performed by water softening device 2100 will be described with reference to Figs. 19 and 20.

Fig. 19 is a diagram including equations representing a principle of the water softening device in the eighth exemplary embodiment. Fig. 20 is a diagram illustrating a temporal change in hydrogen ion consumption ratio of the weakly acidic cation exchange resin during the regeneration process.

First, an operation of water softening device 2100 in the water softening process and a principle of the water softening process will be described.

As illustrated in Figs. 17 and 18, in water softening device 2100, the raw water flows from the outside into a lower portion of water introduction part 2203 through water introduction part inlet 2207. The raw water that has flowed in is supplied from the lower portion to the upper portion of water introduction part 2203, and flows out in a radial direction of casing 2109 from the holes provided in the side wall of water introduction part 2203. That is, the raw water is delivered from the holes of water introduction part 2203 to water softening chamber 2209.

The raw water delivered to water softening chamber 2209 is softened by weakly acidic cation exchange resin 2213 filled in water softening chamber 2209. Specifically, the hardness components (calcium or magnesium ions) in the raw water are exchanged for hydrogen ions adsorbed to weakly acidic cation exchange resin 2213 to form the acidic soft water containing the hydrogen ions.

The acidic soft water generated in water softening chamber 2209 passes through inner peripheral diaphragm 2215, which is a water-permeable membrane, flows into neutralization chamber 2210, and is neutralized. Specifically, the hydrogen ions in the soft water are adsorbed to weakly basic anion exchange resin 2214 to be removed from the soft water, as a result of which the neutral soft water (neutralized soft water) is generated. In such a neutralization reaction, anions such as sulfate ions contained in the soft water are also adsorbed to weakly basic anion exchange resin 2214.

The neutralized soft water generated in neutralization chamber 2210 passes through outer peripheral diaphragm 2216, which is a water-permeable membrane, and flows into water supply part 2204.

The soft water flowing into water supply part 2204 becomes an upward flow, rises in side space 2204a of water supply part 2204, and flows into upper space 2204b of water supply part 2204. The soft water flowing into upper space 2204b flows in upper space 2204b toward a central portion of upper space 2204b, and is taken out through water supply part outlet 2206 provided at a central portion of an upper surface of water softening device 2100.

In the water softening process, the raw water is softened in this manner.

In the water softening process, when an adsorption amount of the cations (more specifically, the hardness ions that are calcium or magnesium ions) to weakly acidic cation exchange resin 2213 or an adsorption amount of the anions to weakly basic anion exchange resin 2214 increases, resin performance for water softening decreases. Therefore, the regeneration process needs to be performed.

In the regeneration process, first, the raw water flows into water introduction part 2203 from the supply source of the raw water via water introduction part inlet 2207, and the raw water that has flowed in is supplied to water softening chamber 2209 and neutralization chamber 2210. Next, each electrode is energized such that first electrode 2201 surrounded by weakly acidic cation exchange resin 2213 has a higher potential than second electrode 2202 surrounded by weakly basic anion exchange resin 2214.

As a result, a reaction for producing the hydrogen ions (see Equation (25) in Fig. 19) occurs at first electrode 2201 as the anode, and a reaction for producing the hydroxide ions (see Equation (26) in Fig. 19) occurs at second electrode 2202 as the cathode. In other words, the hydrogen ions are produced in water softening chamber 2209, and the hydroxide ions are produced in neutralization chamber 2210.

Weakly acidic cation exchange resin 2213 to which the hardness components have been adsorbed by the water softening process is exposed to the hydrogen ions to cause an exchange reaction between the hardness components and the hydrogen ions. As a result, weakly acidic cation exchange resin 2213 is regenerated.

Weakly basic anion exchange resin 2214 to which the anions have been adsorbed by the water softening process is exposed to the hydroxide ions to cause an exchange reaction between the adsorbed anions and the hydroxide ions. As a result, weakly basic anion exchange resin 2214 is regenerated.

In the regeneration process, weakly acidic cation exchange resin 2213 and weakly basic anion exchange resin 2214 are regenerated in this manner.

In the regeneration process, water softening device 2100 sets a regeneration time based on a conductivity of the raw water or the soft water before and after the water flows through casing 2109 or the amount of water flowing through casing 2109.

Specifically, at the start of the water softening process, raw water conductivity measurement unit 2101 is activated to measure the conductivity of the raw water flowing through raw water supply tube 2104. In addition, soft water conductivity measurement unit 2102 is activated to measure the conductivity of the soft water flowing through soft water supply tube 2105. Furthermore, water amount measurement unit 2103 measures the amount of water flowing through casing 2109. The measured conductivity of the raw water, the measured conductivity of the soft water, and the measured amount of water are transmitted to controller 2110 and stored in storage 2112.

Ions to be removed in water softening chamber 2209 are mainly hardness ions of Mg²⁺ and Ca²⁺, and ions to be removed in neutralization chamber 2210 are mainly anions of HCO₃⁻, Cl⁻, and SO₄²⁻. From a principle of electrical neutrality, the number of moles of cations adsorbed in water softening chamber 2209 is equal to the number of moles of anions adsorbed in neutralization chamber 2210. Therefore, a difference between the conductivity measured by raw water conductivity measurement unit 2101 and the conductivity measured by soft water conductivity measurement unit 2102 is derived from a total amount of Mg salts and Ca salts removed by water softening device 2100. As described above, since the conductivity difference is a value of the removed ion concentration, it is possible to cope with water quality variations of the raw water and the soft water and to accurately calculate the adsorption amount.

Adsorption amount estimation unit 2111 estimates an amount of ions adsorbed in water softening device 2100. Specifically, the difference between the conductivity of the raw water and the conductivity of the soft water is calculated, the conductivities being stored in storage 2112. The difference is a concentration of ions adsorbed in water softening device 2100. Adsorption amount estimation unit 2111 multiplies the ion concentration obtained as the difference by the total amount of flowing water measured by water amount measurement unit 2103. By doing so, the amount of ions adsorbed in water softening device 2100 during the regeneration process is estimated.

Here, a current value and an energization time necessary for removing the estimated adsorbed ions from water softening device 2100 and regenerating water softening device 2100 will be described.

In the regeneration process, one mole of H⁺ is produced from one mole of electrons, and one mole of OH⁻ is produced from one mole of electrons. In order to release one mole of hardness ions from the resin, two moles of H⁺ are required. Therefore, a relationship among the number of moles of ions adsorbed in water softening chamber 2209, and H⁺, the current value, and the time necessary for resin regeneration is expressed by Equation (22) in Fig. 19.

Controller 2110 determines the current value and the energization time necessary for regeneration of weakly acidic cation exchange resin 2213 and weakly basic anion exchange resin 2214 based on the number of moles of adsorbed ions estimated by adsorption amount estimation unit 2111 and Equation (22) in Fig. 19.

In water softening device 2100, it is preferable to change the current value to be applied as the regeneration process proceeds. The reason of the above is described.

As the regeneration process proceeds, the ions adsorbed in the water softening process are released into the water from weakly acidic cation exchange resin 2213 and weakly basic anion exchange resin 2214, as a result of which the ion concentration in the water increases. That is, when the elapsed time from the start of the regeneration process becomes longer, the conductivity of the water in water softening device 2100 becomes higher than that at the start of energization, and a voltage decreases. On the other hand, since the ion concentration of the water in water softening device 2100 is low at the start of the energization, the voltage is high. Therefore, in a case where the current value is made constant from the start of the energization, the voltage at the start of the energization is high, and the voltage gradually decreases with the lapse of the energization time.

At the end of the regeneration process, as concentrations of (R-COO⁻)₂Ca²⁺ and R₃-NH⁺Cl⁻ in Equations (23) and (24) in Fig. 19 decrease, a regeneration rate decreases. As a result, a consumption ratio of the fed hydrogen ions decreases, and a conversion rate decreases as illustrated in Fig. 20. In a case where the hydrogen ions or hydroxide ions having a concentration higher than or equal to a concentration that can be consumed by the resin are fed to weakly acidic cation exchange resin 2213 or weakly basic anion exchange resin 2214 when the consumption ratio is low, the fed hydrogen ions and the fed hydroxide ions react with each other without reacting with the ions in the resin, resulting in loss.

That is, in consideration of voltage characteristics at an initial stage of the regeneration process described above, it is preferable to gradually increase the current instead of immediately increasing the current value to the current value determined by adsorption amount estimation unit 2111 at the time of current application. As a result, the voltage can be suppressed to be low, and thus, the power consumption is reduced.

In addition, at the end of the regeneration process, it is preferable to gradually decrease the current in consideration of reaction characteristics of the resin. As a result, excessive ions can be suppressed from reacting with each other, waste of the current is reduced, and the power consumption can be reduced.

Timer 2113 is used to achieve such a temporal change in applied current.

Storage 2112 stores, as reference times indicating timings for changing the current, a first reference value at which the current is to be maximized, and a second reference value at which a decrease from the maximum value is to be started. The first reference value is set to about 30 minutes to 1 hour from the start of the energization. The second reference value is set to a time later than the first reference value and 30 minutes to 1 hour before the end of the energization.

Since the current and the time necessary for the regeneration process are determined based on the adsorbed hardness as indicated in Equation (22) in Fig. 19, when a time from the start of the energization to the first reference value and a time from the end of the energization to the second reference value are lengthened, it is necessary to increase a maximum current value or the regeneration time.

Timer 2113 measures the elapsed time from the start of the current application to first electrode 2201 and second electrode 2202. When the elapsed time measured by timer 2113 reaches the first reference value, controller 2110 stops increasing the applied current value and maintains the present current value. Thereafter, when the elapsed time measured by timer 2113 reaches the second reference value, controller 2110 decreases the applied current value. The increase in current value from the start of the energization to the first reference value or the decrease in current value from the second reference value to the end of the energization may be changed linearly or stepwise.

In the regeneration process, the determined current value is applied to first electrode 2201 and second electrode 2202 for the determined energization time, and the regeneration of weakly acidic cation exchange resin 2213 and weakly basic anion exchange resin 2214 is performed.

By the regeneration process, as described above, concentrations of various ions including the hardness ions such as calcium ions or magnesium ions released from weakly acidic cation exchange resin 2213 and weakly basic anion exchange resin 2214 gradually increase with the lapse of time during the regeneration process. In particular, when the concentration of the hardness ions increases, in the reaction equation illustrated in (23) in Fig. 19, the equilibrium shifts to the left, that is, toward re-adsorption of the hardness ions by weakly acidic cation exchange resin 2213. Therefore, in order to efficiently perform regeneration, it is important to suppress an increase in concentration of the calcium ions of the water contained in casing 2109.

On the other hand, in a case where all the water contained in casing 2109 is discharged and the raw water is supplied to casing 2109 to perform the regeneration process, the concentration of ions contained in the raw water is lower than a concentration of ions of water existing in casing 2109 during the regeneration process, which is disadvantageous for the regeneration process. Therefore, in order for the regeneration process to efficiently proceed, it is preferable to decrease the concentration of the hardness ions without significantly decreasing the total ion concentration in casing 2109. Therefore, the drainage process of discharging a part of the water in casing 2109 is performed.

In the drainage process, it is important to perform drainage with an appropriate drainage amount. The reason is that a decrease in efficiency of the regeneration process is suppressed by maintaining electrolyte concentrations in water softening chamber 2209 and neutralization chamber 2210 at a certain value or higher (for example, an electrolyte concentration of the raw water or higher) in preparation for a case where the regeneration process is performed again after the drainage process while decreasing the concentration of the hardness ions.

Here, an amount of water to be drained during the drainage process is preferably smaller than a sum of a volume of water introduction part 2203, a volume of water softening chamber 2209, and a volume of neutralization chamber 2210, and it is more preferable that a volume of a portion other than a portion occupied by weakly acidic cation exchange resin 2213 in water softening chamber 2209 is smaller than a sum of volumes of portions other than a portion occupied by weakly basic anion exchange resin 2214 in neutralization chamber 2210. In addition, the amount of water to be drained during the drainage process is preferably larger than the volume of the portion other than the portion occupied by weakly acidic cation exchange resin 2213 in water softening chamber 2209.

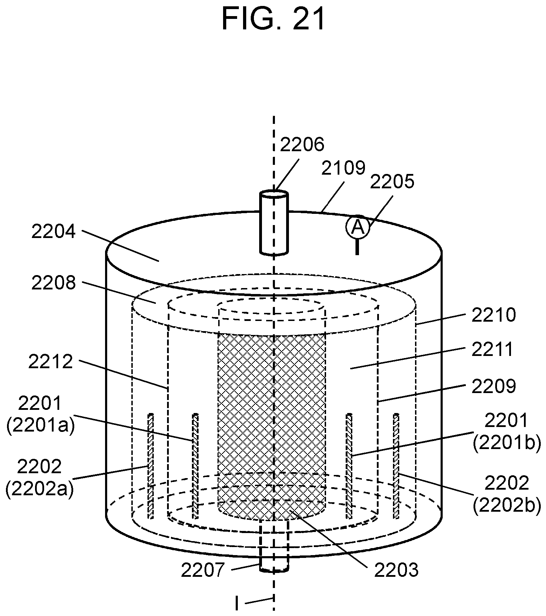

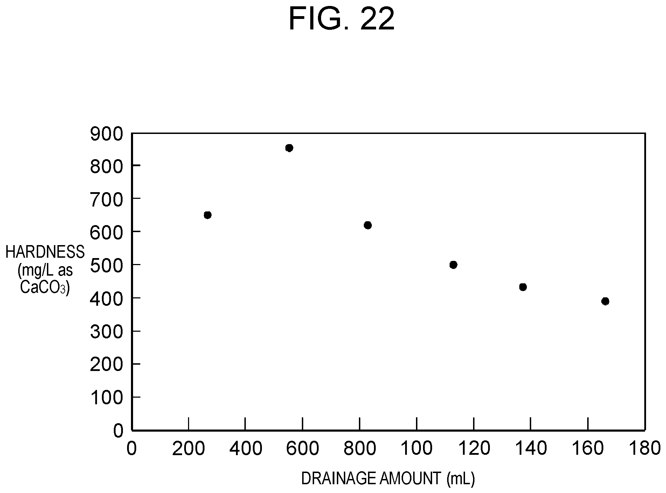

Here, the drainage will be described in detail by exemplifying specific numerical values with reference to Figs. 21 and 22.

Fig. 21 is a diagram illustrating an example in which the volumes of water introduction part 2203, water softening chamber 2209, and neutralization chamber 2210 are larger than those in Fig. 17.

Specifically, the volumes of water introduction part 2203, water softening chamber 2209, and neutralization chamber 2210 in Fig. 21 are about 900 mL, about 1300 mL, and about 1600 mL, respectively.

Fig. 22 is a diagram illustrating a relationship between the drainage amount and a hardness of the wastewater after the regeneration process is performed for one hour in the example of Fig. 21.

In the examples illustrated in Figs. 21 and 22, hard water (hardness: 300 mg/L) of the same amount as the drainage amount is added after the drainage. In addition, although the volumes of water softening chamber 2209 and neutralization chamber 2210 are as described above, actually, water softening chamber 2209 is filled with weakly acidic cation exchange resin 2213, and neutralization chamber 2210 is filled with weakly basic anion exchange resin 2214, and thus, an amount of water filled in each of water softening chamber 2209 and neutralization chamber 2210 is smaller than the volume of a corresponding one of water softening chamber 2209 and neutralization chamber 2210. That is, the water exists only in a region other than a space occupied by each of weakly acidic cation exchange resin 2213 and weakly basic anion exchange resin 2214. As a result of experimental confirmation, the amount of water filled in each space was about 1/3 of the volume of water softening chamber 2209 or neutralization chamber 2210.

Therefore, in the example of Fig. 21, about 400 mL of water exists in water softening chamber 2209 for the volume of 1300 mL of water softening chamber 2209, and about 500 mL of water exists in neutralization chamber 2210 for the volume of 1600 mL of neutralization chamber 2210.

As can be seen from Fig. 22, the hardness of the wastewater is the highest when the drainage amount is about 550 mL, and the hardness is twice or more the hardness of the injected water having a hardness of 300 mg/L even when the drainage amount is 820 mL. Therefore, when the drainage amount in the drainage process is in such a range, the hardness during the regeneration can be efficiently reduced. In other words, when the drainage amount in the drainage process is larger than the volume of the portion occupied by weakly acidic cation exchange resin 2213 in water softening chamber 2209, the ion concentration in water softening chamber 2209 can be efficiently reduced, which is preferable. When the drainage amount is larger than the sum of the volume of the portion occupied by weakly acidic cation exchange resin 2213 in water softening chamber 2209 and the volume of the portion occupied by weakly basic anion exchange resin 2214 in neutralization chamber 2210, the ion concentrations in water softening chamber 2209 and neutralization chamber 2210 can be efficiently reduced, which is preferable.

As can be seen from Fig. 22, even in a case where the drainage amount exceeds 1600 mL, the hardness is higher than 300 mg/L that is the hardness of the injected water. Therefore, the hardness during the regeneration can be efficiently reduced even in a state in which the drainage amount is larger than the volume of water softening chamber 2209. However, a maximum value of the drainage amount in the drainage process is preferably smaller than the sum of the volume of water softening chamber 2209 and the volume of neutralization chamber 2210.

Here, referring back to Fig. 16, a specific flow path and the like in the drainage process will be described.

During the regeneration process, drain tube opening and closing valve 2108 and bypass pipe opening and closing valve 2115 are both closed. At the start of the drainage process, drain tube opening and closing valve 2108 is brought into a state of connecting drain pipe 2107 and water introduction part 2203, and bypass pipe opening and closing valve 2115 is opened. As a result, the raw water can be injected into casing 2109.

At this time, a flow rate of the water to be drained is preferably lower than a flow rate during the water softening process because the water in casing 2109 can be discharged without being stirred. In addition, measurement of the drainage amount can be performed by a known method without particular limitation, and examples of the method include a method of determining the drainage amount by measuring a prescribed drainage amount using an output of water amount measurement unit 2103 and a method of using an output of timer 2113.

Furthermore, a timing to start the drainage process can be determined based on, for example, an elapsed time from the start of the regeneration process. Specifically, when the elapsed time from the start of the regeneration process measured by timer 2113 exceeds a certain time, controller 2110 performs the drainage process. As a result, the ion concentration of the water in water softening device 2100 decreases, and regeneration efficiency in the regeneration process is improved. The drainage process is preferably performed a plurality of times until the regeneration is completed. As a result, the regeneration process can be performed in a state in which the hardness ion concentration is low, and thus, the regeneration efficiency is increased, which is preferable.

In a case where the timing to start the drainage process is determined based on the elapsed time from the start of the regeneration process, it is preferable to increase a frequency of the drainage process from the start of the regeneration process to the middle stage of the regeneration process and to decrease the frequency of the drainage process in the latter half of the regeneration. As illustrated in Fig. 20, since the reaction efficiency is high up to the middle stage of the regeneration process, a temporal change in desorbed ion concentration is large. On the other hand, since the reaction efficiency is low in the latter half of the regeneration process, the temporal change in desorbed ion concentration is small. Therefore, the frequency of drainage in the latter half of the regeneration process may be lower than that in the middle stage of the regeneration process. In other words, with the progress of the regeneration process, it is preferable to increase a time interval of performing the drainage process. In consideration of both reduction of the drainage amount and reduction of reaction inhibition due to the desorbed ions, a drainage interval is preferably about 30 minutes. For example, the drainage process is performed once every 20 minutes until the middle stage of the regeneration process, and the drainage process is performed once every 40 minutes in the latter half of the regeneration process.

Once the draining is completed, controller 2110 closes drain tube opening and closing valve 2108 and closes bypass pipe opening and closing valve 2115. As a result, the regeneration process can be performed again.

In the drainage process, a direction of the drainage is also important. In weakly acidic cation exchange resin 2213 in water softening chamber 2209, there is a deviation in an adsorption amount distribution of the hardness components. That is, weakly acidic cation exchange resin 2213 adjacent to water introduction part 2203 is at a location into which the raw water first flows, and thus the hardness components are easily adsorbed. On the other hand, weakly acidic cation exchange resin 2213 adjacent to inner peripheral diaphragm 2215 is at a location downstream of weakly acidic cation exchange resin 2213 adjacent to water introduction part 2203, and thus, the adsorption amount of the hardness components tends to be smaller than that of weakly acidic cation exchange resin 2213 adjacent to water introduction part 2203.

In the regeneration process, protons are supplied to weakly acidic cation exchange resin 2213 in this state to perform regeneration treatment. During the regeneration treatment, the adsorbed hardness components are released from weakly acidic cation exchange resin 2213. Therefore, in water softening chamber 2209, more hardness components are released from weakly acidic cation exchange resin 2213 adjacent to water introduction part 2203 than from weakly acidic cation exchange resin 2213 adjacent to inner peripheral diaphragm 2215, and thus, water having a high hardness component concentration in water softening chamber 2209 is positioned adjacent to water introduction part 2203. Therefore, by draining the water in water softening chamber 2209 from a location adjacent to water introduction part 2203 in the drainage process, the hardness component concentration in water softening chamber 2209 can be reduced with a minimum drainage amount.

In addition, in a case where the water in water softening chamber 2209 sequentially flows through inner peripheral diaphragm 2215 and neutralization chamber 2210 and is supplied from water supply part 2204 to the outside in the drainage process similarly to the water softening process, there is a possibility that the hardness components desorbed from weakly acidic cation exchange resin 2213 in the regeneration process are re-adsorbed to weakly acidic cation exchange resin 2213. The reason will be described in detail.

As described above, in weakly acidic cation exchange resin 2213 adjacent to inner peripheral diaphragm 2215, the adsorption amount of the hardness components tends to be smaller, and a release amount of the hardness components in the regeneration process also tends to be smaller as compared to those in weakly acidic cation exchange resin 2213 adjacent to water introduction part 2203. In such a state, when the water sequentially flows through inner peripheral diaphragm 2215 and neutralization chamber 2210, in water softening chamber 2209, water that is positioned adjacent to water introduction part 2203 and contains a relatively large amount of hardness components may flow into water that is positioned adjacent to inner peripheral diaphragm 2215 and contains a relatively small content of hardness components, and may be re-adsorbed to weakly acidic cation exchange resin 2213 adjacent to inner peripheral diaphragm 2215. Therefore, it is preferable from the viewpoint of improving the regeneration efficiency that the drainage is not performed in the order of water introduction part 2203, water softening chamber 2209, inner peripheral diaphragm 2215, neutralization chamber 2210, and water supply part 2204, but is performed in the order of water supply part 2204, neutralization chamber 2210, inner peripheral diaphragm 2215, water softening chamber 2209, and water introduction part 2203. That is, at the time of the drainage by the drainage process, the water in casing 2109 is preferably drained from water introduction part 2203 through drain pipe 2107. The raw water is preferably supplied into casing 2109 through water supply part outlet 2206 via bypass pipe 2114.

After the end of the drainage process, the regeneration process is performed again, or in a case where the regeneration is sufficient, the regeneration process ends.

After the end of the regeneration process, the ions released from weakly acidic cation exchange resin 2213 and weakly basic anion exchange resin 2214 are present at a high concentration in water softening chamber 2209 and neutralization chamber 2210. Therefore, it is necessary to perform a cleaning operation in water softening device 2100. In a case where cleaning is insufficient, the remaining ions are mixed in the water during the water softening process, and thus, there is a possibility that water softening becomes insufficient. Therefore, the cleaning process is performed after the end of the regeneration process.

In the cleaning process, in water softening device 2100, soft water supply tube opening and closing valve 2106 is closed, and bypass pipe opening and closing valve 2115 and drain tube opening and closing valve 2108 are opened. As a result, the water in water softening chamber 2209 and neutralization chamber 2210 is drained to the outside of water softening device 2100 via drain pipe 2107. When the raw water flows in from bypass pipe 2114 through water supply part 2204, the water softening process becomes possible.

When the end of the cleaning process is determined by time, a cleaning time, which is a time from the start to the end of the cleaning process, is preferably set to be longer than a residence time, which is a time from inflow of the raw water into neutralization chamber 2210 to outflow of the raw water from water softening chamber 2209. As a result, the water containing a large amount of desorbed hardness ions existing in water softening chamber 2209 can be discharged, and the water in water softening chamber 2209 can be replaced with the raw water.

In the regeneration process, solid calcium carbonate or the like adheres to an electrode surface of second electrode 2202. When a precipitation amount of calcium carbonate on the electrode surface increases, problems such as a problem that the voltage increases at the time of the energization and a problem that calcium carbonate is hardly peeled off from the electrode surface occur. Therefore, it is preferable to periodically perform the electrode cleaning process of removing calcium carbonate on a surface of the cathode.

In the electrode cleaning process, first electrode 2201 is connected to the negative electrode, and second electrode 2202 is connected to the positive electrode, that is, electrode cleaning is performed by operating with a polarity of the electrode reversed from that in the regeneration process. By the operation, H⁺ is produced from second electrode 2202, and calcium carbonate on the surface of second electrode 2202 reacts with H⁺ to be dissolved. The electrode cleaning process may be performed during the regeneration process or after the end of the regeneration process.

As described above, in water softening device 2100, the softening of the raw water by the water softening process and the maintenance of water softening device 2100 by the regeneration process, the drainage process, the cleaning process, and the electrode cleaning process are repeatedly performed.

### (Advantageous effect and the like)

As described above, according to water softening device 2100 of the present exemplary embodiment, the following effects can be obtained.
(1) Water softening device 2100 includes: water softening chamber 2209 that contains weakly acidic cation exchange resin 2213 and generates the soft water from the raw water containing the hardness components; neutralization chamber 2210 that is positioned on the outer periphery of water softening chamber 2209, contains weakly basic anion exchange resin 2214, and neutralizes the soft water; inner peripheral diaphragm 2215 that serves as a partition between water softening chamber 2209 and neutralization chamber 2210 while allowing the soft water to flow through inner peripheral diaphragm 2215; water introduction part 2203 that is positioned on the inner periphery of water softening chamber 2209 and supplies the raw water to water softening chamber 2209; water supply part 2204 that supplies the neutralized soft water generated in neutralization chamber 2210 to the outside; and controller 2110 that controls regeneration of weakly acidic cation exchange resin 2213. Controller 2110 performs: the water softening process of obtaining the neutralized soft water by allowing the raw water to flow in from water introduction part 2203 and allowing the raw water to sequentially flow through water softening chamber 2209, inner peripheral diaphragm 2215, and neutralization chamber 2210; the regeneration process of performing the water electrolysis after the water softening process is performed for a predetermined period of time and regenerating weakly acidic cation exchange resin 2213 by using the produced hydrogen ions; and the cleaning process of discharging the cations released from weakly acidic cation exchange resin 2213 by the regeneration process from water softening chamber 2209 and discharging the anions released from weakly basic anion exchange resin 2214 from neutralization chamber 2210. In the drainage process, water containing the cations is discharged from the water introduction part 2203.
   With such a configuration, it is possible to perform the drainage from a side adjacent to weakly acidic cation exchange resin 2213 having a high hardness component concentration. Therefore, it is possible to implement water softening device 2100 capable of suppressing re-adsorption of the cations to weakly acidic cation exchange resin 2213 in the cleaning process and improving the regeneration efficiency.
(2) In water softening device 2100, the drainage amount in the drainage process is set to be smaller than the sum of the volume of water introduction part 2203, the volume of water softening chamber 2209, and the volume of neutralization chamber 2210. With such a drainage amount, it is possible to suppress drainage more than necessary in the drainage process, and it is possible to implement water softening device 2100 with a small wastewater amount.
(3) In water softening device 2100, weakly acidic cation exchange resin 2213 is filled in water softening chamber 2209, and weakly basic anion exchange resin 2214 is filled in neutralization chamber 2210. The drainage amount in the drainage process is preferably smaller than the sum of the volume of the portion other than the portion occupied by weakly acidic cation exchange resin 2213 in water softening chamber 2209 and the volume of the portion other than the portion occupied by weakly basic anion exchange resin 2214 in neutralization chamber 2210.
   With such a drainage amount, the water in water softening chamber 2209 and neutralization chamber 2210 can be drained, and thus, the cations desorbed from weakly acidic cation exchange resin 2213 and the anions desorbed from weakly basic anion exchange resin 2214 can be drained to the outside of water softening device 2100 in the regeneration process. Therefore, in the next water softening process, the cations and the anions can be suppressed from remaining in water softening chamber 2209, and a possibility of precipitation of the hardness components can be reduced.
(4) In water softening device 2100, the drainage amount in the drainage process is larger than the volume of the portion other than the portion occupied by weakly acidic cation exchange resin 2213 in water softening chamber 2209.
   Accordingly, the water existing in water softening chamber 2209 can be drained, and a necessary minimum drainage amount can be secured. Therefore, it is possible to implement water softening device 2100 capable of improving the regeneration efficiency while reducing the drainage amount.
(5) In water softening device 2100, controller 2110 preferably performs the drainage process a plurality of times during the regeneration process.
   In this way, the drainage can be performed at an appropriate timing a plurality of times during the regeneration process, and the resin regeneration efficiency in the regeneration process can be improved.
(6) Water softening device 2100 further includes first electrode 2201 that is surrounded by weakly acidic cation exchange resin 2213 in water softening chamber 2209 and acts as the anode during the regeneration of weakly acidic cation exchange resin 2213, and second electrode 2202 that is surrounded by weakly basic anion exchange resin 2214 in neutralization chamber 2210 and acts as the cathode during the regeneration of weakly basic anion exchange resin 2214. In the regeneration process, controller 2110 applies a voltage between first electrode 2201 and second electrode 2202, and determines execution of the drainage process based on the applied voltage.
   In this way, the drainage can be performed when the ion concentration in water softening chamber 2209 increases, and the resin regeneration efficiency in the regeneration process can be improved.
(7) In water softening device 2100, the raw water supplied into casing 2109 during the drainage process flows in from water supply part 2204.

As a result, it is possible to form a water flow in which the raw water flows in from water supply part 2204 and the water in casing 2109 is drained from water introduction part 2203 in the drainage process, and to suppress the re-adsorption of the cations to weakly acidic cation exchange resin 2213.

From above, the present disclosure has been described based on the exemplary embodiments. It is understood by those skilled in the art that these exemplary embodiments are merely examples, and that various modifications can be made to combinations of the components or the processing processes, and that such modifications are also within the scope of the present disclosure.

### (Modification)

In the eighth exemplary embodiment, the timing to start the drainage process is determined based on the elapsed time from the start of the regeneration process, but the timing is not limited thereto. For example, the execution of the drainage process may be determined based on the voltage applied between the first electrode and the second electrode in the regeneration process. Even in this case, the same effects as the eighth exemplary embodiment can be obtained.

The water softening device according to the present disclosure is useful as a water softening device or the like that can be efficiently regenerated.

### (Ninth exemplary embodiment)

In the technology described in PTL 1, the hardness ions desorbed from the ion exchange resin are re-adsorbed to the ion exchange resin, as a result of which a reaction at the time of resin regeneration is easily inhibited. Therefore, it is necessary to perform regeneration while maintaining water flow in order to discharge the desorbed hardness ions. Such a water flow operation has a problem that a drainage amount at the time of resin regeneration increases.

The present disclosure has been made in view of such a problem of the related art. The present disclosure provides a water softening device capable of suppressing drainage during regeneration and efficiently regenerating a resin.

A water softening device according to the present disclosure includes: a water softening chamber that contains a weakly acidic cation exchange resin and generates soft water from raw water containing hardness components; a neutralization chamber that contains a weakly basic anion exchange resin and neutralizes the soft water; a diaphragm that serves as a partition between the water softening chamber and the neutralization chamber while allowing the soft water to flow through the diaphragm; a water introduction part that introduces the raw water into the water softening chamber from an outside; a water supply part that supplies neutralized soft water generated in the neutralization chamber from the outside; a first electrode that is surrounded by the weakly acidic cation exchange resin in the water softening chamber and acts as an anode during regeneration of the weakly acidic cation exchange resin; and a second electrode that is surrounded by the weakly basic anion exchange resin in the neutralization chamber and acts as a cathode during regeneration of the weakly basic anion exchange resin. The water softening chamber, the diaphragm, the neutralization chamber, and the water supply part are radially disposed from the water introduction part having a central axis perpendicular to a bottom surface of the water softening chamber toward an outer peripheral direction of a circle centered on the central axis, and the first electrode is disposed at a position biased toward the water introduction part in the water softening chamber.

According to the present disclosure, it is possible to provide the water softening device capable of suppressing drainage during regeneration and efficiently regenerating a resin.

Hereinafter, exemplary embodiments of the present disclosure will be described with reference to the drawings. Note that the following exemplary embodiments are examples embodying the present disclosure, and do not limit the technical scope of the present disclosure. In addition, the drawings described in the respective exemplary embodiments are schematic representations, and the ratios of the sizes and the thicknesses of the components in each of the drawings do not necessarily reflect the actual dimensional ratio.

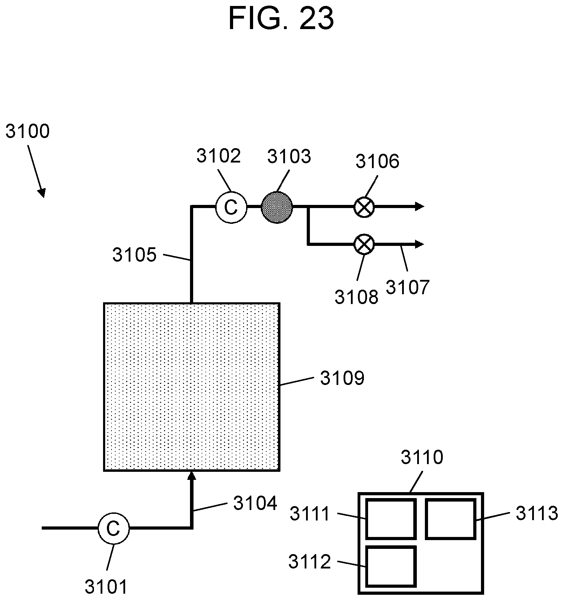

Water softening device 3100 according to a ninth exemplary embodiment of the present disclosure will be described with reference to Figs. 23, 24, and 25.

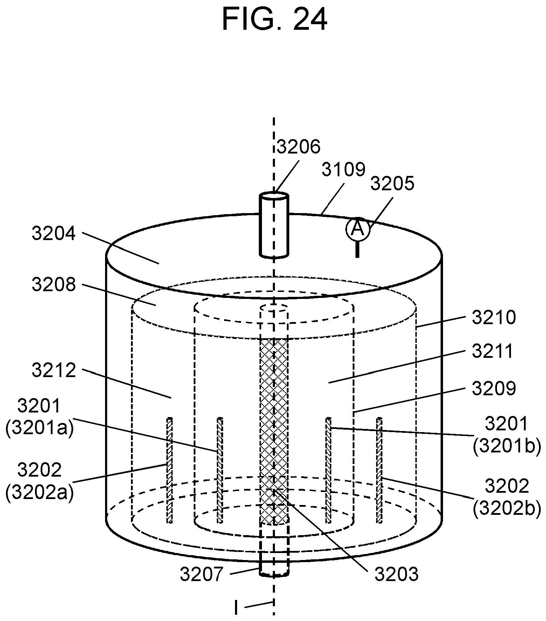

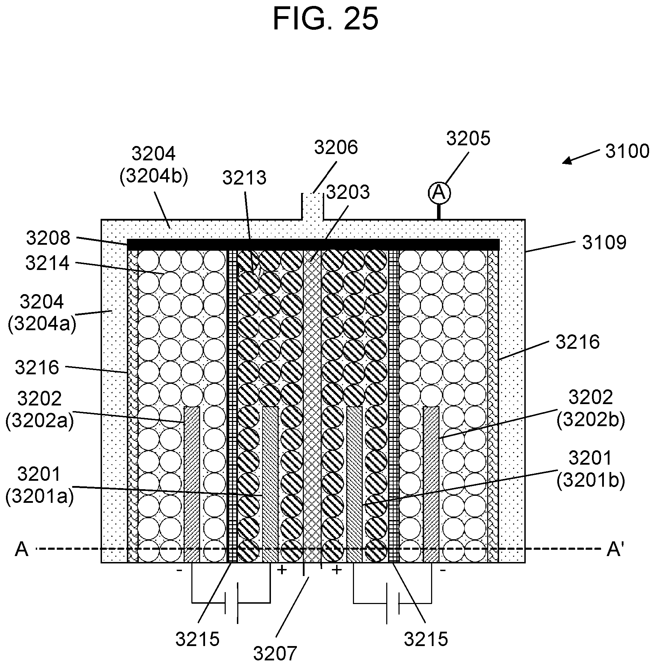

Fig. 23 is a schematic diagram illustrating a configuration of water softening device 3100 according to the ninth exemplary embodiment of the present disclosure. Fig. 24 is a perspective view illustrating a configuration of water softening device 3100 according to the ninth exemplary embodiment of the present disclosure. Fig. 25 is a cross-sectional view illustrating the configuration of water softening device 3100 according to the ninth exemplary embodiment of the present disclosure. Note that Figs. 23 to 25 conceptually illustrate each element of water softening device 3100. In Fig. 24, weakly acidic cation exchange resin 3213 and weakly basic anion exchange resin 3214 are omitted.

Water softening device 3100 is a device that generates neutral soft water from raw water containing hardness components supplied from the outside. The raw water is water (water to be treated) introduced into water softening device 3100 from raw water supply tube 3104 described below, and is, for example, well water or tap water. The raw water contains the hardness components (for example, calcium or magnesium ions).

By performing a water softening process of softening the raw water using water softening device 3100, the neutral soft water having a reduced hardness can be obtained from the raw water having a high hardness, and the soft water can be used even in a zone where the hardness of the raw water is high.

In addition, water softening device 3100 performs a regeneration process of regenerating weakly acidic cation exchange resin 3213 and weakly basic anion exchange resin 3214 described below after performing the water softening process for a certain period of time. Details of the water softening process and the regeneration process will be described below.

As illustrated in Fig. 23, water softening device 3100 includes raw water supply tube 3104, casing 3109, soft water supply tube 3105, drain pipe 3107, and controller 3110.

Raw water supply tube 3104 is a tube connecting a water supply source of the raw water, such as a waterworks, and water introduction part inlet 3207 described below, and includes raw water conductivity measurement unit 3101 on a flow path thereof.

Raw water conductivity measurement unit 3101 calculates a total ion concentration of the raw water flowing into raw water supply tube 3104. Information regarding the calculated total ion concentration of the raw water is transmitted to controller 3110.

Casing 3109 is a hollow cylindrical member, and in casing 3109, the raw water is softened, and an ion exchange resin is regenerated.

As illustrated in Figs. 24 and 25, water introduction part 3203, water softening chamber 3209, neutralization chamber 3210, and water supply part 3204 are provided in a hollow space of casing 3109 in order from a side closer to central axis I connecting an upper surface and a lower surface of casing 3109 toward an outer peripheral direction. Water introduction part inlet 3207 is provided at a central portion of the lower surface of casing 3109, that is, on central axis I. Water supply part outlet 3206 is provided at a central portion of the upper surface of casing 3109, that is, on central axis I. Central axis I of casing 3109 coincides with respective central axes of water introduction part 3203, water softening chamber 3209, neutralization chamber 3210, and water supply part 3204. Central axis I is perpendicular to a bottom surface of water softening chamber 3209.

Water introduction part inlet 3207 is provided on a bottom surface of casing 3109 and supplies the raw water to water introduction part 3203. A central axis of water introduction part inlet 3207 coincides with central axis I of casing 3109. Water introduction part inlet 3207 is communicably connected to raw water supply tube 3104.

Water introduction part 3203 is a cylindrical member and is connected to water introduction part inlet 3207 at a lower end. Water introduction part 3203 introduces the raw water into water softening device 3100 and supplies the raw water to water softening chamber 3209. A tube such as a pipe having a space therein can be used as water introduction part 3203.

Water introduction part 3203 is configured to make the raw water introduced into water softening device 3100 uniformly flow into water softening chamber 3209 and neutralization chamber 3210. Specifically, water introduction part 3203 is provided at a central portion in casing 3109, and an outer periphery of water introduction part 3203 is in contact with water softening chamber 3209. In other words, water introduction part 3203 is positioned on central axis I.

Water introduction part 3203 is provided extending from lower portions to upper portions of water softening chamber 3209 and neutralization chamber 3210, more strictly, from lower ends to upper ends. A length of a portion of water introduction part 3203 where the raw water can be supplied to water softening chamber 3209 and neutralization chamber 3210 is equal to heights of water softening chamber 3209 and neutralization chamber 3210.

Water introduction part 3203 has a plurality of holes on a side surface and delivers the raw water through the holes toward the outer peripheral direction from central axis I of casing 3109, that is, to water softening chamber 3209. Furthermore, the plurality of holes are preferably provided uniformly in a circumferential direction of the side surface of water introduction part 3203. With such a configuration, the raw water introduced into the device can uniformly flow into water softening chamber 3209 and neutralization chamber 3210. Therefore, the raw water is uniformly supplied to particles of weakly acidic cation exchange resin 3213 filled in water softening chamber 3209 and particles of weakly basic anion exchange resin 3214 filled in neutralization chamber 3210. Therefore, weakly acidic cation exchange resin 3213 and weakly basic anion exchange resin 3214 can be efficiently used as a whole.

A diameter of each of the plurality of holes of water introduction part 3203 on the side surface is smaller than a particle diameter of each of the particles of weakly acidic cation exchange resin 3213. A lower limit value of the particle diameter of weakly acidic cation exchange resin 3213 is around 0.3 mm, and thus, the diameter of the hole provided on the surface of water introduction part 3203 is smaller than the lower limit value. As a result, it is possible to prevent outflow of the ion exchange resin from water softening chamber 3209 without hindering permeation of water.

Water softening chamber 3209 is a space (first space 3211) having a cylindrical shape, provided on an outer peripheral side of water introduction part 3203 with respect to central axis I of casing 3109 in casing 3109, and containing weakly acidic cation exchange resin 3213. The central axis of water softening chamber 3209 coincides with central axis I of casing 3109. Water softening chamber 3209 is in contact with water introduction part 3203 on an inner surface side of the cylindrical shape, is in contact with inner peripheral diaphragm 3215 which is a cylindrical membrane having water permeability on an outer surface side of the cylindrical shape, and is in contact with lid 3208 at an upper surface. Weakly acidic cation exchange resin 3213 is filled in water softening chamber 3209, and first electrode 3201 is provided in water softening chamber 3209.

Weakly acidic cation exchange resin 3213 is an ion exchange resin having a carboxyl group, and for example, one having a methacrylic-acid-based backbone or one having an acrylic-acid-based backbone can be used as weakly acidic cation exchange resin 3213. In the present exemplary embodiment, a resin having an acrylic-acid-based backbone is used as weakly acidic cation exchange resin 3213.

First electrode 3201 is not energized in the water softening process and acts as an anode in the regeneration process for weakly acidic cation exchange resin 3213. First electrode 3201 is surrounded by weakly acidic cation exchange resin 3213 in water softening chamber 3209. Here, the expression "being surrounded" indicates a state in which a surface of first electrode 3201 is in contact with a surface of weakly acidic cation exchange resin 3213 from an upper end to a lower end over an entire circumference. However, weakly acidic cation exchange resin 3213 usually has a spherical shape, and it is necessary to secure a water flow path for the raw water. Therefore, a state in which weakly acidic cation exchange resin 3213 is not in contact with the surface of first electrode 3201 without any gap, but is disposed over the entire circumference of first electrode 3201 while being partially in contact with the surface of first electrode 3201 also corresponds to a state in which "first electrode 3201 is surrounded by weakly acidic cation exchange resin 3213".

The upper end of first electrode 3201 is positioned below a water surface in water softening chamber 3209 at the start of the regeneration process. A plurality of first electrodes 3201 (for example, first electrode 3201a and first electrode 3201b) are provided in water softening chamber 3209 with equal distances between adjacent first electrodes 3201.

As a material of first electrode 3201, a noble metal or a noble metal alloy can be used. The reason is that first electrode 3201 containing a noble metal acts as a catalyst for water electrolysis and remains non-dissolving even under an acidic condition. Examples of the noble metal material include platinum, iridium, and ruthenium.

Examples of a form of the electrode include a noble-metal wire electrode, an electrode in which a noble-metal wire is wound around an outer periphery of a support, and a mesh-type noble-metal electrode. Examples of a form of the electrode further include a form in which a noble metal is applied to a surface of a rod that is made of a metal other than a noble metal, such as titanium (Ti), the rod being used as the support. However, in a case where a dissimilar metal interface exists, deterioration derived from the interface is likely to occur, and thus it is preferable to use a noble metal or a noble metal alloy alone.

Inner peripheral diaphragm 3215 is a membrane having water permeability, and is a diaphragm that serves as a partition between water softening chamber 3209 and neutralization chamber 3210 while allowing the soft water to flow through the diaphragm. In inner peripheral diaphragm 3215, an inner surface of inner peripheral diaphragm 3215 covers an outer surface of water softening chamber 3209 and is in contact with the outer surface of water softening chamber 3209. The outer surface of inner peripheral diaphragm 3215 covers an inner surface of neutralization chamber 3210 and is in contact with the inner surface of neutralization chamber 3210.

Therefore, inner peripheral diaphragm 3215 serves as a partition between water softening chamber 3209 and neutralization chamber 3210 while allowing the acidic soft water generated in water softening chamber 3209 to flow through inner peripheral diaphragm 3215. The expression "covering" only refers to being positioned around a target and does not require complete enclosure of the target.

Neutralization chamber 3210 is a space (second space 3212) having a cylindrical shape, provided on an outer peripheral side of water softening chamber 3209 with respect to central axis I of casing 3109 in casing 3109, and containing weakly basic anion exchange resin 3214. The central axis of neutralization chamber 3210 coincides with central axis I of casing 3109. Neutralization chamber 3210 is in contact with an outer surface of inner peripheral diaphragm 3215 on an inner surface side of the cylindrical shape, is in contact with an inner surface of outer peripheral diaphragm 3216 which is a cylindrical membrane having water permeability on an outer surface side of the cylindrical shape, and is in contact with lid 3208 at an upper surface. Weakly basic anion exchange resin 3214 is filled in neutralization chamber 3210, and a plurality of second electrodes 3202 (for example, second electrode 3202a and second electrode 3202b) are provided in neutralization chamber 3210.

Weakly basic anion exchange resin 3214 is an ion exchange resin having tertiary amines and quaternary amines as functional groups, and in the present exemplary embodiment, a resin having a higher proportion of tertiary amines than quaternary amines is used.

Second electrode 3202 is not energized in the water softening process and acts as a cathode in the regeneration process for weakly basic anion exchange resin 3214. Second electrode 3202 is surrounded by weakly basic anion exchange resin 3214 in neutralization chamber 3210.

Here, the expression "being surrounded" indicates a state in which a surface of second electrode 3202 is in contact with a surface of weakly basic anion exchange resin 3214 from an upper end to a lower end over an entire circumference. However, similarly to weakly acidic cation exchange resin 3213, weakly basic anion exchange resin 3214 usually has a spherical shape, and it is necessary to secure a water flow path for the raw water (strictly, acidic soft water). Therefore, a state in which weakly basic anion exchange resin 3214 is not in contact with the surface of second electrode 3202 without any gap, but is disposed over the entire circumference while being partially in contact with the surface of second electrode 3202 also corresponds to a state in which "second electrode 3202 is surrounded by weakly basic anion exchange resin 3214".

The upper end of second electrode 3202 is positioned below a water surface in neutralization chamber 3210 at the start of the regeneration process. A plurality of second electrodes 3202 are provided and are provided in neutralization chamber 3210 with equal distances between adjacent second electrodes 3202.

As a material of second electrode 3202, a noble metal or a noble metal alloy can be used. The reason is that second electrode 3202 containing a noble metal acts as a catalyst for water electrolysis and remains non-dissolving even under an acidic condition. Examples of the noble metal material include platinum, iridium, and ruthenium.

Examples of a form of the electrode include a noble-metal wire electrode, an electrode in which a noble-metal wire is wound around an outer periphery of a support, and a mesh-type noble-metal electrode. Further, examples of a form of the electrode further include a form in which a noble metal is applied to a surface of a rod that is made of a metal other than a noble metal, such as titanium (Ti), the rod being used as the support. However, in a case where a dissimilar metal interface exists, deterioration derived from the interface is likely to occur, and thus it is preferable to use a noble metal or a noble metal alloy alone.

An arrangement of first electrode 3201 and second electrode 3202 will be described below in detail.

Water softening device 3100 includes an electrode cleaning circuit (a circuit including a power supply) that connects first electrode 3201 to the negative electrode and connects second electrode 3202 to the positive electrode.

Outer peripheral diaphragm 3216 is a membrane having water permeability, and is a diaphragm that serves as a partition between neutralization chamber 3210 and water supply part 3204 while allowing the soft water to flow through the diaphragm. In outer peripheral diaphragm 3216, an inner surface of outer peripheral diaphragm 3216 covers an outer surface of neutralization chamber 3210 and is in contact with the outer surface of neutralization chamber 3210. An outer surface of outer peripheral diaphragm 3216 covers an inner surface of water supply part 3204 and is in contact with the inner surface of water supply part 3204.

Therefore, outer peripheral diaphragm 3216 serves as a partition between neutralization chamber 3210 and water supply part 3204 while allowing the soft water generated in neutralization chamber 3210 to flow through outer peripheral diaphragm 3216. The expression "covering" only refers to being positioned around a target and does not require complete enclosure of the target.

The upper surfaces of water introduction part 3203, water softening chamber 3209, inner peripheral diaphragm 3215, neutralization chamber 3210, and outer peripheral diaphragm 3216 are covered by lid 3208.

Lid 3208 has a water-impermeable structure, and for example, a plate-like resin can be used. Lid 3208 is in contact with each of the upper surfaces of water introduction part 3203, water softening chamber 3209, inner peripheral diaphragm 3215, neutralization chamber 3210, and outer peripheral diaphragm 3216, and covers each of the upper surfaces to serve as a partition between each of the upper surfaces and water supply part 3204 described below.

As a result, it is possible to suppress outflow of the water from each of the upper surfaces to water supply part 3204. That is, with lid 3208, it is possible to form a water flow in which the raw water flowing in from water introduction part inlet 3207 flows through water introduction part 3203, water softening chamber 3209, inner peripheral diaphragm 3215, and neutralization chamber 3210, and is delivered from a side surface of outer peripheral diaphragm 3216 to side space 3204a of water supply part 3204.

Water supply part 3204 supplies the soft water delivered from neutralization chamber 3210 to water supply part outlet 3206 provided above the upper portion of neutralization chamber 3210. The central axis of water supply part 3204 coincides with central axis I of casing 3109.

Air bleed valve 3205 for releasing air in casing 3109 is provided on water supply part 3204. Water supply part 3204 includes side space 3204a and upper space 3204b.

Side space 3204a is a space having a cylindrical shape, provided on an outer peripheral side of neutralization chamber 3210 with respect to central axis I of casing 3109, and surrounding neutralization chamber 3210. Side space 3204a is in contact with the outer surface of outer peripheral diaphragm 3216 on an inner surface side of the cylindrical shape, and is in contact with an inner surface of casing 3109 on an outer surface side of the cylindrical shape. In other words, side space 3204a is a space provided between the inner surface of casing 3109 and the outer surface of outer peripheral diaphragm 3216.

In a direction parallel to central axis I, an entire length of side space 3204a is longer than an entire length of neutralization chamber 3210, and when the bottom surfaces of side space 3204a and neutralization chamber 3210 are arranged on the same plane, a top surface of side space 3204a protrudes upward from a top surface of neutralization chamber 3210.

Upper space 3204b is a space having a columnar shape and provided above the top surfaces of water introduction part 3203, water softening chamber 3209, inner peripheral diaphragm 3215, neutralization chamber 3210, and outer peripheral diaphragm 3216. Upper space 3204b is in contact with an inner wall of a top surface of casing 3109 at a top surface of the columnar shape, and is in contact with an outer wall of a top surface of lid 3208 at a bottom surface of the columnar shape. In upper space 3204b, an outer surface of the columnar shape is in contact with an inner surface of side space 3204a.

Water supply part outlet 3206 is provided on the top surface of casing 3109, and discharges the water of water supply part 3204 to the outside of water softening device 3100. A central axis of water supply part outlet 3206 coincides with central axis I of casing 3109. Water supply part outlet 3206 is communicably connected to soft water supply tube 3105.

Returning to Fig. 23, soft water supply tube 3105 is a tube connecting water supply part outlet 3206 and a supply destination of the soft water, and includes soft water conductivity measurement unit 3102 and water amount measurement unit 3103 on a flow path thereof. In addition, drain pipe 3107 branches from soft water supply tube 3105 in the middle of the flow path. Soft water supply tube opening and closing valve 3106 is provided at a portion of soft water supply tube 3105, the portion being positioned downstream of a branch point for drain pipe 3107.

Soft water conductivity measurement unit 3102 calculates a total ion concentration of the soft water delivered through water supply part outlet 3206. Information regarding the calculated total ion concentration of the soft water is transmitted to controller 3110 described below.

As raw water conductivity measurement unit 3101 and soft water conductivity measurement unit 3102, any equipment capable of measuring a resistance of water can be used without any problem.

Drain pipe 3107 is a pipe branching from soft water supply tube 3105 at a position upstream of soft water supply tube opening and closing valve 3106, and is a pipe for drainage during the regeneration process. Drain pipe 3107 includes drain tube opening and closing valve 3108 on a flow path.

Water amount measurement unit 3103 is a member that measures an amount of water flowing through water softening device 3100, and can use equipment such as a water meter capable of measuring an integrated amount of water. Information regarding the measured amount of water is transmitted to controller 3110 described below.

Controller 3110 controls execution of each of the water softening process, the regeneration process, a drainage process, a cleaning process, and an electrode cleaning process described below.

Controller 3110 can be implemented by elements including a central processing unit (CPU) of a computer and a mechanical device in terms of hardware, and is implemented by a computer program or the like in terms of software. Accordingly, the functional blocks can be implemented in various forms by a combination of hardware and software.

Controller 3110 includes adsorption amount estimation unit 3111, storage 3112, and timer 3113.

Adsorption amount estimation unit 3111 calculates a total amount of ions adsorbed to water softening device 3100 by using the total ion concentration of the raw water calculated by raw water conductivity measurement unit 3101, the total ion concentration of the soft water calculated by soft water conductivity measurement unit 3102, and a total amount of flowing water measured by water amount measurement unit 3103.

Storage 3112 stores each piece of information transmitted to controller 3110 and each piece of information calculated by controller 3110.

Timer 3113 measures an elapsed time from the start of the regeneration process, more specifically, an elapsed time from the start of energization of first electrode 3201 and second electrode 3202.

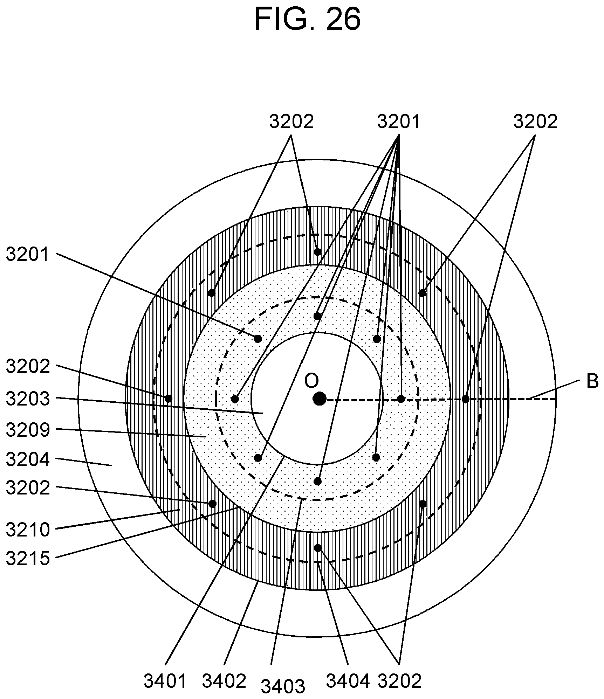

Positions of first electrode 3201 and second electrode 3202 will be described in more detail with reference to Fig. 26.

Fig. 26 is a cross-sectional view illustrating the positions of first electrode 3201 and second electrode 3202 of water softening device 3100, and is a cross-sectional view taken along a plane A-A' illustrated in Fig. 25. The plane A-A' is a plane parallel to the bottom surface of water softening chamber 3209. That is, the plane illustrated in Fig. 26 is a cross section parallel to the bottom surface of water softening chamber 3209.

In plan view, all of water introduction part 3203, water softening chamber 3209, neutralization chamber 3210, and water supply part 3204 have a substantially circular shape. Therefore, in the cross-sectional view illustrated in Fig. 26, cross sections are circles, and the centers of the circles are substantially the same (point O) as each other. Water softening chamber 3209, inner peripheral diaphragm 3215, neutralization chamber 3210, and water supply part 3204 are radially disposed toward an outer peripheral direction of virtual circle X centered on point O. In the present exemplary embodiment, virtual circle X coincides with an outer periphery of water supply part 3204.

A plurality of first electrodes 3201 and a plurality of second electrodes 3202 are provided. First electrode 3201 and second electrode 3202 forming a pair are provided on the same radius of virtual circle X. The expression "being on the same radius" means being on the radius in the same direction, and refers to, for example, being on line B in Fig. 26. In the present exemplary embodiment, each of eight pairs of electrodes is provided on the same radius (the same diameter) in a cylindrical shape of casing 3109.

In the water softening process, as described above, the raw water sequentially flows from water introduction part 3203 to water softening chamber 3209, neutralization chamber 3210, and water supply part 3204 in water softening device 3100. That is, the raw water flows from the center (point O) of virtual circle X toward the outer peripheral direction of virtual circle X.

Therefore, in water softening chamber 3209, the hardness ions are adsorbed in order from weakly acidic cation exchange resin 3213 close to water introduction part 3203, and in neutralization chamber 3210, hydrogen ions are adsorbed in order from weakly basic anion exchange resin 3214 close to inner peripheral diaphragm 3215.

That is, weakly acidic cation exchange resin 3213 and weakly basic anion exchange resin 3214 are consumed from center sides of the cross sections in Fig. 26.

On the other hand, in the regeneration process, the hydrogen ions necessary for the regeneration of weakly acidic cation exchange resin 3213 are produced from first electrode 3201, and hydroxide ions necessary for the regeneration of weakly basic anion exchange resin 3214 are produced from second electrode 3202.

Therefore, by providing first electrode 3201 and second electrode 3202 at the positions where the respective ion exchange resins are consumed, regeneration efficiency for the ion exchange resins by the regeneration process can be improved.

Here, first boundary portion 3401, second boundary portion 3402, intermediate portion 3403, and intermediate portion 3404 are defined.

First boundary portion 3401 is a boundary between water introduction part 3203 and water softening chamber 3209.

Second boundary portion 3402 is a boundary between neutralization chamber 3210 and water supply part 3204. That is, second boundary portion 3402 is outer peripheral diaphragm 3216.

Intermediate portion 3403 is a virtual line having a substantially circular shape centered on point O, is provided at an equal distance from first boundary portion 3401 and inner peripheral diaphragm 3215, and has the same distance from first boundary portion 3401 and inner peripheral diaphragm 3215 on the same radius.

Intermediate portion 3404 is a virtual line having a substantially circular shape centered on point O, is provided at an equal distance from inner peripheral diaphragm 3215 and second boundary portion 3402, and has the same distance from inner peripheral diaphragm 3215 and second boundary portion 3402 on the same radius.

First electrode 3201 is provided at a position biased toward water introduction part 3203 with respect to a midpoint between inner peripheral diaphragm 3215 and first boundary portion 3401, which is the boundary between water introduction part 3203 and water softening chamber 3209, on the same radius in the cross section of water softening device 3100. In other words, a distance between first electrode 3201 and first boundary portion 3401 is shorter than a distance between first electrode 3201 and inner peripheral diaphragm 3215 on the same radius.

In addition, second electrode 3202 is provided at a position deviated toward inner peripheral diaphragm 3215 with respect to a midpoint between inner peripheral diaphragm 3215 and second boundary portion 3402, which is the boundary between neutralization chamber 3210 and water supply part 3204, on the same radius in the cross section of water softening device 3100. In other words, a distance between second electrode 3202 and inner peripheral diaphragm 3215 is shorter than a distance between second electrode 3202 and second boundary portion 3402 on the same radius.

With such an arrangement, it is possible to directly supply the hydrogen ions or the hydroxide ions necessary for regeneration in the vicinity of a region where each ion exchange resin is largely consumed, so that the regeneration efficiency in the regeneration process is improved.

First electrode 3201 can be disposed without particular limitation as long as first electrode 3201 is closer to the center side than intermediate portion 3403 between first boundary portion 3401 and inner peripheral diaphragm 3215. Similarly, second electrode 3202 can be disposed without particular limitation as long as second electrode 3202 is closer to the center side than intermediate portion 3404 between inner peripheral diaphragm 3215 and second boundary portion 3402. However, as the distance between the pair of first electrode 3201 and second electrode 3202 decreases, a voltage applied between first electrode 3201 and second electrode 3202 decreases, and power consumption decreases. Therefore, it is preferable from the viewpoint of reducing power consumption to bring first electrode 3201 and second electrode 3202 close to each other. First electrode 3201 and second electrode 3202 may be disposed such that a ratio of a distance from water introduction part 3203 to first electrode 3201 to a first distance from first boundary portion 3401 to inner peripheral diaphragm 3215 is equal to a ratio of a distance from inner peripheral diaphragm 3215 to second electrode 3202 to a second distance from inner peripheral diaphragm 3215 to second boundary portion 3402.

The above is the configuration of water softening device 3100.

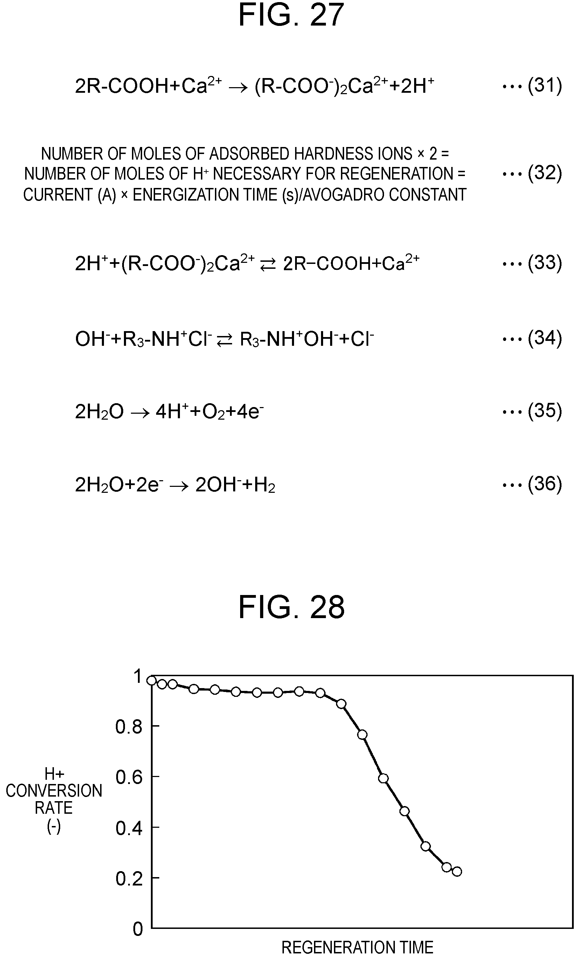

Next, the processes (the water softening process, the regeneration process, the cleaning process, and the electrode cleaning process) performed by water softening device 3100 will be described with reference to Figs. 27 and 28.

Fig. 27 is a diagram including equations representing a principle of the water softening device 3100 in the ninth exemplary embodiment. Fig. 28 is a diagram illustrating a temporal change in hydrogen ion consumption ratio of the weakly acidic cation exchange resin during the regeneration process.

First, an operation of water softening device 3100 in the water softening process and a principle of the water softening process will be described.

As illustrated in Figs. 24 and 25, in water softening device 3100, the raw water flows from the outside into a lower portion of water introduction part 3203 through water introduction part inlet 3207. The raw water that has flowed in is supplied from the lower portion to the upper portion of water introduction part 3203, and flows out in a radial direction of casing 3109 from the holes provided in the side wall of water introduction part 3203. That is, the raw water is delivered from the holes of water introduction part 3203 to water softening chamber 3209.

The raw water delivered to water softening chamber 3209 is softened by weakly acidic cation exchange resin 3213 filled in water softening chamber 3209. Specifically, the hardness components (calcium or magnesium ions) in the raw water are exchanged for hydrogen ions adsorbed to weakly acidic cation exchange resin 3213 to form the acidic soft water containing the hydrogen ions.

The acidic soft water generated in water softening chamber 3209 passes through inner peripheral diaphragm 3215, which is a water-permeable membrane, flows into neutralization chamber 3210, and is neutralized. Specifically, the hydrogen ions in the soft water are adsorbed to weakly basic anion exchange resin 3214 to be removed from the soft water, as a result of which the neutral soft water (neutralized soft water) is generated. In such a neutralization reaction, anions such as sulfate ions contained in the soft water are also adsorbed to weakly basic anion exchange resin 3214.

The neutralized soft water generated in neutralization chamber 3210 passes through outer peripheral diaphragm 3216, which is a water-permeable membrane, and flows into water supply part 3204.

The soft water flowing into water supply part 3204 becomes an upward flow, rises in side space 3204a of water supply part 3204, and flows into upper space 3204b of water supply part 3204. The soft water flowing into upper space 3204b flows in upper space 3204b toward a central portion of upper space 3204b, and is taken out through water supply part outlet 3206 provided at a central portion of an upper surface of water softening device 3100.

In the water softening process, the raw water is softened in this manner.

In the water softening process, when an adsorption amount of the cations (more specifically, the hardness ions that are calcium or magnesium ions) to weakly acidic cation exchange resin 3213 or an adsorption amount of the anions to weakly basic anion exchange resin 3214 increases, resin performance for water softening decreases. Therefore, the regeneration process needs to be performed.

In the regeneration process, first, the raw water flows into water introduction part 3203 from the supply source of the raw water via water introduction part inlet 3207, and the raw water that has flowed in is supplied to water softening chamber 3209 and neutralization chamber 3210. Next, each electrode is energized such that first electrode 3201 surrounded by weakly acidic cation exchange resin 3213 has a higher potential than second electrode 3202 surrounded by weakly basic anion exchange resin 3214.

As a result, a reaction for producing the hydrogen ions (see Equation (35) in Fig. 27) occurs at first electrode 3201 as the anode, and a reaction for producing the hydroxide ions (see Equation (36) in Fig. 27) occurs at second electrode 3202 as the cathode. In other words, the hydrogen ions are produced in water softening chamber 3209, and the hydroxide ions are produced in neutralization chamber 3210.

Weakly acidic cation exchange resin 3213 to which the hardness components have been adsorbed by the water softening process is exposed to the hydrogen ions to cause an exchange reaction between the hardness components and the hydrogen ions. As a result, weakly acidic cation exchange resin 3213 is regenerated.

Weakly basic anion exchange resin 3214 to which the anions have been adsorbed by the water softening process is exposed to the hydroxide ions to cause an exchange reaction between the adsorbed anions and the hydroxide ions. As a result, weakly basic anion exchange resin 3214 is regenerated.

In the regeneration process, weakly acidic cation exchange resin 3213 and weakly basic anion exchange resin 3214 are regenerated in this manner.

In the regeneration process, water softening device 3100 sets a regeneration time based on a conductivity of the raw water or the soft water before and after the water flows through casing 3109 or the amount of water flowing through casing 3109.

Specifically, at the start of the water softening process, raw water conductivity measurement unit 3101 is activated to measure the conductivity of the raw water flowing through raw water supply tube 3104. In addition, soft water conductivity measurement unit 3102 is activated to measure the conductivity of the soft water flowing through soft water supply tube 3105. Furthermore, water amount measurement unit 3103 measures the amount of water flowing through casing 3109. The measured conductivity of the raw water, the measured conductivity of the soft water, and the measured amount of water are transmitted to controller 3110 and stored in storage 3112.

Ions to be removed in water softening chamber 3209 are mainly hardness ions of Mg²⁺ and Ca²⁺, and ions to be removed in neutralization chamber 3210 are mainly anions of HCO₃⁻, Cl⁻, and SO₄²⁻. From a principle of electrical neutrality, the number of moles of cations adsorbed in water softening chamber 3209 is equal to the number of moles of anions adsorbed in neutralization chamber 3210. Therefore, a difference between the conductivity measured by raw water conductivity measurement unit 3101 and the conductivity measured by soft water conductivity measurement unit 3102 is derived from a total amount of Mg salts and Ca salts removed by water softening device 3100. As described above, since the conductivity difference is a value of the removed ion concentration, it is possible to cope with water quality variations of the raw water and the soft water and to accurately calculate the adsorption amount.

Adsorption amount estimation unit 3111 estimates an amount of ions adsorbed in water softening device 3100. Specifically, the difference between the conductivity of the raw water and the conductivity of the soft water is calculated, the conductivities being stored in storage 3112. The difference is a concentration of ions adsorbed in water softening device 3100. Adsorption amount estimation unit 3111 multiplies the ion concentration obtained as the difference by the total amount of flowing water measured by water amount measurement unit 3103. By doing so, the amount of ions adsorbed in water softening device 3100 during the regeneration process is estimated.

Here, a current value and an energization time necessary for removing the estimated adsorbed ions from water softening device 3100 and regenerating water softening device 3100 will be described with reference to Figs. 27 and 28.

In the regeneration process, one mole of H⁺ is produced from one mole of electrons, and one mole of OH⁻ is produced from one mole of electrons. In order to release one mole of hardness ions from the resin, two moles of H⁺ are required. Therefore, a relationship among the number of moles of ions adsorbed in water softening chamber 3209, and H⁺, the current value, and the time necessary for resin regeneration is expressed by Equation (32) in Fig. 27.

Controller 3110 determines the current value and the energization time necessary for regeneration of weakly acidic cation exchange resin 3213 and weakly basic anion exchange resin 3214 based on the number of moles of adsorbed ions estimated by adsorption amount estimation unit 3111 and Equation (32) in Fig. 27.

In water softening device 3100, it is preferable to change the current value to be applied as the regeneration process proceeds. The reason of the above is described.

As the regeneration process proceeds, the ions adsorbed in the water softening process are released into the water from weakly acidic cation exchange resin 3213 and weakly basic anion exchange resin 3214, as a result of which the ion concentration in the water increases. That is, when the elapsed time from the start of the regeneration process becomes longer, the conductivity of the water in water softening device 3100 becomes higher than that at the start of energization, and a voltage decreases. On the other hand, since the ion concentration of the water in water softening device 3100 is low at the start of the energization, the voltage is high. Therefore, in a case where the current value is made constant from the start of the energization, the voltage at the start of the energization is high, and the voltage gradually decreases with the lapse of the energization time.

At the end of the regeneration process, as concentrations of (R-COO⁻)₂Ca²⁺ and R₃-NH⁺Cl⁻ in Equations (33) and (34) in Fig. 27 decrease, a regeneration rate decreases. As a result, a consumption ratio of the fed hydrogen ions decreases, and a conversion rate decreases as illustrated in Fig. 28. In a case where the hydrogen ions or hydroxide ions having a concentration higher than or equal to a concentration that can be consumed by the resin are fed to weakly acidic cation exchange resin 3213 or weakly basic anion exchange resin 3214 when the consumption ratio is low, the fed hydrogen ions and the fed hydroxide ions react with each other without reacting with the ions in the resin, resulting in loss.

That is, in consideration of voltage characteristics at an initial stage of the regeneration process described above, it is preferable to gradually increase the current instead of immediately increasing the current value to the current value determined by adsorption amount estimation unit 3111 at the time of current application. As a result, the voltage can be suppressed to be low, and thus, the power consumption is reduced.

In addition, at the end of the regeneration process, it is preferable to gradually decrease the current in consideration of reaction characteristics of the resin. As a result, excessive ions can be suppressed from reacting with each other, waste of the current is reduced, and the power consumption can be reduced.

Timer 3113 is used to achieve such a temporal change in applied current.

Storage 3112 stores, as reference times indicating timings for changing the current, a first reference value at which the current is to be maximized, and a second reference value at which a decrease from the maximum value is to be started. The first reference value is set to about 30 minutes to 1 hour from the start of the energization. The second reference value is set to a time later than the first reference value and 30 minutes to 1 hour before the end of the energization.

Since the current and the time necessary for the regeneration process are determined based on the adsorbed hardness as indicated in Equation (32) in Fig. 27, when a time from the start of the energization to the first reference value and a time from the end of the energization to the second reference value are lengthened, it is necessary to increase a maximum current value or the regeneration time.

Timer 3113 measures the elapsed time from the start of the current application to first electrode 3201 and second electrode 3202. When the elapsed time measured by timer 3113 reaches the first reference value, controller 3110 stops increasing the applied current value and maintains the present current value. Thereafter, when the elapsed time measured by timer 3113 reaches the second reference value, controller 3110 decreases the applied current value. The increase in current value from the start of the energization to the first reference value or the decrease in current value from the second reference value to the end of the energization may be changed linearly or stepwise.

In the regeneration process, the determined current value is applied to first electrode 3201 and second electrode 3202 for the determined energization time, and the regeneration of weakly acidic cation exchange resin 3213 and weakly basic anion exchange resin 3214 is performed.

After the end of the regeneration process, the ions released from weakly acidic cation exchange resin 3213 and weakly basic anion exchange resin 3214 are present at a high concentration in water softening chamber 3209 and neutralization chamber 3210. Therefore, it is necessary to perform a cleaning operation in water softening device 3100. In a case where cleaning is insufficient, the remaining ions are mixed in the water during the water softening process, and thus, there is a possibility that water softening becomes insufficient. Therefore, the cleaning process is performed after the end of the regeneration process.

In the cleaning process, in water softening device 3100, soft water supply tube opening and closing valve 3106 is closed and drain tube opening and closing valve 3108 is opened, whereby the water in water softening chamber 3209 and neutralization chamber 3210 is drained to the outside of water softening device 3100 through drain pipe 3107. When the raw water flows in through raw water supply tube 3104, the regeneration process can be resumed.

When the end of the cleaning process is determined by time, a cleaning time, which is a time from the start to the end of the cleaning process, is set to be longer than a residence time, which is a time from inflow of the raw water into water softening chamber 3209 to outflow of the raw water from neutralization chamber 3210. As a result, the water containing a large amount of desorbed hardness ions existing in water softening chamber 3209 can be discharged, and the water in water softening chamber 3209 can be replaced with the raw water.

In the regeneration process, solid calcium carbonate or the like adheres to an electrode surface of second electrode 3202. When a precipitation amount of calcium carbonate on the electrode surface increases, problems such as a problem that the voltage increases at the time of the energization and a problem that calcium carbonate is hardly peeled off from the electrode surface occur. Therefore, it is necessary to periodically perform the electrode cleaning process of removing calcium carbonate on a surface of the cathode.

In the electrode cleaning process, first electrode 3201 is connected to the negative electrode, and second electrode 3202 is connected to the positive electrode, that is, electrode cleaning is performed by operating with a polarity of the electrode reversed from that in the regeneration process. By the operation, H⁺ is produced from second electrode 3202, and calcium carbonate on the surface of second electrode 3202 reacts with H⁺ to be dissolved. The electrode cleaning process is performed during the regeneration process or after the end of the regeneration process.

As described above, in water softening device 3100, the softening of the raw water by the water softening process and the maintenance of water softening device 3100 by the regeneration process, the cleaning process, and the electrode cleaning process are repeatedly performed.

### (Advantageous effect and the like)

As described above, according to water softening device 3100 of the present exemplary embodiment, the following effects can be obtained.
(1) Water softening device 3100 includes: water softening chamber 3209 that contains weakly acidic cation exchange resin 3213 and generates the soft water from the raw water containing the hardness components; neutralization chamber 3210 that contains weakly basic anion exchange resin 3214 and neutralizes the soft water; inner peripheral diaphragm 3215 that serves as a partition between water softening chamber 3209 and neutralization chamber 3210 while allowing the soft water to flow through the inner peripheral diaphragm 3215; water introduction part 3203 that introduces the raw water into water softening chamber 3209 from the outside; water supply part 3204 that supplies the neutralized soft water generated in neutralization chamber 3210 to the outside; first electrode 3201 that is surrounded by weakly acidic cation exchange resin 3213 in water softening chamber 3209 and acts as the anode during the regeneration of weakly acidic cation exchange resin 3213; and second electrode 3202 that is surrounded by weakly basic anion exchange resin 3214 in neutralization chamber 3210 and acts as the cathode during the regeneration of weakly basic anion exchange resin 3214. Water softening chamber 3209, inner peripheral diaphragm 3215, neutralization chamber 3210, and water supply part 3204 are radially disposed from water introduction part 3203 having central axis I perpendicular to the bottom surface of water softening chamber 3209 toward the outer peripheral direction of the circle centered on central axis I. First electrode 3201 is disposed at a position biased toward water introduction part 3203 in water softening chamber 3209.

More specifically, first electrode 3201 is disposed closer to water introduction part 3203 than the midpoint between inner peripheral diaphragm 3215 and first boundary portion 3401, which is the boundary between water introduction part 3203 and water softening chamber 3209, on the same radius of the circle in the cross section parallel to the bottom surface of water softening chamber 3209.

With such a configuration, it is possible to produce the hydrogen ions in the vicinity of weakly acidic cation exchange resin 3213 whose adsorption amount of the hardness ions is large in water softening chamber 3209 during the regeneration process. Therefore, it is possible to prevent the produced hydrogen ions from being lost by reacting with other ions before being used for the regeneration of weakly acidic cation exchange resin 3213, as a result of which it is possible to improve the regeneration efficiency.

(2) In water softening device 3100, second electrode 3202 is disposed at a position biased toward inner peripheral diaphragm 3215 in neutralization chamber 3210.

More specifically, second electrode 3202 is disposed closer to inner peripheral diaphragm 3215 than the midpoint between inner peripheral diaphragm 3215 and second boundary portion 3402, which is the boundary between neutralization chamber 3210 and water supply part 3204, on the same radius.

With such a configuration, it is possible to produce the hydroxide ions in the vicinity of weakly basic anion exchange resin 3214 whose ion adsorption amount is large in neutralization chamber 3210 during the regeneration process. Therefore, it is possible to prevent the produced hydroxide ions from being lost by reacting with other ions before being used for the regeneration of weakly basic anion exchange resin 3214, as a result of which it is possible to improve the regeneration efficiency.

(3) In water softening device 3100, the pair of first electrode 3201 and second electrode 3202 is provided on the same radius in the cross section parallel to the bottom surface of water softening chamber 3209, and is provided at positions where the ratio of the distance from water introduction part 3203 to first electrode 3201 to the first distance from first boundary portion 3401 to inner peripheral diaphragm 3215 is equal to the ratio of the distance from inner peripheral diaphragm 3215 to second electrode 3202 to the second distance from inner peripheral diaphragm 3215 to second boundary portion 3402.

With such a configuration, first electrode 3201 and second electrode 3202 are disposed at similar positions from the center side in the respective chambers.

From above, the present disclosure has been described based on the exemplary embodiments. It is understood by those skilled in the art that these exemplary embodiments are merely illustrative, and that various modifications can be made to combinations of the components or the processes, and that such modifications are also within the scope of the present disclosure.

### (Modification)

In the ninth exemplary embodiment, a case where first electrode 3201 is biased toward the center side of the circle with respect to the midpoint between first boundary portion 3401 and inner peripheral diaphragm 3215, and second electrode 3202 is biased toward the center side of the circle with respect to the midpoint between inner peripheral diaphragm 3215 and second boundary portion 3402 has been described, but the positions of first electrode 3201 and second electrode 3202 are not limited thereto. For example, only first electrode 3201 may be biased toward the center side with respect to the midpoint between first boundary portion 3401 and inner peripheral diaphragm 3215. The water softening device according to the present disclosure is useful as a water softening device or the like because the drainage amount can be reduced by decreasing the frequency of the drainage or making the drainage itself unnecessary, and shortening of a regeneration time and an increase of an electrode life can be achieved as secondary effects.

### INDUSTRIAL APPLICABILITY

The water softening device according to the present disclosure is useful as a water softening device or the like because the drainage amount can be reduced by decreasing the frequency of the drainage or making the drainage itself unnecessary, and shortening of a regeneration time and an increase of an electrode life can be achieved as secondary effects.

### REFERENCE MARKS IN THE DRAWINGS

100: water softening device
101: weakly acidic cation exchange resin
102: weakly basic anion exchange resin
103, 103a, 103b: first electrode
104, 104a, 104b: second electrode
105: inner peripheral diaphragm
106: outer peripheral diaphragm
107: water introduction part
108: water supply part
108a: side space
108b: upper space
109: air bleed valve
110: water supply part outlet
111: water introduction part inlet
112: lid
113: boundary line
201: water softening chamber
202: neutralization chamber
203: casing
204: first space
205: second space
I: central axis
S, T, V, W: distance
1100, 1100b, 1100c, 1100d, 1100e, 1100f: water softening device
1101: raw water conductivity measurement unit
1102: soft water conductivity measurement unit
1103: water amount measurement unit
1104, 1104a, 1104b: raw water supply tube
1105, 1105a: soft water supply tube
1106: soft water supply tube opening and closing valve
1107, 1107a: drain pipe
1108: drain tube opening and closing valve
1109: casing
1110: controller
1111: adsorption amount estimation unit
1112: storage
1113: timer
1201, 1201a, 1201b: first electrode
1202, 1202a, 1202b: second electrode
1203: water introduction part
1204: water supply part
1204a: side space
1204b: upper space
1205: air bleed valve
1206: water supply part outlet
1207: water introduction part inlet
1208: lid
1209: water softening chamber
1210: neutralization chamber
1211: first space
1212: second space
1213: weakly acidic cation exchange resin
1214: weakly basic anion exchange resin
1215: inner peripheral diaphragm
1216: outer peripheral diaphragm
1301: chemical addition pipe
1302: chemical slow-release part
1303: chemical addition pipe opening and closing valve
1304: raw water supply tube opening and closing valve
1401: storage chamber
1402: inflow port
1403: first water supply port
1404: second water supply port
1405: regenerated water return pipe
1406: regenerated water return pipe opening and closing valve
1501, 1501a, 1501b: water softening module
1502: connection tube
1503a, 1503b, 1503c: conductivity meter
1601: upstream drain tube
1602: drain valve
1603: drained water amount measurement unit
2100: water softening device
2101: raw water conductivity measurement unit
2102: soft water conductivity measurement unit
2103: water amount measurement unit
2104: raw water supply tube
2105: soft water supply tube
2106: soft water supply tube opening and closing valve
2107: drain pipe
2108: drain tube opening and closing valve
2109: casing
2110: controller
2111: adsorption amount estimation unit
2112: storage
2113: timer
2114: bypass pipe
2115: bypass pipe opening and closing valve
2201, 2201a, 2201b: first electrode
2202, 2202a, 2202b: second electrode
2203: water introduction part
2204: water supply part
2204a: side space
2204b: upper space
2205: air bleed valve
2206: water supply part outlet
2207: water introduction part inlet
2208: lid
2209: water softening chamber
2210: neutralization chamber
2211: first space
2212: second space
2213: weakly acidic cation exchange resin
2214: weakly basic anion exchange resin
2215: inner peripheral diaphragm
2216: outer peripheral diaphragm
3100: water softening device
3101: raw water conductivity measurement unit
3102: soft water conductivity measurement unit
3103: water amount measurement unit
3104: raw water supply tube
3105: soft water supply tube
3106: soft water supply tube opening and closing valve
3107: drain pipe
3108: drain tube opening and closing valve
3109: casing
3110: controller
3111: adsorption amount estimation unit
3112: storage
3113: timer
3201, 3201a, 3201b: first electrode
3202, 3202a, 3202b: second electrode
3203: water introduction part
3204: water supply part
3204a: side space
3204b: upper space
3205: air bleed valve
3206: water supply part outlet
3207: water introduction part inlet
3208: lid
3209: water softening chamber
3210: neutralization chamber
3211: first space
3212: second space
3213: weakly acidic cation exchange resin
3214: weakly basic anion exchange resin
3215: inner peripheral diaphragm
3216: outer peripheral diaphragm
3401: first boundary portion
3402: second boundary portion
3403: intermediate portion
3404: intermediate portion

## Claims

1. A water softening device comprising:
a water softening chamber that contains a weakly acidic cation exchange resin and generates soft water from raw water containing hardness components;
a neutralization chamber that contains a weakly basic anion exchange resin and neutralizes the soft water;
a diaphragm that serves as a partition between the water softening chamber and the neutralization chamber while allowing the soft water to flow through the diaphragm;
a first electrode that acts as an anode during regeneration of the weakly acidic cation exchange resin; and
a second electrode that acts as a cathode during regeneration of the weakly basic anion exchange resin, wherein
the first electrode is surrounded by the weakly acidic cation exchange resin in the water softening chamber, and
the second electrode is surrounded by the weakly basic anion exchange resin in the neutralization chamber.

2. The water softening device according to Claim 1, wherein
the first electrode is in contact with the weakly acidic cation exchange resin, and
the second electrode is in contact with the weakly basic anion exchange resin.

3. The water softening device according to Claim 1, wherein
the first electrode has an upper end positioned below a water surface of the water softening chamber at a start of the regeneration of the weakly acidic cation exchange resin to provide a space above the upper end, a distance from a bottom surface of the water softening chamber to a lower end of the first electrode being shorter than a distance from the water surface to the upper end of the first electrode, and
the weakly acidic cation exchange resin is filled around the first electrode and in the space above the upper end in the water softening chamber.

4. The water softening device according to Claim 1, wherein
the second electrode has an upper end positioned below a water surface of the neutralization chamber at a start of the regeneration of the weakly basic anion exchange resin to provide a space above the upper end, a distance from a bottom surface of the neutralization chamber to a lower end of the second electrode being shorter than a distance from the water surface to the upper end of the second electrode, and
the weakly basic anion exchange resin is filled around the second electrode and the space above the upper end in the neutralization chamber.

5. The water softening device according to Claim 1, further comprising a casing that has a cylindrical shape and has the water softening chamber and the neutralization chamber positioned in the casing,
wherein the neutralization chamber is provided on an outer peripheral side of the water softening chamber with respect to a central axis of the cylindrical shape of the casing, and surrounds the water softening chamber.

6. The water softening device according to Claim 5, further comprising a water introduction part that introduces the raw water into the water softening chamber,
wherein the water introduction part is provided extending from a lower portion to an upper portion of the water softening chamber, and delivers the raw water from a side surface of the water introduction part toward an outer peripheral direction with respect to the central axis of the cylindrical shape.

7. The water softening device according to Claim 5, further comprising a water supply part that is provided on an outer peripheral side of the neutralization chamber with respect to the central axis of the cylindrical shape and surrounds the neutralization chamber,
wherein the water supply part supplies water into the neutralization chamber, the water being delivered from the neutralization chamber toward an outer peripheral direction with respect to the central axis to the outside of the device from above an upper portion of the neutralization chamber.

8. The water softening device according to Claim 5, wherein the first electrode and the second electrode forming a pair are provided on the same radius in plan view of the casing.

9. The water softening device according to Claim 1, wherein the weakly basic anion exchange resin has a filling amount larger than or equal to a filling amount of the weakly acidic cation exchange resin.

10. The water softening device according to Claim 1, wherein the diaphragm is a membrane having water permeability and having a hole size smaller than a particle diameter of the weakly acidic cation exchange resin and a particle diameter of the weakly basic anion exchange resin.

11. The water softening device according to Claim 1, further comprising a controller that controls the regeneration of the weakly acidic cation exchange resin and the weakly basic anion exchange resin,
wherein the controller performs:
a water softening process of allowing water to be treated to flow from a lower portion of the water softening chamber and allowing the water to sequentially flow through the water softening chamber and the neutralization chamber to obtain the soft water;
a regeneration process of energizing the first electrode and the second electrode, producing hydrogen ions from the first electrode by water electrolysis, producing hydroxide ions from the second electrode, regenerating the weakly acidic cation exchange resin by the produced hydrogen ions, and regenerating the weakly basic anion exchange resin by the produced hydroxide ions;
a cleaning process of discharging, from the water softening chamber, cations released from the weakly acidic cation exchange resin by the regeneration process and discharging, from the neutralization chamber, anions released from the weakly basic anion exchange resin; and
an electrode cleaning process of connecting the first electrode to a negative electrode, connecting the second electrode to a positive electrode, and dissolving a solid adhering to a surface of the second electrode in the regeneration process, during the regeneration process or after an end of the regeneration process.

12. The water softening device according to Claim 11, further comprising:
a water amount measurement unit that measures an amount of the raw water flowing through the water softening chamber;
a raw water conductivity measurement unit that measures a conductivity of the raw water before the raw water comes into contact with the cation exchange resin;
a soft water conductivity measurement unit that measures a conductivity of neutralized soft water after the neutralized soft water comes into contact with the anion exchange resin; and
an adsorption amount estimation unit that estimates an ion adsorption amount of specific ions in the water softening chamber,
wherein the adsorption amount estimation unit estimates the ion adsorption amount in the water softening chamber in the water softening process based on the amount of the raw water measured by the water amount measurement unit, the conductivity of the raw water measured by the raw water conductivity measurement unit, and the conductivity of the neutralized soft water measured by the soft water conductivity measurement unit.

13. The water softening device according to Claim 12, wherein the controller sets an execution time of the regeneration process based on the ion adsorption amount estimated by the adsorption amount estimation unit.

14. The water softening device according to Claim 11, further comprising an electrolyte feeder that feeds an electrolyte other than the hydrogen ions and the hydroxide ions to the water softening chamber and the neutralization chamber in the regeneration process.

15. The water softening device according to Claim 14, wherein the electrolyte feeder causes the raw water containing the hardness components to flow into the water softening chamber and the neutralization chamber before the energization in the regeneration process.

16. The water softening device according to Claim 14, wherein the electrolyte feeder adds a chemical containing the electrolyte to the raw water.

17. The water softening device according to Claim 14, wherein the electrolyte feeder feeds wastewater containing at least one of the cations and the anions and drained in the cleaning process performed before the regeneration process to the water softening chamber and the neutralization chamber before the energization in the regeneration process.

18. The water softening device according to Claim 17, further comprising a storage chamber that stores the wastewater, wherein
the storage chamber includes:
a housing;
an inflow port that is provided at an upper portion of the housing and allows the wastewater to flow into the housing;
a first water supply port that is provided at the upper portion of the housing and discharges the wastewater to an outside of the housing; and
a second water supply port that is provided at a lower portion of the housing and supplies the wastewater to the water softening chamber, and
the electrolyte feeder feeds the wastewater supplied from the second water supply port to the water softening chamber.

19. The water softening device according to Claim 11, wherein the controller includes an adsorption amount estimation unit that specifies an ion adsorption amount in the water softening chamber, and controls a current value for energizing the first electrode and the second electrode based on the ion adsorption amount estimated by the adsorption amount estimation unit in the regeneration process.

20. The water softening device according to Claim 19, further comprising a timer that measures an elapsed time from a start of the regeneration process,
wherein the controller changes the current value to be applied to the first electrode and the second electrode based on the elapsed time measured by the timer.

21. The water softening device according to Claim 20, wherein the controller increases the current value to be applied to the first electrode and the second electrode in a case where the elapsed time exceeds a specific first reference value.

22. The water softening device according to Claim 19, further comprising a voltage measurement unit that measures a voltage when a current is applied,
wherein the controller changes the current value to be applied to the first electrode and the second electrode based on a change amount of the voltage measured by the voltage measurement unit.

23. The water softening device according to Claim 11, comprising a plurality of water softening modules each having the water softening chamber, the neutralization chamber, and the diaphragm,
the water softening device further comprising an adsorption amount estimation unit that specifies an ion adsorption amount to the water softening chamber of each of the plurality of water softening modules,
wherein in the regeneration process, the controller changes at least one of a current value for energizing each of the plurality of water softening modules and an energization time based on the ion adsorption amount estimated by the adsorption amount estimation unit.

24. The water softening device according to Claim 11, wherein the controller performs a drainage process of draining acidic electrolytic water in the water softening chamber and alkaline electrolytic water in the neutralization chamber to an outside of the device during the regeneration process.

25. The water softening device according to Claim 24, wherein a drainage time that is a time from a start to an end of the drainage process is longer than a residence time that is a time from when the raw water flows into the water softening chamber to when the raw water flows out of the neutralization chamber.

26. The water softening device according to Claim 24, further comprising a water amount measurement unit that measures an amount of the soft water flowing out of the neutralization chamber, wherein
the controller continues to perform the drainage process in a case where the amount measured by the water amount measurement unit from a start of the drainage process is smaller than volumes of the water softening chamber and the neutralization chamber in the drainage process, and
the controller ends the drainage process in a case where the amount measured by the water amount measurement unit from the start of the drainage process is larger than or equal to the volumes of the water softening chamber and the neutralization chamber.

27. The water softening device according to Claim 11, wherein a cleaning time that is a time from a start to an end of the cleaning process is longer than a residence time that is a time from when the raw water flows into the water softening chamber to when the raw water flows out of the neutralization chamber.

28. The water softening device according to Claim 11, further comprising a water amount measurement unit that measures an amount of the soft water flowing out of the neutralization chamber,
wherein the controller ends the cleaning process in a case where the amount measured by the water amount measurement unit from a start of the cleaning process is larger than volumes of the water softening chamber and the neutralization chamber in the cleaning process.

29. The water softening device according to Claim 11, further comprising:
a raw water conductivity measurement unit that specifies a conductivity of the raw water; and
a wastewater conductivity measurement unit that specifies a conductivity of wastewater flowing out of the neutralization chamber in the cleaning process,
wherein the controller ends the cleaning process when the conductivity of the wastewater specified by the wastewater conductivity measurement unit is equal to the conductivity of the raw water specified by the raw water conductivity measurement unit.

30. The water softening device according to Claim 11, wherein the controller further performs an electrode cleaning process of connecting the first electrode to the negative electrode, connecting the second electrode to the positive electrode, and dissolving the solid adhering to the surface of the second electrode in the regeneration process, during the regeneration process or after the end of the regeneration process.

31. The water softening device according to Claim 1, further comprising:
a water introduction part that is positioned on an inner periphery of the water softening chamber and supplies the raw water to the water softening chamber;
a water supply part that supplies neutralized soft water generated in the neutralization chamber to an outside; and
a controller that controls the regeneration of the weakly acidic cation exchange resin, wherein
the neutralization chamber is positioned on an outer periphery of the water softening chamber,
the controller performs:
a water softening process comprising introducing the raw water to flow in from the water introduction part and sequentially flowing through the water softening chamber and the neutralization chamber to obtain the neutralized soft water;
a regeneration process of performing water electrolysis after the water softening process is performed for a predetermined period of time and regenerating the weakly acidic cation exchange resin by using produced hydrogen ions; and
a drainage process of discharging, from the water softening chamber, cations released from the weakly acidic cation exchange resin by the regeneration process and discharging, from the neutralization chamber, anions released from the weakly basic anion exchange resin, and
in the drainage process, water containing the cations is drained from the water introduction part.

32. The water softening device according to Claim 31, wherein a drainage amount in the drainage process is smaller than a sum of a volume of the water introduction part, a volume of the water softening chamber, and a volume of the neutralization chamber.

33. The water softening device according to Claim 31, wherein
the weakly acidic cation exchange resin is filled in the water softening chamber,
the weakly basic anion exchange resin is filled in the neutralization chamber, and
a drainage amount in the drainage process is smaller than a sum of a volume of a portion other than a portion occupied by the weakly acidic cation exchange resin in the water softening chamber and a volume of a portion other than a portion occupied by the weakly basic anion exchange resin in the neutralization chamber.

34. The water softening device according to Claim 31, wherein
the weakly acidic cation exchange resin is filled in the water softening chamber, and
a drainage amount in the drainage process is larger than a volume of a portion other than a portion occupied by the weakly acidic cation exchange resin in the water softening chamber.

35. The water softening device according to Claim 31, wherein the controller performs the drainage process a plurality of times during the regeneration process.

36. The water softening device according to Claim 35, wherein in the regeneration process, the controller applies a voltage between the first electrode and the second electrode, and determines execution of the drainage process based on the applied voltage.

37. The water softening device according to Claim 31, wherein the raw water supplied during the drainage process flows in from the water supply part.

38. The water softening device according to Claim 1, further comprising:
a water introduction part that introduces the raw water into the water softening chamber from an outside; and
a water supply part that supplies neutralized soft water generated in the neutralization chamber to the outside, wherein
the water softening chamber, the diaphragm, the neutralization chamber, and the water supply part are radially disposed around a central axis at the water introduction part, the axis being perpendicular to a bottom surface of the water softening chamber, toward an outer peripheral direction of a circle centered on the central axis, and
the first electrode is disposed at a position biased toward the water introduction part in the water softening chamber.

39. The water softening device according to Claim 38, wherein the second electrode is disposed at a position biased toward the diaphragm in the neutralization chamber.

40. The water softening device according to Claim 38, wherein the first electrode is disposed closer to the water introduction part than a midpoint between the diaphragm and a first boundary portion that is a boundary between the water introduction part and the water softening chamber on the same radius of the circle in a cross section parallel to the bottom surface of the water softening chamber.

41. The water softening device according to Claim 40, wherein the second electrode is disposed closer to the diaphragm than a midpoint between the diaphragm and a second boundary portion that is a boundary between the neutralization chamber and the water supply part on the same radius.

42. The water softening device according to Claim 41, wherein the first electrode and the second electrode forming a pair are provided on the same radius in the cross section, and are provided at positions where a ratio of a distance from the water introduction part to the first electrode to a first distance from the first boundary portion to the diaphragm is equal to a ratio of a distance from the diaphragm to the second electrode to a second distance from the diaphragm to the second boundary portion.
